# EUROPÄISCHE PATENTSCHRIFT

(11) **EP 3 635 703 B1**
(45) Veröffentlichungstag und Bekanntmachung des Hinweises auf die Patenterteilung: **17.04.2024**
(21) Anmeldenummer: 18731028.9
(22) Anmeldetag: 07.06.2018
(51) Int. Cl.: G08C 17/00

(54) **ELEKTRISCHES GERÄT ZUR ANSTEUERUNG EINES STAUBSAUGERS**
ELECTRICAL DEVICE FOR CONTROLLING A VACUUM CLEANER
DISPOSITIF ÉLECTRIQUE POUR COMMANDER UN ASPIRATEUR

(30) Priorität: 08.06.2017 DE 102017112706; 29.12.2017 DE 102017131457
(43) Veröffentlichungstag der Anmeldung: 15.04.2020
(60) Teilanmeldung: 24156727.0
(73) Patentinhaber: Festool GmbH, 73240 Wendlingen (DE)
(72) Erfinder: CASPAR, Moritz, 70188 Stuttgart (DE)
(74) Vertreter: Patentanwälte Bregenzer und Reule Partnerschaftsgesellschaft mbB
(86) Internationale Anmeldenummer: PCT/EP2018/065099
(87) Internationale Veröffentlichungsnummer: WO 2018/224626

(56) Entgegenhaltungen:
- EP-A2- 2 628 431
- DE-A1-102012 003 073
- US-A1- 2010 199 453

## Beschreibung

Die Erfindung betrifft ein elektrisches Gerät in Gestalt einer Werkzeugmaschine oder eines Energiespeichermoduls zur elektrischen Stromversorgung einer Werkzeugmaschine, wobei das Energiespeichermodul ein Modulgehäuse mit einer Geräteschnittstelle zur lösbaren Verbindung mit der Werkzeugmaschine aufweist, wobei die Werkzeugmaschine einen Antriebsmotor zum Antreiben einer Werkzeugaufnahme aufweist, an der ein zur Bearbeitung eines Werkstücks vorgesehenes Werkzeug angeordnet oder anordenbar ist, wobei der Antriebsmotor anhand eines Schaltelements der Werkzeugmaschine und/oder des Energiespeichermoduls schaltbar ist, wobei das elektrische Gerät eine Drahtlos-Kommunikationsschnittstelle zur drahtlosen Kommunikation mit einer Extern-Kommunikationsvorrichtung aufweist, die einen Bestandteil eines zur Absaugung von durch die Werkzeugmaschine erzeugten Staubs vorgesehenen Staubsaugers bildet, und wobei die Drahtlos-Kommunikationsschnittstelle zum Senden mindestens eines Steuerbefehls zum Steuern, insbesondere zum Einschalten und/oder zum Ausschalten, des Staubsaugers in Abhängigkeit von einem Schaltzustand des Schaltelements an die Extern-Kommunikationsvorrichtung über eine drahtlose Steuerverbindung ausgestaltet ist.

Die Erfindung betrifft ferner ein System umfassend das elektrische Gerät sowie eine Extern-Kommunikationsvorrichtung als Bestandteil eines Staubsaugers

Ein Staubsauger sowie ein Energiespeichermodul dieser Art gehen beispielsweise aus DE 10 2012 003 073 A1 hervor. Wenn die Hand-Werkzeugmaschine eingeschaltet wird, sendet das Energiespeichermodul ein entsprechendes Schaltsignal zum Einschalten des Staubsaugers an die Extern-Kommunikationsvorrichtung des Staubsaugers. Das System ist allerdings störanfällig, weil theoretisch mehrere elektrische Geräte gleicher Art, beispielsweise mehrere in Empfangsreichweite des Staubsaugers bzw. der Extern-Kommunikationsvorrichtung befindliche elektrische Geräte den Staubsauger einschalten und ausschalten können. Insbesondere das Ausschalten ist problematisch, weil beispielsweise dadurch an sich abzusaugender Staub in die Umgebung gelangen kann und dadurch nicht nur zu Beschädigungen führen kann, sondern auch zu gesundheitlichen Beeinträchtigungen.

Es ist daher die Aufgabe der vorliegenden Erfindung, ein verbessertes elektrisches Gerät in Gestalt einer Werkzeugmaschine oder eines Energiespeichermoduls bereitzustellen.

Zur Lösung der Aufgabe ist bei einem elektrischen Gerät der eingangs genannten Art vorgesehen, dass die Drahtlos-Kommunikationsschnittstelle zum Senden mindestens einer Anmeldenachricht an die Extern-Kommunikationsvorrichtung zur Herstellung der Steuerverbindung mit dem Staubsauger in Abhängigkeit von einem Schaltzustand des Schaltelements ausgestaltet ist.

Der die Anmeldenachricht auslösende Schaltzustand des Schaltelements ist beispielsweise eine Einschalten-Betätigung zum Einschalten des Antriebsmotors der Werkzeugmaschine.

Ein Verfahren sieht ein elektrisches Gerät in Gestalt einer Werkzeugmaschine oder eines Energiespeichermoduls zur elektrischen Stromversorgung einer Werkzeugmaschine vor, wobei das Energiespeichermodul ein Modulgehäuse mit einer Geräteschnittstelle zur lösbaren Verbindung mit der Werkzeugmaschine aufweist, wobei die Werkzeugmaschine einen Antriebsmotor zum Antreiben einer Werkzeugaufnahme aufweist, an der ein zur Bearbeitung eines Werkstücks vorgesehenes Werkzeug angeordnet oder anordenbar ist, wobei der Antriebsmotor anhand eines Schaltelements der Werkzeugmaschine und/oder des Energiespeichermoduls schaltbar ist, wobei das elektrische Gerät eine Drahtlos-Kommunikationsschnittstelle zur drahtlosen Kommunikation mit einer Extern-Kommunikationsvorrichtung aufweist, die einen Bestandteil eines zur Absaugung von durch die Werkzeugmaschine erzeugten Staubs vorgesehenen Staubsaugers bildet, und wobei die Drahtlos-Kommunikationsschnittstelle zum Senden mindestens eines Steuerbefehls zum Steuern, insbesondere zum Einschalten und/oder zum Ausschalten, des Staubsaugers in Abhängigkeit von einem Schaltzustand des Schaltelements an die Extern-Kommunikationsvorrichtung über eine drahtlose Steuerverbindung ausgestaltet ist. Die die Drahtlos-Kommunikationsschnittstelle sendet mindestens eine Anmeldenachricht an die Extern-Kommunikationsvorrichtung zur Herstellung der Steuerverbindung mit dem Staubsauger in Abhängigkeit von einem Schaltzustand des Schaltelements.

Das elektrische Gerät kann beispielsweise ein Energiespeichermodul sein, welches die drahtlose Kommunikation mit der Extern-Kommunikationsvorrichtung leistet. Es kann sich bei dem elektrischen Gerät aber auch um die Werkzeugmaschine selbst handeln, beispielsweise um eine Schraubmaschine, eine Bohrmaschine, eine Säge, eine Fräse oder dergleichen. Die Werkzeugmaschine ist zweckmäßigerweise eine Hand-Werkzeugmaschine.

Bei dem elektrischen Gerät ist vorteilhaft vorgesehen, dass die Geräteschnittstelle Steck-Formschlusskonturen zum Anstecken an Steck-Gegen-Formschlusskonturen der anderen Geräteschnittstelle entlang einer Steckachse sowie elektrische Kontakte, insbesondere Versorgungskontakte, zur Kontaktierung mit elektrischen Gegenkontakten der anderen Geräteschnittstelle zu einer elektrischen Verbindung zwischen Energiespeichermodul und Werkzeugmaschine oder Staubsauger aufweist, die bei einer Steckmontage der Steck-Formschlusskonturen und der Steck-Gegen-Formschlusskonturen in elektrischen Kontakt miteinander gelangen.

Vorzugsweise ist vorgesehen, dass das das Energiespeichermodul ein Modulgehäuse und einen in dem Modulgehäuse aufgenommenen Energiespeicher, insbesondere eine Anordnung mit mindestens einer wiederaufladbaren elektrischen Speicherzelle, zur Bereitstellung elektrischer Energie zur Energieversorgung der Werkzeugmaschine oder des Staubsauger vorgesehenen Versorgungskontakten aufweist.

Zur Lösung der Aufgabe ist bei einer zur Kommunikation mit dem elektrischen Gerät vorgesehenen Extern-Kommunikationsvorrichtung der eingangs genannten Art vorgesehen, dass sie zum Empfangen mindestens einer Anmeldenachricht von der Drahtlos-Kommunikationsschnittstelle zur Herstellung der Steuerverbindung ausgestaltet ist. Die Drahtlos-Kommunikationsschnittstelle des elektrischen Geräts sendet die mindestens eine Anmeldenachricht an die Extern-Kommunikationsvorrichtung zur Herstellung der Steuerverbindung mit dem Staubsauger in Abhängigkeit vorteilhaft von einem Schaltzustand des Schaltelements. Die Extern-Kommunikationsvorrichtung kann als ein von dem Staubsauger entfernbares Modul ausgestaltet sein oder einen festen Bestandteil des Staubsaugers bilden. Der Staubsauger hat beispielsweise eine Modulaufnahme für die Extern-Kommunikationsvorrichtung.

Bevorzugt umfasst die Anmeldenachricht beispielsweise einen Autorisierungsparameter und/oder eine Identifikationskennung der Hand-Werkzeugmaschine und/oder des Energiespeichermoduls oder dergleichen. Ein Grundgedanke ist es, dass das allein anhand des Schaltelements, mit dem die Werkzeugmaschine eingeschaltet wird, die Anmeldung des elektrischen Geräts bei der Extern-Kommunikationsvorrichtung stattfinden kann. Eine separate Bedientaste oder ein sonstiges Bedienelement ist bei dem elektrischen Gerät nicht notwendig.

Eine in der Anmeldenachricht enthaltene Identifikationskennung oder ein darin erhaltener Autorisierungsparameter kann beispielsweise bei der Extern-Kommunikationsschnittstelle bereits gespeichert sein, so dass die Extern-Kommunikationsschnittstelle, beispielsweise der Staubsauger selbst, daran erkennen kann, dass ein tatsächlich zur Herstellung der Steuerverbindung autorisiertes oder geeignetes Gerät die Steuerverbindung herstellen will. Es kann zum Beispiel vorgesehen sein, dass anhand einer Software-Parametrierung über Parametrierschnittstelle, beispielsweise eine USB-Schnittstelle, ein in der Anmeldenachricht enthaltener und das elektrische Gerät identifizierender oder autorisierender Parameter, beispielsweise der Autorisierungsparameter, bei der Extern-Kommunikationsschnittstelle parametrierbar ist. Es ist aber auch möglich, dass mindestens ein derartiger Parameter durch den Aufbau einer vorherigen Steuerverbindung bei der Extern-Kommunikationsschnittstelle noch gespeichert ist und wieder abgerufen werden kann.

Bevorzugt ist vorgesehen, dass die Drahtlos-Kommunikationsschnittstelle zu einem Senden der mindestens einen Anmeldenachricht an die Extern-Kommunikationsvorrichtung vor einem erstmaligen Senden des mindestens einen Steuerbefehls an die Extern-Kommunikationsvorrichtung ausgestaltet ist. Dabei ist vorgesehen, dass das elektrische Gerät sozusagen stets vor dem Senden einer jeweiligen Steuernachricht oder eines Steuerbefehls zunächst eine Anmeldung durchführt. Wenn also beispielsweise das elektrische Gerät erstmalig eingeschaltet wird oder beispielsweise das Energiespeichermodul das Einschalten der Werkzeugmaschine erkennt, also die Betätigung des Schaltelements, wird dadurch zunächst die Anmeldenachricht ausgelöst, d.h. die Anmeldung zur Herstellung der Steuerverbindung bei der Extern-Kommunikationsvorrichtung.

Prinzipiell möglich ist es zwar, jedoch nicht unbedingt notwendig, dass das elektrische Gerät, beispielsweise die Werkzeugmaschine und/oder das Energiespeichermodul, ein zum Auslösen der Anmeldenachricht vorgesehenes oder geeignetes Bedienelement, beispielsweise einen Taster oder dergleichen, aufweist. Es ist auch möglich, dass die mindestens eine Anmeldenachricht oder die Anmeldeprozedur durch eine andere Maßnahme ausgelöst wird, beispielsweise durch ein erstmaliges Anordnen des Energiespeichermoduls an der Werkzeugmaschine. Bevorzugt ist aber vorgesehen, dass das elektrische Gerät abgesehen von dem Schaltelement keinen zum Auslösen der Anmeldenachricht vorgesehenes oder geeignetes Bedienelement aufweist.

Bei der Extern-Kommunikationsvorrichtung ist es dementsprechend vorteilhaft, wenn sie Steuerbefehle nur dann akzeptiert, wenn zuvor eine Anmeldenachricht empfangen wurde oder die Steuerverbindung wirksam etabliert worden ist.

Eine zweckmäßige Maßnahme sieht vor, dass die Drahtlos-Kommunikationsschnittstelle zu einer verschlüsselten und/oder authentifizierten Kommunikation mit der Extern-Kommunikationsvorrichtung, insbesondere zu dem Senden des mindestens einen Steuerbefehls an die Extern-Kommunikationsvorrichtung, ausgestaltet ist. Sinngemäß ist es ebenfalls vorteilhaft, wenn der Staubsauger oder die Extern-Kommunikationsvorrichtung ebenfalls zu einer verschlüsselten und/oder authentifizierten Kommunikation ausgestaltet ist. Die Steuerverbindung ist insbesondere eine solche Steuerverbindung, die stets verschlüsselt und/oder authentifiziert ist. Dadurch wird vermieden oder jedenfalls mit hoher Wahrscheinlichkeit ausgeschlossen, dass sich eine nicht autorisierte Einrichtung in die Steuerverbindung einschaltet oder in sonstiger Weise Missbrauch betrieben wird. Bei einem Staubsauger kann im Prinzip relativ wenig Fehlfunktion ausgelöst werden, außer dass er eingeschaltet oder ausgeschaltet wird. Prinzipiell reicht daher ein einfacher Sicherheitsstandard. Dennoch schützt eine Verschlüsselung vor Missbrauch. Ein Sicherheitsstandard beispielsweise in der Art des Diffie-Hellman-Key-Exchange, insbesondere im Zusammenhang mit einer Steuerverbindung auf Basis von Bluetooth, ist zweckmäßig. Vorteilhaft ist insbesondere eine sogenannte kryptografische Authentifizierung. Ein Anmeldeschlüssel wird vorzugsweise bei einer ersten Anmeldung vereinbart.

Vorteilhaft ist vorgesehen, dass die Drahtlos-Kommunikationsschnittstelle zu einem Senden einer Statusabfrage zum Abfragen eines Betriebsstatus', insbesondere eines Schaltzustandes, des Staubsaugers an die Extern-Kommunikationsvorrichtung und/oder zum Empfangen einer einen Betriebsstatus, insbesondere einen Schaltzustand, des Staubsaugers enthaltenden Statusnachricht ausgestaltet ist. Dementsprechend ist es vorteilhaft, auch die Extern-Kommunikationsvorrichtung zum Senden eines Betriebsstatus bzw. einer Statusnachricht ausgestaltet ist. Die Extern-Kommunikationsvorrichtung versteht sozusagen die Statusabfrage, mit der das elektrische Gerät und insbesondere dessen Drahtlos-Kommunikationsschnittstelle, den Betriebsstatus' des Staubsaugers abfragt. Bei dem Betriebsstatus kann es sich beispielsweise um eine Information handeln, ob der Staubsauger läuft oder nicht, welche Drehzahl er hat, welche Leistungsdaten der Staubsauger aufweist oder dergleichen.

Bevorzugt ist es, wenn das elektrische Gerät eine Anzeigeeinrichtung, beispielsweise eine optische Anzeigeeinrichtung, eine akustische Anzeigeeinrichtung oder beides, zur Ausgabe mindestens einer die Steuerverbindung betreffenden Kommunikationsinformation und/oder zur Anzeige eines Betriebsstatus, insbesondere einer Herstellung der Steuerverbindung, aufweist. Die Anzeigeeinrichtung umfasst beispielsweise einen Lautsprecher, eine Leuchtanzeige, eine LED-Anzeige, eine LCD-Anzeige oder dergleichen. Die Kommunikationsinformation kann beispielsweise den aktuellen Bestand oder Zustand der Steuerverbindung betreffen. Anhand der optischen oder akustischen Information der Anzeigeeinrichtung kann der Bediener beispielsweise erkennen, dass die Steuerverbindung aufgebaut wird oder etabliert ist.

Besonders bevorzugt ist es, wenn die Anzeigeeinrichtung einen Bestandteil einer Ladezustandsanzeige des Energiespeichermoduls bildet, wobei die Ladezustandsanzeige zum Anzeigen einer in dem Energiespeichermodul vorhandenen Energiekapazität oder Ladekapazität vorgesehen und/oder ausgestaltet ist. Die Ladezustandsanzeige wird also sozusagen zusätzlich noch dazu genutzt, die Kommunikationsinformation oder den Betriebsstatus hinsichtlich der Steuerverbindung auszugeben. So kann beispielsweise eine erste Farbe bei einer optischen Anzeige dazu dienen, den Ladezustand anzuzeigen, während eine Farbe dazu dient, die Kommunikationsinformation oder den Betriebsstatus oder beides auszugeben. Auch unterschiedliche optische Ausprägungen, beispielsweise optische Anzeigemuster, sowohl zeitlicher als auch grafischer Art, können dazu dienen, dass die Anzeigeeinrichtung sowohl die Energiekapazität oder den Ladezustand anzeigen kann, als auch die Kommunikationsinformation und/oder den Betriebsstatus der Steuerverbindung. Bevorzugt ist es, wenn das elektrische Gerät zum Eintragen mindestens einer Temporär-Kennung in die mindestens eine Anmeldenachricht ausgestaltet ist, wobei die Temporär-Kennung die Steuerverbindung kennzeichnet, dass sie drahtlos ist. Andere Steuerverbindungen, die mit der Extern-Kommunikationsvorrichtung herstellbar sind, sind beispielsweise dauerhafte Steuerverbindungen.

Bevorzugt ist vorgesehen, dass die Drahtlos-Kommunikationsschnittstelle zu einem iterativen Senden eines zum Einschalten des Staubsaugers vorgesehen Steuerbefehls und/oder zum Aufrechterhalten der Steuerverbindung ausgestaltet ist, solange das Schaltelement in einer den Antriebsmotor einschaltenden Schaltstellung ist. So kann die Drahtlos-Kommunikationsschnittstelle beispielsweise leere Datenpakete senden, die der empfangenden Extern-Kommunikationsvorrichtung signalisieren, dass die Datenverbindung bzw. die Steuerverbindung intakt ist. Weiterhin ist es möglich, dass der Schaltbefehl zum Einschalten des Staubsaugers mehrfach gesendet wird.

Bei der Extern-Kommunikationsvorrichtung ist vorzugsweise vorgesehen, dass sie einen Saugbetrieb beendet, wenn die Steuerverbindung unterbrochen ist und/oder sie von dem elektrischen Gerät keinen Steuerbefehl innerhalb einer vorbestimmten oder vorbestimmbaren oder einstellbaren Zeitspanne erhält. Wenn also beispielsweise keine Einschaltsignale mehr bei der Extern-Kommunikationsvorrichtung eintreffen oder sie erkennt, dass die Steuerverbindung abgerissen ist, schaltet sie den Saugbetrieb beim Staubsauger ab.

Prinzipiell möglich ist aber auch, dass der Staubsauger selbst bei unterbrochener oder abgerissener Steuerverbindung weiterläuft, sodass jedenfalls ein zuverlässiger Absaugbetrieb selbst bei unterbrochener Steuerverbindung oder gestörter Steuerverbindung gewährleistet ist.

Das elektrische Gerät bzw. dessen Drahtlos-Kommunikationsschnittstelle sind zweckmäßigerweise zum Empfangen einer die Steuerverbindung bestätigenden Anmeldebestätigungsnachricht ausgestaltet. Sinngemäß ist die Extern-Kommunikationsvorrichtung zweckmäßigerweise zum Senden einer die Steuerverbindung bestätigenden Anmeldebestätigungsnachricht ausgestaltet. Das elektrische Gerät meldet sich sozusagen bei der Extern-Kommunikationsvorrichtung zur Herstellung der Steuerverbindung an, was die Extern-Kommunikationsvorrichtung entsprechend mit der Anmeldebestätigungsnachricht bestätigt.

Bevorzugt ist es weiterhin, wenn das elektrische Gerät zum Speichern einer Adresskennung der Extern-Kommunikationsvorrichtung ausgestaltet ist. Dabei ist es bevorzugt, wenn das elektrische Gerät mehrere Extern-Kommunikationsvorrichtungen bzw. deren Adresskennungen speichern kann. Somit ist das elektrische Gerät beispielsweise sehr schnell bei verschiedenen, beispielsweise mindestens zwei, Extern-Kommunikationsvorrichtungen anmeldbar. Das Gerät liest sozusagen den Speicher aus und meldet sich bei einer ihr bekannten Extern-Kommunikationsvorrichtung bzw. einem bekannten Staubsauger an.

Bevorzugt ist es, wenn das elektrisch Gerät bzw. dessen Drahtlos-Kommunikationsschnittstelle zum Senden mindestens einer Konfigurationsnachricht zur Konfiguration, beispielsweise der Konfiguration einer Arbeitsstellung und/oder Saugleistung, der Extern-Kommunikationsvorrichtung oder des Staubsaugers in Abhängigkeit von einer das elektrische Gerät kennzeichnenden Größe ausgestaltet ist. Die das elektrische Gerät kennzeichnende Größe kann beispielsweise eine oder mehrere der folgenden Größen umfassen: Typ des elektrischen Geräts (Säge, Fräse oder dergleichen), Staubklasse, Drehzahleinstellung des Antriebsmotors des elektrische Geräts, aktuelle Leistungsaufnahme des elektrischen Geräts, Anpressdruck des Geräts, gemessenes Staubaufkommen oder dergleichen.

Eine bevorzugte Ausführungsform der Erfindung sieht vor, dass das elektrische Gerät als Energiespeichermodul zur Versorgung der Werkzeugmaschine, die das Schaltelement aufweist, ausgestaltet ist, wobei die Geräteschnittstelle elektrische Geräte-Versorgungskontakte zur elektrischen Energieversorgung der Werkzeugmaschine aufweist, wobei Energiespeichermodul über eine von den Geräte-Versorgungskontakten separate Datenschnittstelle, insbesondere eine Busschnittstelle, und/oder anhand einer Erfassung eines Stromflusses über die Geräte-Versorgungskontakte eine Information über den Schaltzustand des Schaltelements ermittelt. Somit hat also das Energiespeichermodul das Schaltelement nicht selbst an Bord, sondern erfasst den Schaltzustand des Schaltelements der Werkzeugmaschine. Im einfachsten Fall ist beispielsweise ein Stromfluss, der über die Geräte-Versorgungskontakte fließt, zu Erfassen. Aber auch eine Datenkommunikation über eine Datenschnittstelle, beispielsweise eine Bus-Schnittstelle, kann zur Ermittlung des Schaltzustands dienen. Wenn also beispielsweise die Werkzeugmaschine über die Datenschnittstelle ein Einschaltsignal sendet, d.h. das beispielsweise der Antriebsmotor der Werkzeugmaschine eingeschaltet wird, wird dies vom Energiespeichermodul ausgewertet, um die Anmeldung bei der Extern-Kommunikationsvorrichtung vorzunehmen und/oder den Staubsauger einzuschalten, d.h. Steuerbefehle zu senden. Es ist auch möglich, dass allein schon aufgrund einer Initialisierungskommunikation zwischen dem Energiespeichermodul und der Werkzeugmaschine der Schaltzustand des Schaltelements ermittelbar ist. Wenn also der Bediener das Schaltelement betätigt, den Antriebsmotor also einschalten will, fragt die Werkzeugmaschine beispielsweise typische Informationen bei dem Energiespeichermodul ab, z.B. einen aktuellen Ladezustand, eine maximale Versorgungsspannung oder dergleichen. Erst dann wird der Antriebsmotor eingeschaltet. Aufgrund dieser Abfragen kann das Energiespeichermodul erkennen, dass das Schaltelement der Werkzeugmaschine betätigt ist.

Ergänzend sei erwähnt, dass vorzugsweise ein Steuerbefehl zum Ausschalten des Staubsaugers erst nach einer Nachlaufzeit gegeben wird, d.h. dass beispielsweise nach einem Loslassen des Schaltelements der Werkzeugmaschine der Steuerbefehl zum Abschalten des Staubsaugers erst mit Verzögerung gesendet wird. Somit ist eine effektive und nachlaufende Absaugung von durch die Werkzeugmaschine erzeugten oder erzeugbaren Staubes gewährleistet.

Weiterhin ist es vorteilhaft, wenn das elektrische Gerät oder dessen Drahtlos-Kommunikationsschnittstelle zur Trennung der Steuerverbindung bei einer Betriebsunterbrechung, beispielsweise bei einem Trennen des Energiespeichermoduls und der Werkzeugmaschine voneinander und/oder bei einem Aufladen des Energiespeichermoduls an einem Ladegerät und/oder nach einer vorbestimmten Zeitspanne ausgestaltet ist. So signalisiert das elektrische Gerät beispielsweise der Extern-Kommunikationsvorrichtung, dass die Steuerverbindung nicht mehr notwendig ist. Die vorbestimmte Zeitspanne kann beispielsweise eine Stunde oder zwei Stunden umfassen. Wenn also das elektrische Gerät für längere Zeit nicht genutzt ist, kündigt es sozusagen die Steuerverbindung ab, so dass die Extern-Kommunikationsvorrichtung oder der Staubsauger zum Aufbau bzw. zur Etablierung anderer Steuerverbindungen mit anderen elektrischen Geräten bereit ist. Bei der Extern-Kommunikationsvorrichtung ist beispielsweise ein Autorisierungsparameter für das elektrische Gerät gespeichert, der das elektrische Gerät als für die Herstellung bzw. Aufrechterhaltung oder Nutzung der Steuerverbindung berechtigtes oder autorisiertes Gerät qualifiziert. Die Extern-Kommunikationsvorrichtung kann den Autorisierungsparameter beispielsweise bei der Betriebsunterbrechung wieder zurücksetzen oder löschen.

An dieser Stelle sei bemerkt, dass selbstverständlich auch die Extern-Kommunikationsvorrichtung eine Betriebsunterbrechung erkennen kann, beispielsweise wenn für eine vorbestimmte Zeitspanne keine Einschaltnachricht von dem elektrischen Gerät mehr empfangen wird. Bei dem Energiespeichermodul wird die Steuerverbindung beispielsweise dann aufgehoben, wenn es an einem Ladegerät aufgeladen wird. Dabei ist es möglich, dass das elektrische Gerät die Steuerverbindung sozusagen aktiv freigibt. Wenn also beispielsweise das Energiespeichermodul von der Werkzeugmaschine getrennt wird oder an ein Ladegerät angeschlossen wird (oder beides) kann es eine Beendigungsnachricht zur Beendigung der Steuerverbindung an die Extern-Kommunikationsvorrichtung senden.

Ein bevorzugtes Konzept sieht bei der Extern-Kommunikationsvorrichtung vor, dass das jeweils erste elektrische Gerät, welches die Steuerverbindung anhand der Anmeldenachricht herstellen will, die Steuerverbindung auch herstellen darf. So können beispielsweise zwei konkurrierende elektrische Geräte in Gestalt von Werkzeugmaschinen versuchen, jeweils eine Steuerverbindung zu dem Staubsauger bzw. der Extern-Kommunikationsvorrichtung herzustellen. Das jeweils erste elektrische Gerät wird dabei von der Extern-Kommunikationsvorrichtung oder dem Staubsauger akzeptiert.

Bei der Extern-Kommunikationsvorrichtung oder dem Staubsauger ist vorteilhaft vorgesehen, dass sie oder er in einem Bereitschaftsmodus zum Empfangen der mindestens einen Anmeldenachricht bereit ist und in einem Arbeitsmodus nicht zum Empfangen der mindestens einen Anmeldenachricht bereit ist. Im sozusagen normalen Arbeitsmodus kann eine Steuerverbindung bereits existieren. In dem Bereitschaftsmodus hingegen ist es möglich, dass eine Steuerverbindung herstellbar ist, mit der das elektrische Gerät die Extern-Kommunikationsvorrichtung oder den Staubsauger ansteuern kann.

Bei der Extern-Kommunikationsvorrichtung oder dem Staubsauger ist zweckmäßigerweise vorgesehen, dass sie oder er anhand eines Anmelde-Bedienelementes in den Bereitschaftsmodus schaltbar ist und/oder dass sie nach einem Verbinden des Staubsaugers mit einer elektrischen Energieversorgung für den Staubsauger in den Bereitschaftsmodus schaltet. Bei dem Anmelde-Bedienelement kann es sich beispielsweise um eine Bedientaste oder einen Bedienschalter handeln. Der Staubsauger oder die Extern-Kommunikationsvorrichtung hat beispielsweise eine Art Autorisierungstaste. Wenn der Bediener das Bedienelement betätigt, ist der Bereitschaftsmodus aktiv oder aktivierbar. Es ist aber auch möglich, dass nach einem Verbinden des Staubsaugers oder der Extern-Kommunikationsvorrichtung mit einer elektrischen Energieversorgung, beispielsweise einem Energieversorgungsnetz anhand eines Netzkabels oder mit einem Akkupack oder einem sonstigen Energiespeichermodul, die Extern-Kommunikationsvorrichtung oder der Staubsauger oder beide in den Bereitschaftsmodus schaltet, beispielsweise aus dem an sich üblichen Arbeitsmodus. Wenn der Bediener also beispielsweise den Staubsauger mit einem Anschlusskabel an eine Netzsteckdose anschließt oder einen Akkupack ansteckt, ist der Staubsauger für die Steuerverbindung sozusagen bereit, nämlich im Bereitschaftsmodus. Der Bereitschaftsmodus kann einerseits durch eine zeitliche Bedingung beendet werden, andererseits aber auch aktiv. So ist beispielsweise eine Trennung der Extern-Kommunikationsvorrichtung oder des Staubsaugers von einem elektrischen Netz ein Auslöser zur Beendigung des Bereitschaftsmodus. Es ist aber auch möglich, dass der Bediener das eine Bedienelement, beispielsweise ein speziell zum Beenden des Bereitschaftsmodus vorgesehenes Bedienelement und/oder das Anmelde-Bedienelement, betätigt, um den Bereitschaftsmodus sozusagen aktiv zu beenden.

Vorteilhaft ist vorgesehen, dass die Extern-Kommunikationsvorrichtung optische und/oder akustische Anzeigemittel zum Anzeigen des Bereitschaftsmodus aufweist. Beispielsweise leuchtet eine LED und/oder erzeugt ein Lautsprecher ein entsprechendes Signal. Der Bediener erkennt daran, dass der Bereitschaftsmodus eingeschaltet ist. Es ist auch möglich, dass Anzeigemittel an dem Staubsauger oder der Extern-Kommunikationsvorrichtung sozusagen multifunktional sind. So kann ein Anzeigemittel vorgesehen sein, welches in einem ersten Betriebsmodus Betriebszustände des Staubsaugers anzeigt, beispielsweise Füllstand, einen notwendigen Staubsaugerbeutelwechsel oder dergleichen, während in einem zweiten Betriebsmodus das Anzeigemittel den Bereitschaftsmodus anzeigt.

Vorteilhaft ist es weiterhin, wenn die Extern-Kommunikationsvorrichtung oder der Staubsauger den Bereitschaftsmodus nach einer vorbestimmten oder bestimmbaren Zeit beendet. So kann beispielsweise vorgesehen sein, dass nach Betätigen des Anmelde-Bedienelements und/oder Anschließen des Staubsaugers an eine Stromversorgung oder Energieversorgung der Bereitschaftsmodus aktiv wird und nach einer vorbestimmten Zeit, beispielsweise 20 Sekunden oder 40 Sekunden, einer Minute oder dergleichen, der Bereitschaftsmodus wieder endet. Durch erneute Betätigung des Anmelde-Bedienelements und/oder Entfernen und Wiederanschließen der elektrischen Energieversorgung kann der Bereitschaftsmodus wieder aktiv werden.

Eine Variante der Erfindung kann vorsehen, dass die Extern-Kommunikationsvorrichtung oder der Staubsauger in den Bereitschaftsmodus mindestens eine Aufforderungsnachricht zum Auffordern des elektrischen Geräts zu einem Senden der mindestens einen Anmeldenachricht an die Extern-Kommunikationsvorrichtung ausgestaltet ist. Dies kann eine sogenannte Broadcast-Nachricht sein. Wenn also beispielsweise bei der Extern-Kommunikationsvorrichtung aktuell kein elektrisches Gerät, insbesondere keine Werkzeugmaschine, zum Einschalten und/oder Ausschalten des Staubsaugers angemeldet ist, sendet sie die Aufforderungsnachricht.

Ein anderes Szenario kann vorsehen, dass die Extern-Kommunikationsvorrichtung nach einer vorbestimmten Wartezeit, beispielsweise von einer oder mehreren Sekunden, in der keine Anmeldenachricht oder keine Antwortnachricht von einem bereits autorisierten elektrischen Gerät kommt, eine Broadcast-Anforderung zur Herstellung der Steuerverbindung geeignete oder bereite Geräte, also Energiespeichermodule oder Werkzeugmaschinen oder beides, sendet.

An dieser Stelle sei erwähnt, dass selbstverständlich auch das elektrische Gerät bzw. dessen Drahtlos-Kommunikationsschnittstelle eine oder mehrere Anmeldenachrichten zur Herstellung einer Steuerverbindung bereitstehende oder bereitgeschaltete (beispielsweise im Bereitschaftsmodus befindliche) Extern-Kommunikationsvorrichtungen senden kann. Die Drahtlos-Kommunikationsschnittstelle oder das elektrische Gerät versucht also dann, wenn keine Verbindung zu einer Extern-Kommunikationsvorrichtung oder einem Staubsauger vorhanden ist, eine Steuerverbindung zu einem anderen Staubsauger herzustellen.

Bei der Extern-Kommunikationsvorrichtung oder dem Staubsauger ist zweckmäßigerweise vorgesehen, dass sie oder er zur Herstellung der Steuerverbindung mit dem elektrischen Gerät als eine Steuerverbindung einer temporären Kategorie und vorzugsweise zur Herstellung mindestens einer drahtlosen Steuerverbindung mit einem Bediengerät in einer dauerhaften Kategorie ausgestaltet ist. Der Grundgedanke dabei ist es, dass das elektrische Gerät sozusagen nur temporär bei der Extern-Kommunikationsvorrichtung angemeldet ist. Dabei ist es vorteilhaft, wenn auch eine Anmeldung zu einer Steuerung dauerhafter Art möglich ist, beispielsweise anhand einer Fernbedienungseinrichtung. Somit ist eine drahtlose Steuerung sowohl temporärer Art als auch dauerhafter Art möglich.

In diesem Zusammenhang ist es vorteilhaft, wenn mit der Extern-Kommunikationsvorrichtung oder dem Staubsauger nur eine einzige drahtlose Steuerverbindung der temporären Kategorie möglich ist.

Es ist weiterhin vorteilhaft, wenn in der temporären Kategorie nur eine Vorrichtung zur Ansteuerung des Staubsaugers aus der Kategorie Werkzeugmaschinen, beispielsweise Hand-Werkzeugmaschinen und/oder Energiespeichermodulen für Werkzeugmaschinen vorbehalten ist. Somit kann sich also keine Fernbedienungseinrichtung, die nicht als Werkzeugmaschine ausgestaltet ist oder als Energiespeichermodul dazu, temporär bei der Extern-Kommunikationsvorrichtung anmelden.

Vorteilhaft ist bei der der Extern-Kommunikationsvorrichtung oder dem Staubsauger vorgesehen, dass zur Herstellung der drahtlosen Steuerverbindung der temporären Kategorie eine erste Bedienhandlung bei der Extern-Kommunikationsvorrichtung erforderlich ist und die drahtlose Steuerverbindung der dauerhaften Kategorie durch eine gegenüber der ersten Bedienhandlung verschiedene, insbesondere erschwerte, zweite Bedienhandlung herstellbar ist und/oder durch eine dauerhafte Einstellung, insbesondere eine Einstellung anhand eines elektrischen Anmelde-Bedienelements oder anhand eine einer Software einstellbare Einstellung, hergestellt oder herstellbar ist. Beispielsweise kann vorgesehen sein, dass die erste Bedienhandlung eine Bedienhandlung an einem verborgen angeordneten Anmelde-Bedienelement ist. Die Bedienhandlung kann beispielsweise dadurch erschwert sein, dass das Anmelde-Bedienelement unter einer Abdeckung, innerhalb des Gehäuses der Extern-Kommunikationsvorrichtung oder dem Staubsauger oder dergleichen verborgen ist. Weiterhin kann die erste Bedienhandlung eine gegenüber der zweiten Bedienhandlung abweichende und/oder längere Bedienbetätigung eines Bedienelements erfordern. So ist beispielsweise auch denkbar, dass der Staubsauger oder die Extern-Kommunikationsvorrichtung zur Anmeldung einer Steuerverbindung der dauerhaften Kategorie zunächst an eine Energieversorgung angeschlossen werden muss und zudem noch eine Bedienbetätigung an einem Anmelde-Bedienelement notwendig ist.

Es ist auch notwendig, dass die erste und die zweite Bedienhandlung an ein und demselben Anmelde-Bedienelement erfolgen, jedoch unterschiedlich sind. So kann beispielsweise die Bedienhandlung für die Anmeldung der Steuerverbindung der temporären Kategorie einen kurzen Tastendruck an dem Anmelde-Bedienelement erfordern, während die dauerhafte Steuerverbindung nur dann herstellbar ist, wenn das Bedienelement für eine vorbestimmte, gegenüber der ersten Bedienhandlung längere Zeitdauer bedient oder gedrückt oder betätigt werden muss.

Die Bedienhandlung kann auch das Erfassen eines drahtlosen Identifizierungssenders, beispielsweise eines RFID-Senders, umfassen.

Zur Herstellung einer Steuerverbindung der dauerhaften Kategorie ist beispielsweise ein zusätzlicher Identifizierungssender notwendig, welcher Identifizierungsdaten des Geräts an die Extern-Kommunikationsvorrichtung sendet, welches die dauerhafte Steuerverbindung herstellen will.

Zweckmäßigerweise ist bei der der Extern-Kommunikationsvorrichtung oder dem Staubsauger vorgesehen, dass sie oder er die, insbesondere temporäre, Steuerverbindung mit dem elektrischen Gerät nach einer vorbestimmten oder einstellbaren Zeitspanne und/oder bei einer Betriebsunterbrechung des Staubsaugers, insbesondere bei einem Ausschalten des Staubsaugers und/oder bei einem Trennen des Staubsaugers von einer elektrischen Energieversorgung, beendet. Die Verwendung des elektrischen Geräts mit der Extern-Kommunikationsvorrichtung ist dann nur durch eine erneute Anmeldung anhand der mindestens einen Anmeldenachricht wiederherstellbar. Der Staubsauger kann beispielsweise von einem Stromnetz getrennt werden oder an einem Schaltelement ausgeschaltet werden. In diesem Fall ist die temporäre Steuerverbindung oder überhaupt die Steuerverbindung mit dem elektrischen Gerät unterbrochen oder beendet. Selbstverständlich kann die Steuerverbindung später wieder hergestellt werden, z.B. durch die mindestens eine Anmeldenachricht.

Ein bevorzugtes Konzept sieht vor, dass die Extern-Kommunikationsvorrichtung sozusagen den Abstand von mindestens zwei elektrischen Geräten gemäß der Erfindung misst, um dasjenige elektrische Gerät bevorzugt zur Herstellung der Steuerverbindung zuzulassen, welches näher bei der Extern-Kommunikationsvorrichtung oder dem Staubsauger angeordnet ist. So sieht eine bevorzugte Ausführungsform der Erfindung vor, dass die Extern-Kommunikationsvorrichtung zur Herstellung der Steuerverbindung in Abhängigkeit von einer Signalstärke eines von der Drahtlos-Kommunikationsschnittstelle gesendeten, insbesondere die mindestens eine Anmeldenachricht enthaltenden, Signals ausgestaltet ist, wobei die Extern-Kommunikationsvorrichtung die Drahtlos-Kommunikationsschnittstelle bei einer Signalstärke, die eine erste Signalschwelle überschreitet, insbesondere einen Abstand zwischen der Drahtlos-Kommunikationsschnittstelle und der Extern-Kommunikationsvorrichtung von weniger als 1 m signalisiert, die Anmeldenachricht zu einer sofortigen oder bevorzugten Herstellung der Steuerverbindung priorisiert, und/oder bei miteinander um die Herstellung der Steuerverbindung konkurrierenden elektrischen Geräten dasjenige elektrische Gerät mit der höheren Signalstärke zur Herstellung der Steuerverbindung bevorzugt. So ist beispielsweise bei einer Signalstärkemessung, die einen Abstand zwischen der Extern-Kommunikationsvorrichtung bzw. dem Staubsauger und der Drahtlos-Kommunikationsschnittstelle bzw. dem elektrischen Gerät von weniger als einem Meter signalisiert, eine sofortige Anmeldung möglich. In einem größeren Abstand, beispielsweise von einem Meter bis 10 Metern, zwischen dem elektrischen Gate und dem Staubsauger, ist vorzugsweise eine längere Wartezeit für den Empfang der Anmeldenachricht vorgesehen.

Es ist auch möglich, dass die Extern-Kommunikationsvorrichtung auf Anmeldenachrichten in Abhängigkeit von ihrer Signalstärke unterschiedlich schnell reagiert. Bevorzugt ist es beispielsweise, dass die Extern-Kommunikationsvorrichtung eine Antwortzeit zum Senden einer Antwort, beispielsweise einer Anmeldebestätigungsnachricht, auf die Anmeldenachricht in Abhängigkeit von der Signalstärke des Signals der Drahtlos-Kommunikationsschnittstelle einstellt. Wenn die Extern-Kommunikationsvorrichtung also eine erste Anmeldenachricht mit einer ersten Signalstärke empfängt reagiert sie mit ihrer Antwort, beispielsweise der Anmeldebestätigung oder einer Aufforderung, weitere Daten zu senden, schneller als bei einer zweiten Anmeldenachricht mit einer zweiten Signalstärke, die gegenüber der ersten Signalstärke kleiner ist. Mithin reagiert also beispielsweise das Sauggerät bei einer Anmeldung mit starkem Signal schneller als bei einer Anmeldung mit schwachem Signal.

In einer über die anzubahnende Steuerverbindung zwischen dem elektrischen Gerät und dem Staubsauger kommunizierten Nachricht, beispielsweise der Anmeldenachricht oder einer Antwortnachricht oder beiden, kann eine Signalstärke angegeben sein. Die Signalstärke ist sozusagen das Basismaß, welches bei der empfangsstarken Messung oder sendestarken Messung vom jeweils empfangenden Gerät, also dem Staubsauger oder dem elektrischen Gerät, analysiert wird.

Zweckmäßigerweise ist vorgesehen, die mit dem elektrischen Gerät herstellbare Steuerverbindung eine exklusive temporäre Steuerverbindung ist derart, dass der Staubsauger ausschließlich über die temporäre Steuerverbindung und optional anhand mindestens eines lokal an einem Staubsaugergehäuse des Staubsaugers angeordneten Bedienelementes und/oder drahtlos mit dem Staubsauger kommunizierenden und nicht als Werkzeugmaschine oder deren Energiespeichermodul ausgestalteten Bedienelementes ansteuerbar ist. Bei dem Bedienelement handelt es sich beispielsweise um ein Schaltelement zum Einschalten oder Ausschalten des Staubsaugers, einen Drehzahlregler oder dergleichen.

Der Staubsauger ist vorteilhaft abgesehen von mindestens einem dauerhaft bei dem Staubsauger zur drahtlosen Kommunikation angemeldeten Bediengerät ausschließlich durch das elektrische Gerät, also der Werkzeugmaschine oder das Energiespeichermodul, drahtlos ansteuerbar.

Bei dem Staubsauger oder der Extern-Kommunikationsvorrichtung ist vorzugweise vorgesehen, dass er bzw. sie einen Saugbetrieb beendet, wenn die Steuerverbindung unterbrochen ist und/oder sie von dem elektrischen Gerät keinen Steuerbefehl innerhalb einer vorbestimmten oder bestimmbaren Zeitspanne erhält. Dies wird beispielsweise als ein Signal dafür verstanden, dass das elektrische Gerät nicht mehr den Staubsauger braucht. Die bestimmbaren Zeitspanne kann beispielsweise an einem Schaltelement, welches am Gehäuse der Extern-Kommunikationsvorrichtung oder dem Staubsauger angeordnet ist, eingestellt werden. Aber auch eine Parametrierung der Zeitspanne per Software, über Funk oder dergleichen, ist ohne weiteres möglich.

Die Extern-Kommunikationsvorrichtung ist zweckmäßigerweise zum Empfangen mindestens einer Konfigurationsnachricht zur Konfiguration, insbesondere zur Konfiguration einer Arbeitseinstellung und/oder einer Saugleistung, der Extern-Kommunikationsvorrichtung, insbesondere des Staubsaugers, in Abhängigkeit von einer das elektrische Gerät kennzeichnenden Größe ausgestaltet. Arbeitseinstellung ist vorzugsweise direkt im Zusammenhang mit der Anmeldeprozedur zur Herstellung der Steuerverbindung einstellbar.

Die Extern-Kommunikationsvorrichtung und/oder der Staubsauger weist zweckmäßigerweise einen Speicher zum Speichern von Autorisierungsparametern oder Anmeldeparametern und/oder Verschlüsselungsparametern, insbesondere den Autorisierungsparametern oder Anmeldeparametern zugeordneten Verschlüsselungsparametern, zur Herstellung von Steuerverbindungen zu mindestens zwei elektrischen Geräten und deren Drahtlos-Kommunikationsschnittstellen auf. Somit kann die Extern-Kommunikationsvorrichtung oder der Staubsauger Autorisierungsparameter oder Anmeldeparameter und zweckmäßigerweise auch Verschlüsselungsparameter, insbesondere solche, die Autorisierungsparametern oder Anmeldeparametern zugeordnet sind, bereits vorhalten. Wenn also sich das elektrische Gerät bei der Extern-Kommunikationsvorrichtung anmeldet, weiß das die Extern-Kommunikationsvorrichtung anhand der gespeicherten Autorisierungsparameter oder Anmeldeparameter bereits, dass das elektrische Gerät zur Herstellung der Steuerverbindung berechtigt ist oder autorisiert ist. Wenn Verschlüsselungsparameter, beispielsweise für die bereits oben erwähnte Verschlüsselung, bei dem Staubsauger oder der Extern-Kommunikationsvorrichtung vorliegen oder gespeichert sind, ist auch die Verschlüsselung sehr schnell wieder herstellbar.

An dieser Stelle sei erwähnt, dass selbstverständlich auch das elektrische Gerät, die Werkzeugmaschine und/oder das Energiespeichermodul, und insbesondere die Drahtlos-Kommunikationsschnittstelle einen Speicher zum Speichern von mehreren Anmeldeparametern, beispielsweise Keys, Identifikationskennungen, und/oder Verschlüsselungsparametern, beispielsweise Verschlüsselungskeys, zur Anmeldung bei mindestens zwei voneinander verschiedenen Extern-Kommunikationsvorrichtungen oder Staubsaugern aufweisen kann.

Der jeweilige Speicher ist vorzugsweise ein Dauerspeicher, der selbst bei einer Betriebsunterbrechung oder Unterbrechung der Stromversorgung der Extern-Kommunikationsvorrichtung oder des Staubsaugers nicht gelöscht wird. Es ist aber auch möglich, dass der Speicher ein flüchtiger Speicher ist.

In dem Speicher der Extern-Kommunikationsvorrichtung oder einem anderen Speicher ist zweckmäßigerweise auch noch mindestens eine andere Information gespeichert, beispielsweise Leistungsdaten des elektrischen Geräts in Gestalt der Werkzeugmaschine und/oder des Energiespeichermoduls. Aber auch in einem Speicher oder dem Speicher des elektrischen Geräts ist es vorteilhaft eine Speicherung von beispielsweise Leistungsdaten des Staubsaugers oder dergleichen abzulegen bzw. zu speichern.

Ein bevorzugtes Konzept sieht bei der Extern-Kommunikationsvorrichtung und/oder dem Staubsauger vor, dass sie oder er zusätzlich zu der mindestens einen Steuerverbindung durch mindestens eine Fernbedienungseinrichtung ansteuerbar ist. Die Fernbedienungseinrichtung ist beispielsweise in einem vom Staubsaugergehäuse separaten Gehäuse entfernt angeordnet. Die Fernbedienungseinrichtung kann aber auch an einem Saugschlauch des Staubsaugers angeordnet sein. Bevorzugt ist jedenfalls eine mobile Fernbedienungseinrichtung, die separat vom Staubsauger ist. Die Kommunikationsparameter oder Anmeldeparameter der Fernbedienungseinrichtung sind zweckmäßigerweise dauerhaft bei der Extern-Kommunikationsvorrichtung gespeichert. Die Fernbedienungseinrichtung gehört zweckmäßigerweise zu der dauerhaften Kategorie gemäß obiger Beschreibung. Eine Ausführungsform der Fernbedienungseinrichtung kann vorsehen, dass sie als ein Zusatzmodul an der Hand-Werkzeugmaschine, der Werkzeugmaschine oder dem Energiespeichermodul angeordnet oder anordenbar ist. Der Bediener kann also die Fernbedienungseinrichtung sofort dazu nutzen, den Staubsauger anzusteuern.

Die Extern-Kommunikationsvorrichtung und/oder der Staubsauger ist vorteilhaft zur Priorisierung mindestens eines von einem von dem elektrischen Gerät verschiedenen Steuerbedienelement erzeugten Steuerbefehls zum Steuern, insbesondere Einschalten und/oder Ausschalten, des Staubsaugers gegenüber der Steuerverbindung ausgestaltet, wobei der Steuerbefehl einen Vorrang-Steuerbefehl bildet. Somit ist also die Extern-Kommunikationsvorrichtung oder der Staubsauger vorrangig durch das Steuerbedienelement ansteuerbar. Bei dem Steuerbedienelement kann es sich beispielsweise um eine Steckdose handeln, die zur Erfassung eines über sie führenden Stromflusses ausgestaltet ist. Wenn an die Steckdose ein Verbraucher, beispielsweise eine andere Werkzeugmaschine angeschlossen ist, wird in der Steckdose erfasst. Beispielsweise ist an oder in der Steckdose ein sogenannter Shunt oder ein sonstiges Messglied angeordnet, welches den Stromfluss erfasst. Das lokal an die Steckdose des Staubsaugers angeschlossene Gerät, beispielsweise ein Schleifgerät, eine Säge oder dergleichen, führt also zu einem vorrangigen Einschalten oder Ausschalten des Staubsaugers. Bei dem Steuerbedienelement kann es sich aber auch um einen Schalter handeln, der am Staubsaugergehäuse angeordnet ist. Mit dem Schalter kann der Staubsauger eingeschaltet und ausgeschaltet werden unabhängig davon, welche Befehle über die Steuerverbindung von dem insbesondere temporär mit dem Staubsauger verbundenen elektrischen Gerät gemäß der Erfindung kommen.

Eine bevorzugte Ausführungsform sieht vor, dass die bereits erwähnte Fernbedienungseinrichtung, mithin also eine dem Staubsauger zugeordnete oder einen Bestandteil des Staubsaugers bildenden Fernbedienungseinrichtung, vorrangig Steuerbefehle geben kann, die vom Staubsauger bzw. der Extern-Kommunikationsvorrichtung bevorzugt gegenüber den Steuerbefehlen des über die Steuerverbindung gemäß der Erfindung ansteuernden elektrischen Geräts bearbeitet oder behandelt werden.

Vorzugsweise ist vorgesehen, dass das das Energiespeichermodul ein Modulgehäuse und einen in dem Modulgehäuse aufgenommenen Energiespeicher, insbesondere eine Anordnung mit mindestens einer wiederaufladbaren elektrischen Speicherzelle, zur Bereitstellung elektrischer Energie zur Energieversorgung der Werkzeugmaschine oder des Staubsauger vorgesehenen Versorgungskontakten aufweist. Die elektrischen Speicherzellen, insbesondere eine Aggregation oder eine Anordnung mehrerer elektrischer Speicherzellen, sind beispielsweise durch ein Ladegerät aufladbar. Es ist aber auch möglich, dass der Energiespeicher beispielsweise eine Brennstoffzelle oder dergleichen anderen elektrischen Speicher oder chemischen Speicher, welcher elektrische Energie am Ende bereitstellen kann, aufweist.

Das Energiespeichermodul weist zweckmäßigerweise ein Modulgehäuse mit einer Geräteschnittstelle zur lösbaren Verbindung mit der Werkzeugmaschine auf. Die Geräteschnittstellen des Energiespeichermoduls zu der Werkzeugmaschine oder des Staubsaugers haben zueinander passende Versorgungskontakte zur Übertragung von elektrischer Energie und/oder Datenkontakte, insbesondere Buskontakte, zur Übertragung von Daten.

Die Werkzeugmaschine ist eine Staub und/oder Partikel erzeugende Werkzeugmaschine, beispielsweise eine Sägemaschine, eine Bohrmaschine, eine Fräsmaschine, eine Schleifmaschine oder dergleichen. Insbesondere ist die Werkzeugmaschine eine Hand-Werkzeugmaschine. Die Werkzeugmaschine weist zweckmäßigerweise einen Saugauslass, zum Beispiel einen Anschlussstutzen, zum Anschließen eines Saugschlauchs auf.

Der Staubsauger könnte auch allgemein als Sauggerät bezeichnet werden. Der Staubsauger kann selbst verständlich nicht nur Staub, sondern auch gröbere Partikel, die die Werkzeugmaschine erzeugt, saugen.

Bevorzugt ist es, wenn die Steuerungsverbindung nur dann herstellbar ist oder hergestellt wird, wenn der Staubsauger und die Werkzeugmaschine anhand des Saugschlauchs oder eines Saugschlauchs miteinander strömungsverbunden sind.

An der Werkzeugmaschine und/oder dem Staubsauger können Sensoren oder Erkennungsmittel vorgesehen sein, die den Anschluss des Saugschlauches erkennen. Nur dann, wenn tatsächlich ein Saugschlauch angeschlossen ist, wird die Steuerverbindung hergestellt.

Nachfolgend werden Ausführungsbeispiele der Erfindung anhand der Zeichnung erläutert. Es zeigen:
- Figur 1: eine perspektivische Schrägansicht eines erfindungsgemäßen Systems umfassend eine Hand-Werkzeugmaschine sowie einen Staubsauger,

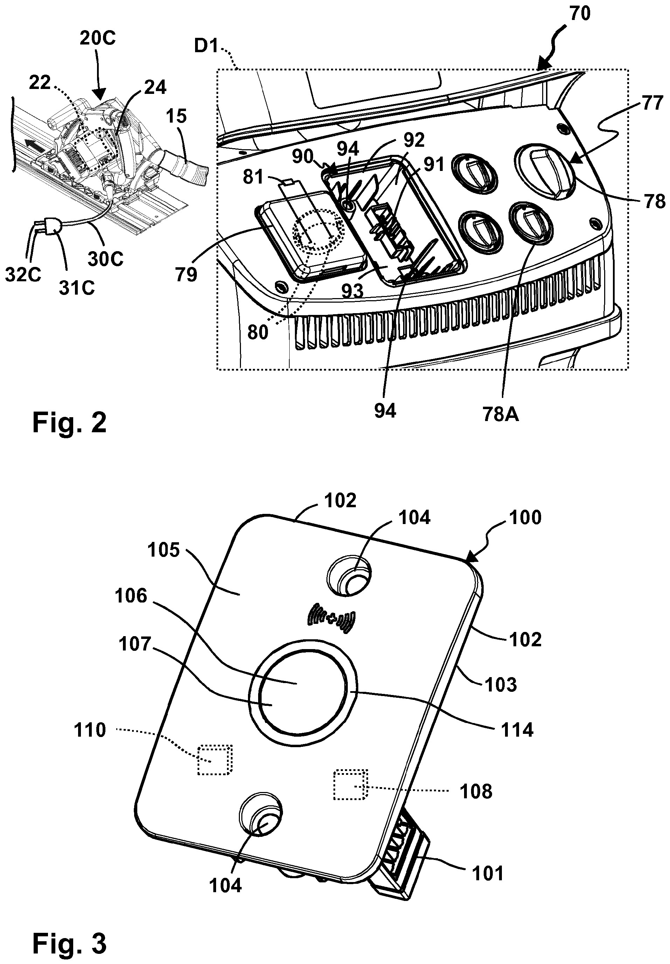

- Figur 2: eine Teilansicht etwa entsprechend einem Detail D1 des Staubsaugers gemäß Figur 1,
- Figur 3: eine perspektivische Schrägansicht eines Kommunikationsmoduls des Staubsaugers gemäß Figur 1,
- Figur 4: eine Geräteschnittstelle einer Werkzeugmaschine gemäß Figur 1,
- Figur 5: ein Energiespeichermodul des Systems gemäß Figur 1 perspektivisch schräg dargestellt,
- Figur 6: das Energiespeichermodul gemäß Figur 5 von der anderen Seite perspektivisch dargestellt,
- Figur 7: ein Ladegerät zum Aufladen des Energiespeichermodul gemäß Figuren 5, 6

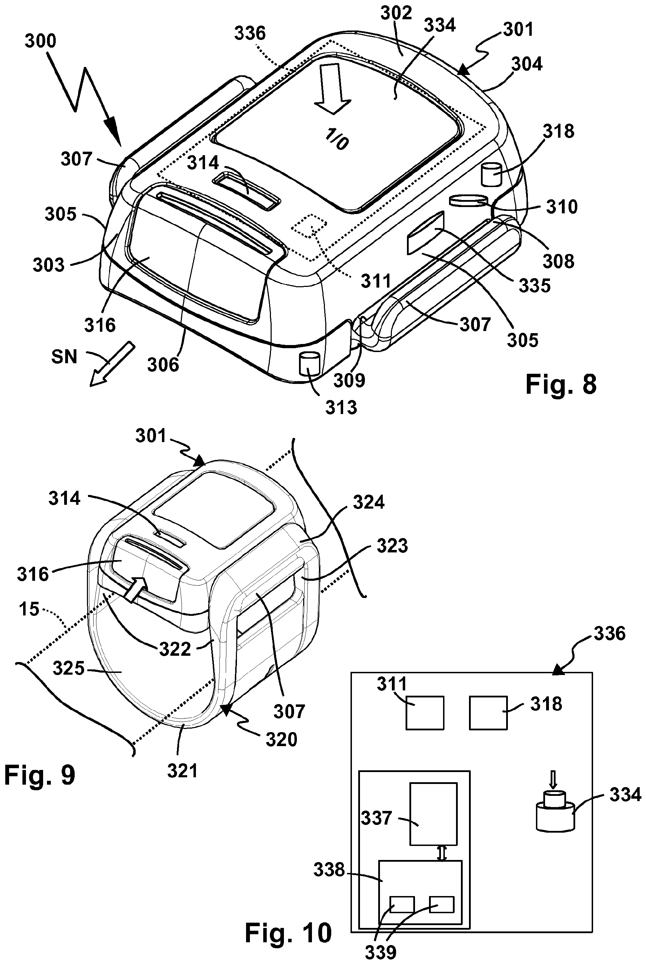

- Figur 8: ein Kommunikationsmodul des Systems gemäß Figur 1 in perspektivischer Schrägansicht,
- Figur 9: das Kommunikationsmodul gemäß Figur 8, jedoch mit einer Befestigungseinrichtung zur Befestigung an einem schematisch dargestellten Saugschlauch,
- Figur 10: eine schematische Funktionsdarstellung des Kommunikationsmoduls gemäß Figur 9, 10,

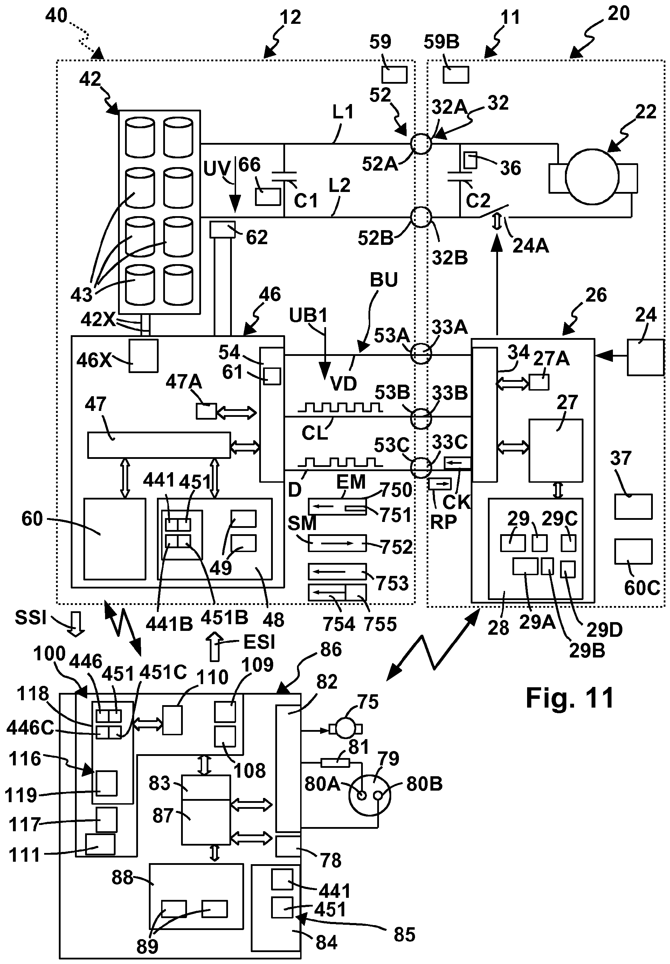

- Figur 11: ein schematisches Schaltbild des Energiespeichermoduls sowie einer Hand-Werkzeugmaschine und eines Kommunikationsmoduls gemäß Figur 1,
- Figur 12: ein schematisches Schaltbild des Energiespeichermoduls gemäß Figur 4 in Zusammenwirkung mit dem Ladegerät gemäß Figur 7,
- Figur 13: eine perspektivische Darstellung des anderen Energiespeichermoduls gemäß Figur 1 im auf das Ladegerät gemäß Figur 7 aufgesetzten Zustand,

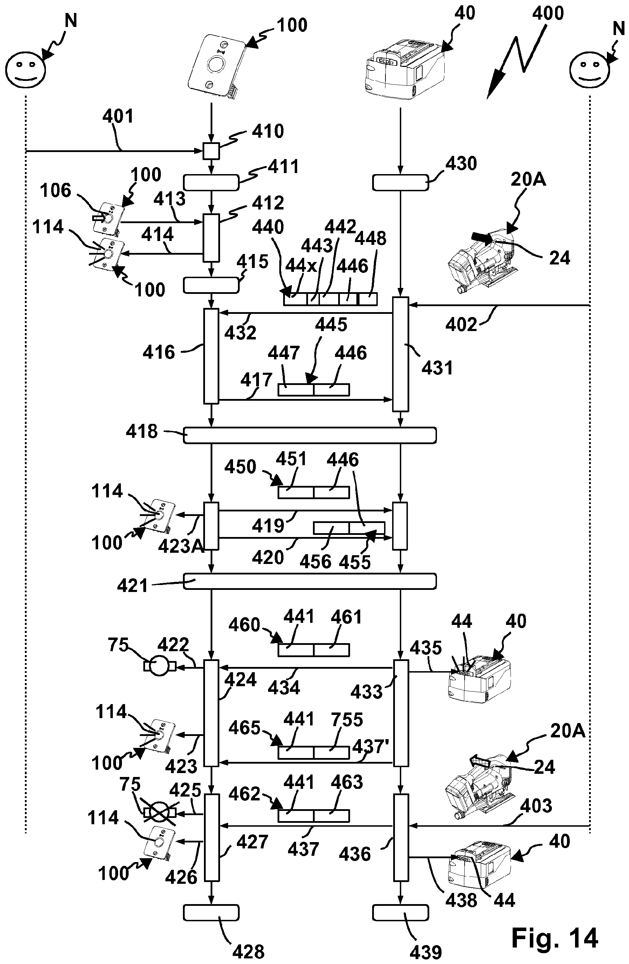

- Figur 14: ein Kommunikationsdiagramm zwischen dem Staubsauger gemäß Figur 1 und einem Energiespeichermodul,
- Figur 15: ein schematisch dargestelltes System mit einem in einer Transportbox angeordneten und einem Energiespeicher betreibbaren Staubsauger,
- Figur 16: ein Diagramm mit einer Relation zwischen einer Signalstärke Information und einer Antwortzeit.

Gleiche und gleichartige Komponenten sind nachfolgend teilweise mit denselben oder durch Hinzufügung von A, B etc. kenntlich gemachte ähnliche Bezugszeichen versehen.

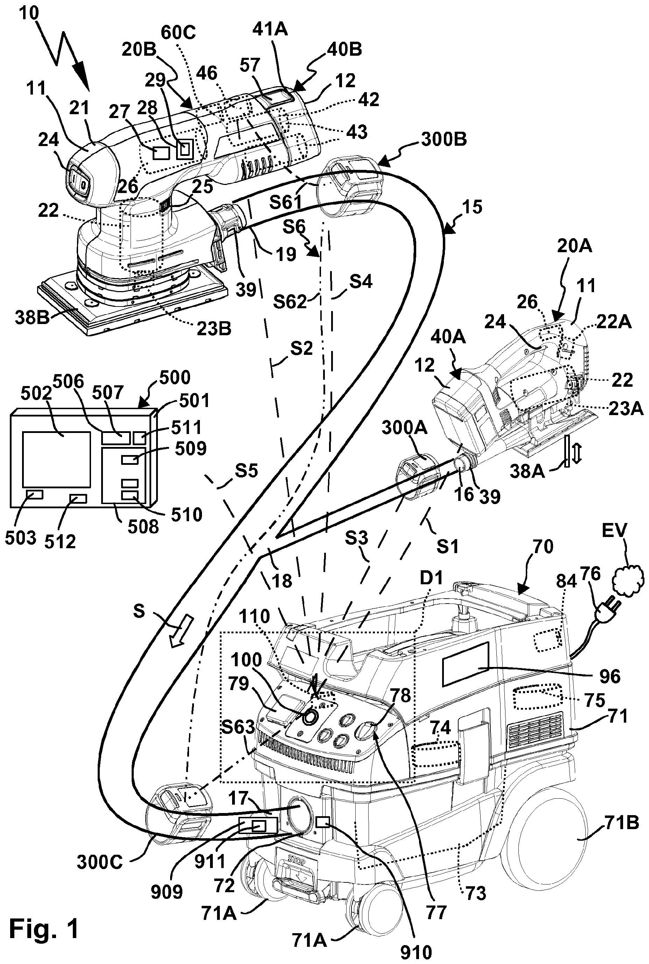

Ein in Figur 1 teilweise schematisch dargestelltes System 10 umfasst Werkzeugmaschinen 20A, 20B die von Energiespeichermodulen 40A, 40B mit elektrischer Energie versorgt wird. Die Werkzeugmaschine 20A, 20B sind Staub oder Partikel erzeugende Werkzeugmaschinen und insbesondere Hand-Werkzeugmaschinen. Bei der Werkzeugmaschine 20B handelt es sich beispielsweise um ein Schleifgerät, bei der Werkzeugmaschine 20A um eine Säge, insbesondere eine Stichsäge, wobei auch eine Oberfräse oder dergleichen andere Staub erzeugende oder Partikel erzeugende elektrische Werkzeugmaschine oder Hand-Werkzeugmaschine ohne weiteres möglich wäre.

In einem Maschinengehäuse 21A, 21B der Werkzeugmaschine 20A, 20B ist ein Antriebsmotor 22 angeordnet, der zum Antreiben einer Werkzeugaufnahme 23A, 23B und somit eines an der Werkzeugaufnahme 23A, 23B angeordneten Werkzeugs 38A, 38B vorgesehen ist. Bei dem Werkzeug 38A handelt es sich beispielsweise um ein Sägewerkzeug, bei dem Werkzeug 38B um ein Schleifpad. Der Antriebsmotor 22 kann das Werkzeug 238A, 38B direkt oder über ein Getriebe antrieben, z.B. ein Getriebe 22A für eine Oszillationsbewegung.

Die Werkzeugmaschine 20A, 20B kann anhand eines Schaltelements 24, beispielsweise eines Einschalters/Ausschalters, eingeschaltet und ausgeschaltet werden. Ein weiteres Schaltelement 25 ist beispielsweise als ein Drehzahlregler oder Drehzahlsteller ausgestaltet. Möglich ist eine Ausführungsform, bei der beispielsweise durch einen entsprechenden Betätigungshub des Schaltelements 24 die Drehzahl des Antriebsmotors 22 veränderbar ist.

Die Hand-Werkzeugmaschine 20A, 20B weist eine Steuerungseinrichtung 26 zur Ansteuerung des Antriebsmotors 22 auf. Die Steuerungseinrichtung 26 umfasst beispielsweise einen Prozessor 27 und einen Speicher 28. In dem Speicher 27 ist ein Programmmodul oder sind mehrere Programmmodule 29 gespeichert, deren Programmcode durch den Prozessor 27 ausführbar ist, um die Hand-Werkzeugmaschine 20A, 20B zu steuern und/oder mit den Energiespeichermodulen 40A, 40B zu kommunizieren..

Die Werkzeugmaschine 20A, 20B weist einen Absauganschluss oder Saugauslass 39 zum Anschluss eines Saugschlauches 15 auf, über den beim Betrieb des Werkzeugs 38A, 38B anfallender Staub abgesaugt werden kann. Der Saugauslass 39, beispielsweise ein Anschlussstutzen, kommuniziert mit an oder in dem Werkzeug 38B angeordneten Absaugöffnungen, die man in der Zeichnung nicht sieht. Somit kann in an sich bekannter und üblicher Weise Staub vom Werkzeug 38A, 38B unmittelbar weg abgesaugt werden.

Ein Staubsauger 70 des Systems 10 weist ein Saugergehäuse 71 auf, welches beispielsweise auf Rollen 71A, 71B auf einem Untergrund abstellbar und/oder abrollbar ist. Das Sauggerät 70 ist ein mobiles Sauggerät. Der Staubsauger 70 könnte aber auch die Gestalt eines stapelbaren Staubsaugers aufweisen, mithin ein Stapelgehäuse aufweisen, und/oder eine kastenförmige Gestalt haben. Die Rollen 71A, 71B sind optional.

Der Staubsauger 70 weist an der Frontseite des Staubsaugergehäuses 71 einen Saugeinlass 72 auf, an die der Saugschlauch 15 anschließbar ist. Der Saugschlauch 15 erstreckt sich mit einem Längsende 16, das an den Saugauslass 39A angeschlossen ist, und einem anderen Längsende 17, das an den Saugeinlass 72 angeschlossen ist, zwischen der Werkzeugmaschine 20A und dem Staubsauger 70. Die Werkzeugmaschine 20B ist über eine Verzweigung 18 des Saugschlauchs 15 an den Staubsauger 70 angeschlossen. Die Verzweigung 18 verzweigt zu dem Längsende 16 und zu einem Längsende 19, welches an den Saugauslass 39A der Werkzeugmaschine 20B angeschlossen ist. Selbstverständlich ist die Verzweigung 18 des Saugschlauchs 15 optional. In an sich bekannter Weise kann auch ein Saugschlauch vorgesehen sein, der sich direkt zwischen einem Saugauslass 39 und dem Saugeinlass 72 erstreckt, ohne eine Verzweigung aufzuweisen.

In dem Saugergehäuse 71 ist ein Schmutzsammelraum 73 vorgesehen, in den aus einem Saugstrom S, der über den Saugauslass 72 eingesaugt wird, abgesonderter Staub und sonstige Partikel aufgenommen werden können. Oberhalb des Schmutzsammelraums 73 ist vorzugsweise ein Filter 74 vorgesehen. Im Schmutzsammelraum 73 kann aber auch zusätzlich oder anstelle des Filters 74 ein Filtersack angeordnet sein, der zum Sammeln von Schmutz und Partikeln geeignet ist. Der bereits Saugstrom S, der durch den Saugeinlass 72 eingesaugt wird, ist durch ein Saugaggregat 75 erzeugbar. Das Saugaggregat 75 wird beispielsweise anhand einer Netzanschlusseinrichtung 76 mit elektrischem Strom versorgt. Die Netzanschlusseinrichtung 76 umfasst beispielsweise ein Anschlusskabel und einen Anschlussstecker zum Anschluss an ein elektrisches Versorgungsnetz EV, insbesondere mit 220 V oder 110 V Wechselstrom.

Die Funktionen des Staubsaugers 70 sind durch eine Bedienelementanordnung 77 steuerbar. Die Bedienelementanordnung umfasst beispielsweise ein Schaltelement 78, mit dem der Staubsauger eingeschaltet oder ausgeschaltet oder in einen Automatik-Betrieb geschaltet werden kann, bei dem beispielsweise ein über eine Steckdose 79 führender Stromfluss zum Einschalten und Ausschalten des Saugaggregats 75 führt. Die Steckdose 79 ist zweckmäßigerweise an der Bedienelementanordnung 77 vorgesehen. In die Steckdose 79 kann ein elektrischer Verbraucher, vorzugsweise eine elektrische Hand-Werkzeugmaschine 20C angeschlossen werden.

Die Steckdose 79 weist Kontakte 80, insbesondere Buchsen, auf, in die Kontakte 32C eines Steckers 31C der Hand-Werkzeugmaschine 20C einsteckbar sind. Der Stecker 31C ist an einem Anschlusskabel angeordnet, welches ein Bestandteil einer Netzanschlusseinrichtung 30C ist. Wenn einem Bediener ein Schaltelement 24 der Hand-Werkzeugmaschine 20C zum Bestromen von deren Antriebsmotor 22, mit dem beispielsweise ein Sägeblatt antriebbar ist, betätigt, fließt Strom über die Netzanschlusseinrichtung 30C, der vom Staubsauger 70 über die Steckdose 79 bereitgestellt wird. Dieser Stromfluss ist durch einen Stromsensor 81 in an sich bekannter Weise erfassbar. Eine Steuerungseinrichtung 86 des Staubsaugers 70 schaltet bei einem Stromfluss über die Steckdose 79 in an sich bekannter Weise das Saugaggregat 75 ein und bei einem Ende des Betriebs der Hand-Werkzeugmaschine 20C, also wenn der Stromsensor 81 kein Stromfluss mehr ermittelt, das Saugaggregat 25 ab, zweckmäßigerweise mit einer Nachlaufzeit.

Der Stromsensor 82 ist beispielsweise an eine Ein-/Ausgabeschnittstelle 82 der Steuerungseinrichtung 80 angeschlossen. Die Ein-/Ausgabeschnittstelle 82, beispielsweise eine leistungselektronische Schnittstelle, dient weiterhin zur Ansteuerung des Saugaggregats 75.

Die Steuerungseinrichtung 86 weist weiterhin einen Prozessor 87 sowie einen Speicher 88 auf, in dem eines oder mehrere Programmmodule 89 gespeichert sind. Das mindestens eine Programmmodul 89 weist einen Programmcode auf, der durch den Prozessor 87 ausführbar ist und unter anderem eine oder mehrere der nachfolgenden Funktionen ermöglicht.

Die Steckdose 79 ist über den Staubsauger 70 an das Versorgungsnetz EV anschließbar oder auch direkt an das Versorgungsnetz EV anschließbar, nämlich anhand der Netzanschlusseinrichtung 30C.

Die Werkzeugmaschinen 20A, 20C hingegen sind für einen leitungslosen oder drahtlosen Betrieb ausgestattet. Sie sind nämlich anhand der Energiespeichermodule 40A, 40B mit elektrischem Strom versorgbar.

Die Energiespeichermodule 40A, 40B sind funktional ähnlich aufgebaut, wobei mechanische Unterschiede und/oder elektrische Unterschiede hinsichtlich der Stromversorgungskapazität, Spannung oder dergleichen, ohne weiteres existieren können.

Die Energiespeichermodule 40A, 40B weisen Modulgehäuse 41A, 41B auf, in denen Energiespeicher 42 angeordnet sind. Die Energiespeicher 42 weisen eine oder mehrere Speicherzellen 43, insbesondere eine Speicherzellenanordnung mit mehreren Speicherzellen 43, auf, die wiederaufladbar sind.

Anhand einer Anzeigeeinrichtung 44, die optional bei dem Energiespeichermodul 40A vorhanden ist, kann ein Ladezustand des Energiespeichers 42 ausgegeben werden, beispielsweise akustisch und/oder optisch. Die Anzeigeeinrichtung 44 umfasst beispielsweise einen Lautsprecher 44A, der einen niederen Ladezustand signalisieren kann, z.B. anhand eines Warntons. Bevorzugt ist bei der Anzeigeeinrichtung 44 eine Anordnung von einer oder mehreren Leuchten 45, beispielsweise Leuchten 45A, 45B, 45C und 45D. Bei den Leuchten 45A-45D handelt es sich vorzugsweise um LEDs.

Die Funktionen der Energiespeichermodule 40A, 40B sind durch Steuerungseinrichtungen 46 steuerbar.

Die Steuerungseinrichtungen 46 können unmittelbar durch den Energiespeicher 42 und/oder eine oder mehrere der Speicherzellen 43 mit elektrischer Energie versorgbar sein. Beispielsweise können zwischen dem Energiespeicher 42 und der Steuerungseinrichtung 46 Versorgungsleitungen 42X vorgesehen sein. Eine Steuerungseinrichtung 46 kann zudem noch ein Versorgungsmodul 46X zur Adaption einer von dem Energiespeicher 42 bereitgestellten Spannung bzw. einem von dem Energiespeicher 42 bereitgestellten Versorgungsstrom aufweisen. Somit ist eine jeweilige Steuerungseinrichtung 46 lokal mit elektrischer Energie versorgbar, unabhängig davon, ob das Energiespeichermodul 40 mit einem elektrischen Gerät, beispielsweise einem Ladegerät oder einer Werkzeugmaschine oder einem Staubsauger, verbunden ist.

Die Steuerungseinrichtungen 46 weisen beispielsweise einen Prozessor 47 einen Speicher 48 auf, in welchem mindestens ein Programmmodul 49 gespeichert ist. Beispielsweise kann die Steuerungseinrichtung 46 mit der Steuerungseinrichtung 26 der Hand-Werkzeugmaschine 20A, 20B kommunizieren. Der Prozessor 47 kann Programmcode der Programmmodule 49 ausführen, unter anderem um die nachfolgend noch im Detail erläuterten Funktionen zu realisieren.

Die Energiespeichermodule 40A, 40B sind lösbar mit den Werkzeugmaschinen 20A, 20B anhand von Geräteschnittstellen 30 der Werkzeugmaschinen 20A, 20B sowie Geräteschnittstellen 50 der Energiespeichermodule 40A, 40B miteinander verbindbar.

Die Werkzeugmaschinen 20A, 20B bilden erste Systemkomponenten 11, die Energiespeichermodule 40A, 40B zweite Systemkomponenten 12, die fest miteinander verbindbar sind, so dass sie jeweils ein System bilden.

Die Geräteschnittstellen 30, 50 umfassen zu diesem Zweck formschlüssig zueinander passende Konturen, beispielsweise zu einer Drehverriegelung geeignete Formschlusskonturen oder wie im vorliegenden Fall Steck-Formschlusskonturen 51 an der Geräteschnittstelle 50, die mit Steck-Gegen-Formschlusskonturen 31 den Geräteschnittstellen 30 formschlüssig in Eingriff bringbar sind, nämlich im Rahmen einer Steckbewegung.

Anhand dieser Steckbewegung gelangen Geräte-Versorgungskontakte 32 der Geräte-Schnittstelle 30 mit Versorgungskontakten 52 der Geräteschnittstelle 50 in Kontakt, so dass vom Energiespeicher 42 elektrische Energie über die Versorgungskontakte 52, 32 für die jeweilige Werkzeugmaschine 20A, 20B, insbesondere deren Antriebsmotor 22, bereitgestellt werden kann.

Die Geräteschnittstellen 30, 50 umfassen weiterhin Datenkontakte 33, 53 von Datenschnittstellen 34, 54, so dass auch eine Datenkommunikation, vorliegend insbesondere eine Bus-Kommunikation zwischen den Systemkomponenten 11, 12 möglich ist.

Für einen zusätzlichen Halt zu dem Formschlusskonzept anhand der Steck-Formschlusskonturen 51, 31 sorgt eine Fixiereinrichtung 55, mit denen die Systemkomponenten 11, 12 aneinander fixierbar sind. Die Fixiereinrichtung 55 umfasst beispielsweise ein Fixierelement 56, insbesondere eine Raste, ein Riegelelement oder dergleichen, welches mit einer Fixierkontur 35 in Eingriff bringbar ist. Die Fixierkontur 35 und das Fixierelement 56 sind an der ersten Systemkomponenten 11 und der zweiten Systemkomponente 12 angeordnet, wobei auch die umgekehrte Konfiguration ohne weiteres möglich ist. Die Fixiereinrichtung 55 bildet vorliegend eine Verriegelungseinrichtung und/oder Rasteinrichtung. Das Fixierelement 56 kann anhand eines Betätigungselements 57 außer Eingriff, optional auch in Eingriff, mit der Fixierkontur 35 gebracht werden. Beispielsweise handelt es sich bei dem Fixierelement 56 um einen Fixiervorsprung / Verriegelungsvorsprung, welche in Eingriff mit der als Fixieraufnahme oder Vertiefung ausgestalteten Fixierkontur 35 bringbar ist. Wenn die Fixiereinrichtung 55 ihre Fixierstellung oder Verriegelungsstellung einbringt, bleiben die Steck-Formschlusskonturen 51 in Eingriff mit den Steck-Gegen-Formschlusskonturen 31, d.h. eine Relativbewegung der Systemkomponenten 11, 12 entlang der Steckachse der Steck-Formschlusskonturen 51, 31 ist nicht möglich.

Das Betätigungselement 57 und/oder das Fixierelement 56 sind durch eine Federanordnung (nicht sichtbar) in die Fixierstellung bzw. Verriegelungsstellung federbelastet. Somit kann durch eine einfache Druckbetätigung oder Tastbetätigung des Betätigungselements 57 die Fixiereinrichtung 55 aus der Fixierstellung in die Lösestellung verstellt werden. Am Energiespeichermodul 40A sind bevorzugt aneinander entgegengesetzten Seiten jeweils ein Fixierelement 56 vorgesehen, zudem auch jeweils ein Betätigungselement 57, während beim Energiespeichermodul 40B lediglich eine einzige Drucktaste oder eine einziges Betätigungselement 57 notwendig ist.

Die Energiespeichermodule 40A, 40B können anhand eines Ladegeräts 220 aufgeladen werden. Das Ladegerät 220 weist ein Ladegerätgehäuse 221 auf, an welchem eine Geräteschnittstelle 230 vorgesehen ist. Die Geräteschnittstelle 230 weist Steck-Gegen-Formschlusskonturen 231 auf, die mit den Steck-Formschlusskonturen 51 der Energiespeichermodule 40A, 40B formschlüssig kompatibel sind. Eine Verriegelung ist für den stationären Betrieb nicht notwendig. Passend zu der Geräteschnittstelle 50 weist das Ladegerät 220 weiterhin Geräte-Versorgungskontakte 232 sowie Datenkontakte 233 einer Datenschnittstelle 234, vorzugsweise einer Bus-Schnittstelle auf. In dem Ladegerät 220 ist vorzugsweise ein Spannungswandler 235 angeordnet, der anhand einer Netzanschlusseinrichtung 236 mit elektrischem Strom versorgbar ist und an den Geräte-Versorgungskontakten 232 eine Gleichspannung zum Aufladen des Energiespeichers 42 bereitstellt. Der Anschlussstecker 237 bildet einen Bestandteil einer Netzanschlusseinrichtung 236 und kann unmittelbar am Ladegerätgehäuse 221 angeordnet oder über eine Leitung, die schematisch dargestellt ist, mit dem Ladegerätgehäuse 221 verbunden sein. Der Anschlussstecker 237 ist an das Versorgungsnetz EV anschließbar.

Die Datenschnittstellen 34, 54 sowie 234 sind vorliegend Busschnittstellen. Beispielsweise handelt es sich bei den Busschnittstellen oder Datenschnittstellen 34, 54, 234 um I²C-Busschnittstellen. Die Busschnittstellen umfassen eine Taktleitung CL, eine Datenleitung D sowie eine Versorgungsleitung VD, der Datenkontakte 33A, 53A und 234A zugeordnet sind, eine Taktleitung CL, der Datenkontakte 33B, 53B, 233B zugeordnet sind, sowie eine Datenleitung D, der Datenkontakte 33C, 53C, 234C zugeordnet sind. Die Versorgungsleitung VD dient dazu, dass die Geräteschnittstelle 30 oder 230 der Geräteschnittstelle 50 eine elektrische Versorgungsspannung, beispielsweise eine Busspannung UB, bereitstellt. Über die Taktleitung CL wird ein Bustakt des an den Datenschnittstellen 34, 54, 234 realisierten Busses BU bereitgestellt. Über die Datenleitung D werden Daten übertragen, vorzugsweise bidirektional vom Energiespeichermodul 40 zur Werkzeugmaschine 20 und umgekehrt und/oder vom Energiespeichermodul 40 zum Ladegerät 220 und umgekehrt.

Wenn die Systemkomponenten 11, 12 miteinander verbunden sind, stellt das Energiespeichermodul 40 eine Versorgungsspannung UV an den Versorgungskontakten 52A, 52B bereit, die zum Betreiben des Antriebsmotors 22 geeignet ist. Die Versorgungsspannung UV ist beispielsweise eine Gleichspannung von 15 Volt oder 18 Volt, kann aber auch jederzeit eine andere Spannung sein. An dieser Stelle sei erwähnt, dass ein Energieversorgungsmodul selbstverständlich auch eine Wechselspannung bereitstellen könnte. Darauf kommt es nicht an. Die Steuerungseinrichtung 26 der Werkzeugmaschine 20A, 20B, nachfolgend vereinfacht als Werkzeugmaschine 20 bezeichnet, steuert in Abhängigkeit von einer Betätigung des Schaltelements 24 den Antriebsmotor 22 an, wobei sie beispielsweise einen Schalter 24A öffnet oder schließt. Anstelle des Schalters 24A kann auch eine Leistungselektronik, beispielsweise eine Bestromungseinrichtung für einen elektronisch kommutierten Antriebsmotor 22, vorgesehen sein. Weiterhin ist es denkbar, dass das Schaltelement 24 unmittelbar in den Stromkreis des Antriebsmotors 22 geschaltet ist und somit diesen Einschalten und Ausschalten kann. Wenn der Schalter 24A geschlossen ist, fließt Strom vom Energiespeicher 42 über eine Leitung L1 zum Antriebsmotor 22 und von diesem wieder zurück über eine Leitung L2 zum Energiespeicher 42.

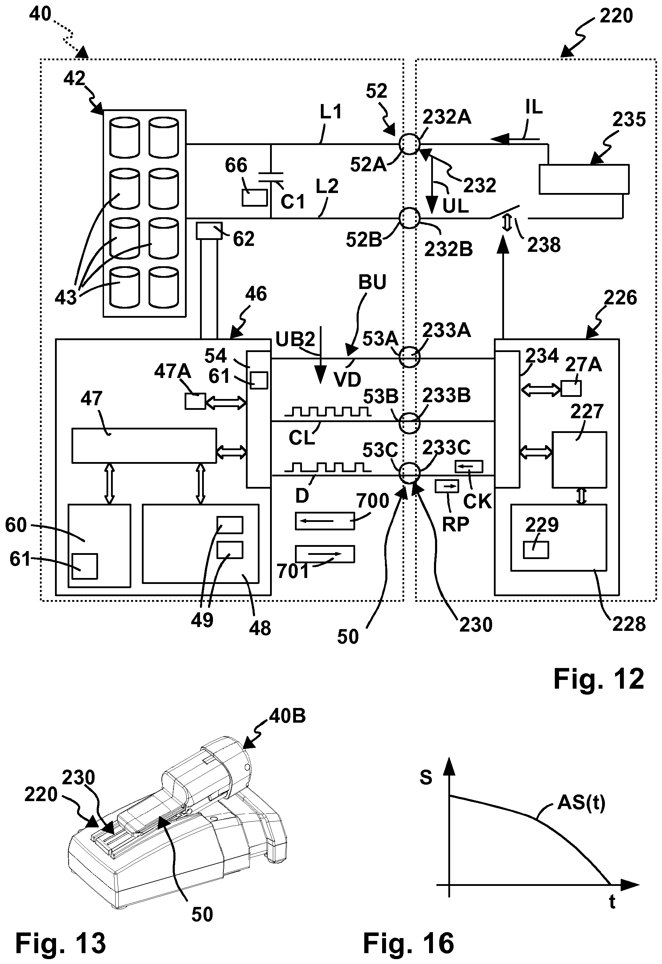

Bei einem Ladevorgang ist dieses Stromflusskonzept gerade umgekehrt, was anhand von Figur 12 deutlich wird. Ein Ladestrom IL fließt in diesem Fall von dem Spannungswandler 235 über die Leitung L1 zum Energiespeicher 42. Der Versorgungskontakt 232B ist ebenso wie der Versorgungskontakt 52 einer Leitung L2, beispielsweise einer Masseleitung zugeordnet. Der Ladevorgang wird vorzugsweise durch eine Steuerungseinrichtung 226 des Ladegeräts 220 gesteuert. Die Steuerungseinrichtung 226 kann beispielsweise den Schalter 238 ansteuern, um den Ladevorgang zu beginnen oder zu beenden. Zur Überwachung des Ladevorgangs kommuniziert auch das Ladegerät 220 mit dem Energiespeichermodul 40, nämlich über die Datenschnittstelle 234 und den diesen zugeordneten Datenkontakten 233A, 233B und 233C für die Versorgungsleitung VD, die Taktleitung CL und die Datenleitung D. Durch eine entsprechende Kommunikation auf dem Bus BU zwischen dem Ladegerät 220 und dem Energiespeichermodul 40 können beispielsweise der Ladezustand des Energiespeichers 42, dessen Nennspannung oder dergleichen abgefragt werden. Zur Steuerung und Überwachung des Ladevorgangs hat das Ladegerät 234 beispielsweise einen Prozessor 27, der Steuerbefehle oder Programmcode eines Programmmoduls 229 zur Steuerung des Ladevorgangs ausführen kann. Der Prozessor 227 ist mit einem Speicher 228 der Steuerungseinrichtung 226 des Ladegeräts 220 verbunden, in welchem das Programmmodul 229 gespeichert ist.

Der Staubsauger 70 ist drahtlos oder leitungslos ansteuerbar. Dazu weist der Staubsauger 70 eine integrale oder vorzugsweise als ein Modul ausgestaltete Extern-Kommunikationsvorrichtung 100 auf. Die Extern-Kommunikationsvorrichtung 100 ist lösbar in einer Modulaufnahme 90 des am Staubsaugergehäuse 71 anordenbar. Die Modulaufnahme 90 ist beispielsweise im Bereich der Bedienelementanordnung 77, insbesondere einer Frontwand 95, an der die Bedienelementanordnung 77 vorgesehen ist, angeordnet. Wenn das Kommunikationsmodul in Gestalt der Extern-Kommunikationsvorrichtung 100 in die Modulaufnahme 90 eingesteckt wird, gelangen Kontakte von Kontaktanordnungen 90, 101 der Modulaufnahme 90 und der Kommunikationsvorrichtung 100 in Kontakt miteinander. Somit können Daten, Informationen, elektrische Versorgungsspannung und dergleichen übertragen werden. Beispielsweise versorgt die Steuerungseinrichtung 86 über die Kontaktanordnung die Extern-Kommunikationsvorrichtung 100 mit der elektrischen Versorgungsspannung.

Weiterhin sind eine Datenschnittstelle 83 der Steuerungseinrichtung 86 und eine Daten-Schnittstelle 108 der Extern-Kommunikationsvorrichtung 100 anhand der Kontaktanordnungen 101 und 91 miteinander in Kontakt. Die Datenschnittstellen 83, 108 umfassen beispielsweise eine Busschnittstelle, über die die Extern-Kommunikationsvorrichtung 100 und die Steuerungseinrichtung 86 Daten und Informationen kommunizieren können.

Die Datenschnittstellen 108, 83 realisieren beispielsweise eine Busverbindung, insbesondere eine I²C-Busverbindung. Andere Buskommunikationen sind auch möglich. Weiterhin können die Datenschnittstellen 83, 108 auch einzelne Datenkontakte, beispielsweise für eine parallele Datenübertragung, umfassen.

Die Modulaufnahme 90 umfasst Seitenwände 92, die sich von einem Boden 93 der Modulaufnahme 90 zur Frontwand 50 erstrecken. In die Modulaufnahme 90, also in den Innenraum zwischen den Seitenwänden 92 und dem Boden 93, kann die von einer Rückseite 103 einer Frontwand 105 der Extern-Kommunikationsvorrichtung 100 abstehende Kontaktanordnung 101 in die am Boden 93 der Modulaufnahme 90 angeordnete Kontaktanordnung 91 eingreifen oder in Kontakt mit derselben gelangen. Dann sind Seitenwandflächen 101 der Frontwand 105 fluchtend mit den Seitenwänden 92, so dass eine Vorderseite oder die Frontwand 105 der Extern-Kommunikationsvorrichtung 100, wie in Figur 1 dargestellt, mit der Frontwand 95 fluchtet. Allein schon die Steckverbindung des Moduls der Extern-Kommunikationsvorrichtung 100 in der Modulaufnahme 90 sorgt für einen zuverlässigen Halt. Zu einer weiteren Fixierung ist vorzugsweise eine Fixiereinrichtung, beispielsweise eine in der Zeichnung nicht dargestellte Rasteinrichtung, Klemmeinrichtung oder dergleichen vorgesehen. Vorliegend ist eine Verschraubung vorgesehen. Beispielsweise sind an der Modulaufnahme 90 eine oder zwei Schraubaufnahmen 94 vorgesehen, die mit Schraubaufnahmen 104 der Extern-Kommunikationsvorrichtung 100 fluchten, wenn diese in der Modulaufnahme 90 aufgenommen ist. In die Schraubaufnahmen 104, 94 können in Figur 1 angedeutete Schrauben eingeschraubt werden.

Der Staubsauger 70 kann anhand der Extern-Kommunikationsvorrichtung 100 drahtlos und/oder leitungslos angesteuert werden, beispielsweise durch eine Drahtlos-Kommunikationsschnittstelle 60 des Energiespeichermoduls 40A oder 40B.

An dieser Stelle sei erwähnt, dass die Drahtlos-Kommunikationsschnittstelle 60 exemplarisch für eine drahtlose Ansteuerung der Systeme umfassend die Systemkomponenten 11 und 12, nämlich jeweils ein Energiespeichermodul und eine Werkzeugmaschine, zu verstehen ist. So kann beispielsweise die Werkzeugmaschine 20C mit einer Drahtlos-Kommunikationsschnittstelle 60C ausgestattet sein, um eine oder mehrere der nachfolgend noch beschriebenen Kommunikationsfunktionen direkt zu leisten, d.h. ohne ein jeweiliges Energiespeichermodul 40, welches eine Drahtlos-Kommunikationsschnittstelle, drahtlos mit dem Staubsauger 70 kommunizieren.

Die Extern-Kommunikationsvorrichtung 100 kann anhand eines Anmelde-Bedienelements 160 aus einem Arbeitsmodus, in welchem keine Steuerverbindung mit der Extern-Kommunikationsvorrichtung 100 neu herstellbar oder wiederherstellbar ist, in einen Bereitschaftsmodus geschaltet werden.

Der Bereitschaftsmodus oder der Arbeitsmodus werden von der Extern-Kommunikationsvorrichtung 100 optisch und/oder akustisch signalisiert. Beispielsweise ist eine Anzeigeeinrichtung 114 vorgesehen, die verschiedene Betriebsmodi der Extern-Kommunikationsvorrichtung 100 signalisieren kann. Die Anzeigeeinrichtung 114 umfasst beispielsweise eine Leuchtanzeige, insbesondere eine ringförmige Leuchtanzeige. Die Anzeigeeinrichtung 114 ist beispielsweise um oder an dem Anmelde-Bedienelement 106 angeordnet. Das Anmelde-Bedienelement 106 ist beispielsweise ein Taster 107, um den sich vorzugsweise die Anzeigeeinrichtung 114 ringförmig erstreckt.

Wenn die Anzeigeeinrichtung 114 dauerhaft leuchtet, signalisiert sie eine etablierte Steuerverbindung, also den Status "verbunden". Wenn die Extern-Kommunikationsvorrichtung 100 anhand des Anmelde-Bedienelements 106 aus dem Arbeitsmodus in den Bereitschaftsmodus geschaltet wird, leuchtet die Anzeigeeinrichtung 114 beispielsweise in einer anderen Farbe oder mit einem anderen Bewegungsmuster, insbesondere mit einem langsam kreisenden Bewegungsmuster. Dieses Bewegungsmuster oder die Farbe der Anzeigeeinrichtung 114 kann abhängig von der Art der Steuerverbindung sein. Wenn eine Steuerverbindung wie nachfolgend noch erläutert eine aktuell herzustellende und/oder bereits hergestellte temporäre Steuerverbindung ist, kann beispielsweise die Anzeigeeinrichtung 114 eine langsam kreisende Leucht-Darstellung haben. Wenn jedoch eine Steuerverbindung dauerhaft etabliert oder herzustellen ist, d. h. der Bereitschaftsmodus zur Herstellung einer dauerhaften Steuerverbindung geeignet ist, leuchtet die Anzeigeeinrichtung 114 anders. Beispielsweise erfolgt das kreisförmige Leuchten der Anzeigeeinrichtung 114 dann mit höherer Frequenz.

Für eine dauerhafte Steuerverbindung ist ein z.B. Kommunikationsmodul 300 vorgesehen, das vorzugsweise einen Systembestandteil des Staubsaugers 70 bildet, mit der Extern-Kommunikationsvorrichtung 100 verbunden ist.

Das Kommunikationsmodul 300 ist ein außerhalb des Saugergehäuses 71 angeordnetes oder anordenbares Kommunikationsmodul. Das Kommunikationsmodul 100 dient zur Aufrechterhaltung und/oder Herstellung einer Steuerverbindung des elektrischen Geräts in Gestalt einer der Systemkomponenten 11 und/oder 12 mit dem Staubsauger 70, insbesondere der Extern-Kommunikationsvorrichtung 100.

Das Kommunikationsmodul 300 weist ein Modulgehäuse 301 auf, welches am Saugschlauch 15 platzierbar ist. Das Modulgehäuse 301 hat an seiner Oberseite 302 zweckmäßigerweise ein Schaltelement 334, mit dem das Saugaggregat 75 einschaltbar und/oder ausschaltbar ist. Das Schaltelement 334 nimmt ergonomisch günstig einen Großteil der Oberseite 302 ein, so dass es leicht bedienbar bzw. betätigbar ist. Das Schaltelement 334 ist beispielsweise ein Drucktaster, Wipptaster oder dergleichen.

Das Modulgehäuse 301 hat eine an den Saugschlauch 15 angepasste Gestalt. Beispielsweise hat eine Unterseitenwand 306, die im am Saugschlauch 15 montierten Zustand des Kommunikationsmoduls 300 an dessen Außenumfang zu liegen kommt, eine gerundete, an den runden Außenumfang des Saugschlauchs 15 angepasste Kontur. Zwischen der Unterseitenwand 306 und der Oberseite oder Oberseitenwand 302 erstrecken sich eine Vorderseitenwand 303, eine Rückseitenwand 304 sowie Längsseitenwände 305. Diese begrenzen einen Innenraum, in welchem eine Steuerungseinrichtung 336 des Kommunikationsmodul 300 geschützt angeordnet ist.

Die Steuerungseinrichtung 336 weist beispielsweise einen Prozessor 337, einen Speicher 338 sowie mindestens ein Programmmodul 339 auf, welches Programmcode umfasst, der vom Prozessor 337 zur Ausführung der Funktionen des Kommunikationsmoduls 300, die später noch erläutert werden, ausführen kann.

Zur Montage des Kommunikationsmoduls 300 am Saugschlauch 15 sind Haken 301 an den Längsseitenwänden 305 vorgesehen. Mithin hat also das Modulgehäuse 301 an einander entgegengesetzten Seiten jeweils einen Haken 307. Jeder Haken 307 weist einen Hakenvorsprung 308 und eine Hakenvertiefung 309 auf. Die Haken 307 dienen zur Befestigung einer Schlauchhalterung 320 (70, 870igur 8), beispielsweise einer Klemmschelle 321. Die Schlauchhalterung 320 weist an ihren Längsendbereichen 322 jeweils Hakenaufnahmen 323 auf, die in Eingriff mit den Haken 307 gebracht werden können. Selbstverständlich sind auch andere Befestigungstechnologien möglich, beispielsweise mittels eines Klettbands oder dergleichen. Denkbar kann auch eine Integration eines Kommunikationsmoduls 300 an den Längsenden 16 und/oder 17 des Saugschlauchs 15 sein, beispielsweise wenn dort entsprechende Rohrkörper, vorgesehen sind, z.B. Anschlussstücke oder Anschlussstutzen aus Gummi, Kunststoff oder dergleichen. Das Kommunikationsmodul 300 kann aber auch an den Saugschlauch 15 angeklebt, angeschweißt oder dergleichen anderweitig mit dem Saugschlauch 15 verbunden sein. Für die Kommunikationsfunktionen des Kommunikationsmoduls 300 spielt dies jedoch keine wesentliche Rolle. Allerdings ist die ergonomisch günstige Anordnung am Saugschlauch 15 vorteilhaft.

Zum Schalten der Extern-Kommunikationsvorrichtung 100 aus dem Arbeitsmodus in der Bereitschaftsmodus ist ein Anmelde-Bedienelement 316 vorgesehen. Das Anmelde-Bedienelement 316 umfasst beispielsweise einen Taster 317. Die Funktionen des Anmelde-Bedienelements 316 entsprechend denjenigen des Anmelde-Bedienelements 106, so dass der Bediener sozusagen ein gleiches Bedienkonzept vorfindet.

Dementsprechend ist auch eine Anzeigeeinrichtung 314 gleich oder ähnliche ausgestaltet wie die Anzeigeeinrichtung 114. Die Anzeigeeinrichtung 314 umfasst beispielsweise eine Leuchtanzeige, die Informationen in Zusammenhang mit der Herstellung und/oder dem Vorhandensein einer Steuerverbindung zwischen dem Kommunikationsmodul 300 und der Extern-Kommunikationsvorrichtung 100 signalisiert.

Wenn ein Bediener beispielsweise das Anmelde-Bedienelement 316 betätigt, insbesondere den Taster 317 drückt, sendet eine Kommunikationsschnittstelle 311, insbesondere eine Bluetooth-Schnittstelle, eine WLAN-Schnittstelle oder dergleichen, an die Kommunikationsschnittstelle 110 ein entsprechendes Steuersignal, insbesondere eine Schaltnachricht SN zum Schalten in den Bereitschaftsmodus. Dadurch wird die Extern-Kommunikationsvorrichtung 110 in einen Bereitschaftsmodus geschaltet, was die Anzeigeeinrichtung 314 signalisiert. Eine Betätigung des Anmelde-Bedienelements 316 führt also dazu, dass die Extern-Kommunikationsvorrichtung 100 vom Arbeitsmodus in den Bereitschaftsmodus schaltet. Zum Senden des Steuersignals ist vorzugsweise eine verschlüsselte und/oder authentifizierte Verbindung zwischen dem Kommunikationsmodul 300 und der Extern-Kommunikationsschnittstelle 110 vorgesehen.

Bei Betätigung des Schaltelements 334 sendet das Kommunikationsmodul 300 einen Startbefehl oder Einschaltbefehl für das Saugaggregat 75 an die Extern-Kommunikationsvorrichtung 100 und mithin an die Steuerungseinrichtung 86 des Staubsaugers 70. Anhand eines Schaltelements 335, beispielsweise eines Drehelements, eines Schiebeelements oder dergleichen, kann das Kommunikationsmodul 300 zum Senden eines Steuerbefehls an die Extern-Kommunikationsvorrichtung 100 und somit an den Staubsauger 70 senden, mit dem beispielsweise die Drehzahl des Saugaggregats 75 und/oder dessen Leistung einstellbar ist. Mithin ist kann das Kommunikationsmodul 300 als eine Fernsteuerung für das Saugaggregat 75 dienen. Auch für die Fernsteuerungsfunktionen ist eine gesicherte und/oder verschlüsselte Steuerverbindung zwischen dem Kommunikationsmodul 300 und der Extern-Kommunikationsvorrichtung 100 vorteilhaft.

Da das Kommunikationsmodul 300 eine Systemkomponente des Staubsaugers 70 bildet, ist eine Steuerverbindung vom Kommunikationsmodul 300 zur Extern-Kommunikationsvorrichtung 100 eine sozusagen dauerhafte Steuerverbindung. Eine derartige Steuerverbindung erfordert einen höheren Schwierigkeitsgrad zu ihrer Herstellung als eine Steuerverbindung zwischen einer Systemkomponente 11 oder 12 und dem Staubsauger 70. Dementsprechend ist beispielsweise das Anmelde-Bedienelement 106 und/oder 316 länger zu betätigen, um das Kommunikationsmodul 300 beim Staubsauger 70 bzw. der Extern-Kommunikationsvorrichtung 100 zu autorisieren oder anzumelden. Eine Anmeldeprozedur zur Herstellung einer Steuerverbindung zwischen einer der Systemkomponenten 11 oder 12, beispielsweise dem Energiespeichermodul 40 und der Extern-Kommunikationsvorrichtung 100 dagegen ist leichter herzustellen, beispielsweise anhand einer kürzeren Betätigung des Anmelde-Bedienelements 106 und/oder 316.

Die Werkzeugmaschinen 20A, 20B kommunizieren anhand der Energiespeichermodule 40A, 40B mit dem Staubsauger 70 und können diesen über Steuerverbindungen S1 und S2 ansteuern. Allerdings können Steuerbefehle über die Steuerverbindungen S1, S2 nicht unmittelbar, sondern erst nach einer vorherigen Anmeldung / Autorisierung der Werkzeugmaschinen 20A, 20B bei der Extern-Kommunikationsvorrichtung 100 gesendet werden. Mithin muss also die jeweilige Steuerverbindung S1, S2 zunächst hergestellt werden, bevor sie zur Übertragung von Steuerbefehlen und/oder Meldesignalen zwischen den voneinander entfernten Komponenten 20A, 70 bzw. 20B, 70 zur Verfügung steht.

Die Konfiguration ist dabei so getroffen, dass die Werkzeugmaschinen 20A, 20B nicht direkt drahtlos mit dem Staubsauger 70 kommunizieren, sondern anhand der ihnen zugeordneten und an sie angebauten Energiespeichermodule 40A, 40B. Allerdings ist durchaus möglich, dass die nachfolgend im Zusammenhang mit der Drahtlos-Kommunikationsschnittstelle 60 beschriebene Kommunikation auch mit einer bei der Werkzeugmaschine 20B realisierbar ist, nämlich beispielsweise direkt (nicht dargestellt), ähnlich wie die Steuerverbindung S2, oder indirekt über die Kommunikationsmodule 300B und 300C, wie noch deutlicher wird.

Grundsätzlich bilden die Energiespeichermodule 40A, 40B sozusagen Gateways für die Werkzeugmaschinen 20A, 20B für drahtlose Kommunikation, insbesondere in Steuerrichtung, d.h. von der Werkzeugmaschine 20A, 20B zum Staubsauger 70. Aber auch die umgekehrte Kommunikationsrichtung vom Staubsauger 70 zu den Werkzeugmaschinen 20A, 20B ist über die "Gateways" 40A, 40B möglich.

Damit diese Funktionen besonders einfach realisierbar sind, haben die Energiespeichermodule 20A, 20B eine Intelligenz derart, dass sie beispielsweise erkennen können, ob sie an ein die drahtlose Kommunikation mit dem Staubsauger 70 benötigendes oder diese überhaupt realisierendes Gerät angeschlossen sind oder an ein anderes Gerät, beispielsweise eine Werkzeugmaschine, die für den Staubsaugerbetrieb nicht geeignet ist, zum Beispiel ein Schraubgerät, eine Klebemaschine oder dergleichen. Insbesondere können die Energiespeichermodule 40A, 40B detektieren, ob sie mit dem Ladegerät 220 verbunden sind.

Das Ladegerät 220 sendet nämlich beispielsweise über die Busschnittstelle BU eine Abfragenachricht 700 an die Steuerungseinrichtung 46, mit der sie den aktuellen Ladezustand des Energiespeichers 42, den Zustand und/oder die maximale Ladespannung für die Speicherzellen 43, maximale Ladeströme oder dergleichen abfragt. Die Steuerungseinrichtung 46 antwortet mit einer Antwortnachricht 701, in der die entsprechenden Informationen gespeichert sind. Anhand der Qualität der Abfragenachricht 700, nämlich beispielsweise der Tatsache, dass eine Höhe eines maximal zulässigen Ladestroms abgefragt wird, kann das Energiespeichermodul 40 erkennen, dass es an eine Ladegerät angeschlossen ist und nicht an einen elektrischen Verbraucher in der Art der Werkzeugmaschine 20A oder 20B, der eine drahtlose Kommunikationsverbindung mit einem Staubsauger benötigt.

Aber auch andere Informationen können vom Energiespeichermodul 40 dazu ausgewertet werden, um den Anschluss an ein Ladegerät in der Art des Ladegerätes 220 zu erkennen. So ist beispielsweise eine Ladespannung UL, die vom Ladegerät 220 bereitgestellt wird, höher als eine Versorgungsspannung UV, die beim Anschluss eines elektrischen Verbrauches zwischen den Leitungen L1 und L2 oder den Versorgungskontakten 52A, 52B anliegt.

Die Steuerungseinrichtung 46 wird über die Busschnittstelle oder Datenschnittstelle 54 mit elektrischer Energie versorgt. Die an der Versorgungsleitung VD oder dem Datenkontakt 53A anliegende Versorgungsspannung UB2, welche vom Ladegerät 220 bereitgestellt wird, unterscheidet sich in ihrer Spannungshöhe von der Versorgungsspannung UB1, die die elektrische Handwerkzeugmaschine 220 am Datenkontakt 53A bereitstellt. Die Versorgungsspannung UB1 beträgt beispielsweise 3 Volt, die Versorgungsspannung UB2 5 Volt.

An der Datenschnittstelle 54 ist zur Erfassung der unterschiedlichen Spannungshöhen der Spannungen UB1 und UB2 beispielsweise eine Spannungsmesseinrichtung 61, insbesondere eine Spannungssensor, eine Widerstandsbeschaltung oder dergleichen vorgesehen, so dass die Steuerungseinrichtung 46 erkennen kann, ob sie an ein Ladegerät (Ladegerät 220) oder an einen elektrischen Verbraucher bzw. ein elektrische Werkzeugmaschine in der Art der Werkzeugmaschinen 20A, 20B angeschlossen ist.

Es ist möglich, dass die Steuerungseinrichtung 46 in Abhängigkeit davon, ob das Energiespeichermodul 40 an eine Werkzeugmaschine 20 oder an das Ladegerät 220 angeschlossen ist, einen Betriebsmodus der Drahtlos-Kommunikationsschnittstelle 60 ändert. Beispielsweise aktiviert die Steuerungseinrichtung 46 die Drahtlos-Kommunikationsschnittstelle 60, wenn das Energiespeichermodul 40 an eine Werkzeugmaschine 20 angeschlossen ist, während sie die Drahtlos-Kommunikationsschnittstelle 60 deaktiviert, wenn das Energiespeichermodul 40 an das Ladegerät 220 angeschlossen ist.

Es ist auch möglich, dass die Steuerungseinrichtung 46 die Drahtlos-Kommunikationsschnittstelle 60, wenn das Energiespeichermodul 40 an das Ladegerät 220 angeschlossen ist, nicht deaktiviert sondern den Kommunikationsmodus ändert. So kann die Drahtlos-Kommunikationsschnittstelle 60 beispielsweise zu einer Kommunikation mit der noch zu erläuternden Konfigurationseinrichtung 500, insbesondere einem Smartphone, aktiv bleiben, wenn das Energiespeichermodul 40 nicht an die Werkzeugmaschine 20 angeschlossen ist, beispielsweise mit dem Ladegerät 220 verbunden ist oder keine derartige Verbindung hat. Anhand der Konfigurationseinrichtung 500, beispielsweise des Smartphones, können beispielsweise Programmdaten oder dergleichen zu dem Energiespeichermodul 40 übertragen werden, auch wenn dieses nicht mit der Werkzeugmaschine 20 verbunden ist.

Wenn jedoch das Energiespeichermodul 40A oder 40B mit der Werkzeugmaschine 20A oder 20B verbunden ist, ist die drahtlose Kommunikation mit dem Staubsauger 70, insbesondere dessen Extern-Kommunikationsvorrichtung 100, problemlos und einfach möglich.

Ein Funktions- und Kommunikationsablauf 400 beginnt beispielsweise mit einer Bedienhandlung 401 eines Bedieners N. Der Bediener N des Systems 10 schließt beispielsweise den Staubsauger 70 an das Versorgungsnetz EV an oder betätigt den Schalter oder das Schaltelement 78 derart, dass der Staubsauger grundsätzlich betriebsbereit ist, also eine Funktion 410 "Zustand im Betrieb" hat.

Eine Steuerungseinrichtung 117 der Extern-Kommunikationsvorrichtung 100 schaltet daraufhin in einen Zustand 411, in welchem die Extern-Kommunikationsvorrichtung nach bereits zur Ansteuerung des Staubsaugers 70 autorisierten Geräten. Dieser Zustand 411 dauert beispielsweise eine vorbestimmte Zeit, insbesondere eine Minute oder zwei Minuten, worauf er wieder endet. Diese zeitliche Beschränkung ist eine Option, die das Risiko eines nicht autorisierten Zugriffs auf den Staubsauger 70 absenkt.

Zur Ausführung dieser Funktionalität und der nachfolgenden Funktionalitäten weist die Steuerungseinrichtung 116 beispielsweise einen Prozessor 117 zur Ausführung vom Programmcode eines Programmmoduls 119 auf, der in einem Speicher 118 der Extern-Kommunikationsvorrichtung 100 gespeichert ist.

Eine Funktion 412 des Programmmoduls 119 ermöglicht beispielsweise das Erfassen von Informationen des Anmelde-Bedienelementes 106. Wenn also der Bediener beispielsweise in einem Schritt 413 das Anmeldebedienelement 106 betätigt, insbesondere drückt, meldet dies die Funktion 412 anhand eines Ausgabebefehls 414 an den Bediener N zurück, indem sie nämlich die Anzeigeeinrichtung 114 dazu ansteuert, dass der Bediener sieht, dass die Extern-Kommunikationsvorrichtung 100 und somit der Staubsauger 70 zur Herstellung neuer Steuerverbindungen bereit ist. Die Extern-Kommunikationsvorrichtung 100 geht in einen Zustand 415, nämlich in einen Betriebsbereitschaftsmodus, in welchem eine Steuerverbindung mit der Extern-Konfigurationsvorrichtung 100 herstellbar ist.

Das Kommunikationsmodul 40 ist am Anfang des Funktions- und Kommunikationsablaufs 400 in einem Zustand 430 "Schlafen", also inaktiv. Ausgehend davon sind mehrere Szenarien zur Herstellung einer der Steuerverbindungen S1 oder S2 möglich, von denen nachfolgend eine erste beschrieben ist:
Der Bediener N betätigt beispielsweise das Schaltelement 24 der Werkzeugmaschine 20A, um diese einzuschalten. Noch ist die Werkzeugmaschine 20A bzw. das zugeordnete Energiespeichermodul 40A jedoch nicht zur Ausgabe von Schaltbefehlen oder Steuerbefehlen zum Einschalten des Saugaggregats 75 autorisiert. Eine derartige Anmeldung oder Autorisierung geschieht jedoch sozusagen automatisch, wenn der Bediener N lediglich das Schaltelement 24 betätigt.

Wenn der Bediener N das Schaltelement 24 betätigt, wird die Kommunikationsbeziehung zwischen der Werkzeugmaschine 20A und dem Energiespeichermodul 40A aktiv geschaltet und/oder hergestellt. Das Energiespeichermodul 40, also jedes der Energiespeichermodule 40A, 40B, erkennt an durch die Betätigung des Schaltelementes 24 ausgelösten Betriebsinformationen, dass ein zur Herstellung und Nutzung einer Steuerverbindung geeignetes Gerät an die Geräteschnittstelle 50 angeschlossen ist.

Das Energiespeichermodul 40 kann also beispielsweise anhand der Versorgungsspannung UV erkennen, dass ein elektrischer Verbraucher angeschlossen ist. Die Spannung UV unterscheidet sich von der Spannung UL des Ladegerätes 220.

Eine weitere Betriebsinformation kann beispielsweise auch die Versorgungsspannung UB1 sein, die von der Steuerungseinrichtung 26 an der Versorgungsleitung VD oder dem Datenkontakt 53a bereitgestellt wird. Die Versorgungsspannung UB1 unterscheidet sich von der Versorgungsspannung UB2 des Ladegerätes 220, ist insbesondere niedriger als diese. Somit bildet also auch die Versorgungsspannung UB1 einen Indikator für eine Betätigung des Schaltelementes 24.

Weiterhin kann eine Initialisierungskommunikation auf dem Bus BU von der Steuerungseinrichtung 46 als Indikator für die Aktivierung der Datenschnittstelle 54 durch ein den Staubsauger 70 ansteuerndes Gerät, also die Werkzeugmaschine 20A oder 20B (nachfolgend nur als Werkzeugmaschine 20 bezeichnet), ausgewertet werden. So kann beispielsweise eine Anfragenachricht 750 von der Steuerungseinrichtung 26 an die Steuerungseinrichtung 46 gesendet werden, mit der beispielsweise eine bereitstellbare Versorgungsspannung UV des Energiespeichermoduls 40 abgefragt wird. In der Anfragenachricht 750 können aber auch das elektrische Gerät bzw. die Werkzeugmaschine 20 identifizierende Daten enthalten sein, zum Beispiel eine Kennung 751, die die Werkzeugmaschine 20A, 20B als eine eine Staubabsaugung benötigende Werkzeugmaschine charakterisiert. Die Anfragenachricht 750 stellt beispielsweise eine Betriebsbereitschaftsinformation der Werkzeugmaschine 20 dar. Mit einer Antwortnachricht 752 beantwortet die Steuerungseinrichtung 46 die Anfragenachricht 750 und stellt die angefragten und/oder Informationen, beispielsweise Ladezustand des Energiespeichermoduls etc., zur Verfügung.

Ausgelöst also durch die Betätigung des Schaltelementes 24 sendet das Energiespeichermodul 40 über die Drahtlos-Kommunikationsschnittstelle 60 in einer Funktion 431, beispielsweise des Programmmoduls 419, im Rahmen eines Sendevorgangs 432 eine Anmeldenachricht 440 an die Extern-Kommunikationsvorrichtung 100.

Die Anmeldenachricht 440 umfasst beispielsweise eine Broadcast-Senderkennung 44x, d.h. eine Anmeldenachricht, die an mehrere grundsätzlich empfangsbereite Staubsauger, nicht nur den Staubsauger 70, gerichtet ist. Weiterhin ist in der Anmeldenachricht 440 optional ein Autorisierungsparameter 442 angegeben. Der Autorisierungsparameter 442 umfasst beispielsweise eine grundsätzliche Systemkompatibilität des Energiespeichermoduls 40 oder der Werkzeugmaschine 20 mit dem Staubsauger 70. Der Autorisierungsparameter 442 kann beispielsweise eine Herstellerkennung oder dergleichen umfassen.

Die Extern-Kommunikationsvorrichtung 100 empfängt mit einer Funktion 416 die Anmeldenachricht 440. Die Funktion 416 ist für eine vorbestimmte Zeitspanne aktiv, beispielsweise 500 msec bis 1000 msec, weil in dieser Zeit die Anmeldeprozedur mit dem anmeldenden Energiespeichermodul 40 abgeschlossen sein muss. Mit einer Anmeldebestätigungsnachricht 445 bestätigt, die Extern-Kommunikationsvorrichtung 100 die Anmeldung des Energiespeichermoduls 40. Die Anmeldebestätigungsnachricht 445 wird in einem Schritt oder Sendevorgang 417 versendet. Die Anmeldebestätigungsnachricht 445 umfasst beispielsweise die Adresskennung 446 des Energiespeichermoduls 40 als Absenderadresse. Optional können weitere Informationen 447 in der Anmeldebestätigungsnachricht 445 enthalten sein, beispielsweise ein Zugangsschlüssel, ein Passwort oder dergleichen. Die Informationen 447 können aber auch beispielsweise eine benötigte oder einzustellende Saugleistung des Saugaggregats 75 kennzeichnen oder dergleichen andere für den späteren Betrieb günstige Informationen.

Die Anmeldung des Energiespeichermoduls 40 bei der Extern-Kommunikationsvorrichtung 100 ist jedoch nur eine temporäre Anmeldung, die für einen aktuellen Betrieb notwendig ist. Dementsprechend ist vorteilhaft in der Anmeldenachricht 440 eine Temporärkennung 443 enthalten, so dass die Extern-Kommunikationsvorrichtung 100 sozusagen weiß, dass nur eine temporäre Anmeldung bzw. temporäre Steuerverbindung gewünscht ist.

An dieser Stelle wird auch ein Unterschied zur sozusagen dauerhaften Anmeldung beispielsweise des Kommunikationsmoduls 300 deutlich. Zur Anmeldung des Kommunikationsmoduls 300 ist nämlich eine umständlichere oder schwierigere Bedienhandlung des Bedieners N notwendig, nämlich beispielsweise ein längere Betätigung des Anmelde-Bedienelementes 106 als bei einer temporären Anmeldung. Bei einem Bereitschaftsmodus für eine dauerhafte Steuerverbindung oder Kommunikationsbeziehung gibt die Extern-Kommunikationsvorrichtung 100 beim Ausgabebefehl 414 ein gegenüber der Anmeldung für eine temporäre Steuerverbindung verschiedenes Signal zur Ausgabe an der Anzeigeeinrichtung 114, beispielsweise zu einem schnelleren Blinken der LEDs bzw. einem Blinken der LEDs mit kürzerer Frequenz. Schließlich gibt das Kommunikationsmodul 300 in einer mit der Anmeldenachricht 440 vergleichbaren Anmeldenachricht nicht die Temporär-Kennung 443 an, sondern eine Dauer-Kennung.

Wenn die Drahtlos-Kommunikationsschnittstelle 60 bzw. der Energiespeicher 40 erfolgreich bei dem Staubsauger 70 oder der Extern-Kommunikationsvorrichtung 100 angemeldet ist, gehen beide Komponenten in einen Zustand 418 "Verbunden". Auch das dauerhaft angemeldete Kommunikationsmodul 300 würde diesen Zustand einnehmen. Nachzutragen ist noch, dass die Funktion 431 vorteilhaft eine Zeitbegrenzung umfasst. Wenn nicht innerhalb einer vorbestimmten oder einstellbaren Zeit, beispielsweise 500 bis 1000 msec, nach Einschalten des Schaltelementes 24 und/oder nach Versenden der Anmeldenachricht 440 keine Anmeldebestätigungsnachricht 445 eintrifft, ist der Anmeldeversuch sozusagen gescheitert.

Ausgehend vom Zustand 418 "Verbunden" ist vorteilhaft eine Authentifizierungsprozedur und/oder eine Verschlüsselungsprozedur vorgesehen. Die nachfolgend etablierte Steuerverbindung S1 oder S2 soll nämlich vorteilhaft authentifiziert und/oder verschlüsselt vonstattengehen.

Beispielsweise sendet die Extern-Kommunikationsvorrichtung 100 mit einem Verschlüsselungsparameter 451. Wenn nämlich bereits eine frühere Verschlüsselung bzw. frühere Kommunikation zwischen der Extern-Kommunikationsvorrichtung 100 und einem der Energiespeichermodule 40A, 40B existiert hat, greift die Extern-Kommunikationsvorrichtung 100 auf bereits bestehende Parameter zurück. Beispielsweise sind in dem Speicher 118 der Extern-Kommunikationsvorrichtung die Adresskennung 446 sowie diesen zugeordnet der Verschlüsselungsparameter 451 von einer bereits früher existierenden Steuerverbindung zu dem Energiespeichermodul 40A, 40B gespeichert.

Exemplarisch ist erwähnt, dass auch andere Adresskennungen und zugeordnete Verschlüsselungsparameter in dem Speicher 118 gespeichert sein können, beispielsweise eine Adresskennung 446C der Drahtlos-Kommunikationsschnittstelle 60C sowie ein Verschlüsselungsparameter 451C für eine Steuerverbindung zwischen der Drahtlos-Kommunikationsschnittstelle 60C der Werkzeugmaschine 20B und der Extern-Kommunikationsvorrichtung 100.

An dieser Stelle sei noch erwähnt, dass die Extern-Kommunikationsvorrichtung 100 dann, wenn keine Verschlüsselungsparameter für das jeweilige Energiespeichermodul 40 bekannt sind, anhand einer Nachricht 455 den Verschlüsselungsparameter 451 oder einen neuen, anderen Verschlüsselungsparameter 456 versendet, so dass eine verschlüsselte Kommunikation zwischen den Komponenten 100, 40 möglich ist und somit der Zustand 421 "verschlüsselte Verbindung" erreicht wird.

Optional steuert die Extern-Kommunikationsvorrichtung 100, insbesondere deren Steuerungseinrichtung 116, die Anzeigeeinrichtung 114 an (Schritt 423A), so dass diese die vorhandene, verschlüsselte Verbindung signalisiert. Beispielsweise leuchtet dann die Anzeigeeinrichtung 114 dauerhaft.

Es ist auch möglich, dass bei einem Energiespeichermodul mehrere Adresskennungen und/oder Verschlüsselungsparameter gespeichert sind. So kann beispielsweise bei dem Energiespeichermodul 40 bzw. der Steuerungsvorrichtung 46 vorgesehen sein, dass sie Adressdaten und Verschlüsselungsdaten eines weiteren, in der Zeichnung nicht dargestellten Staubsaugers gespeichert hat, nämlich beispielsweise eine Adresskennung 441B und einen Verschlüsselungsparameter 451B dieses weiteren Staubsaugers. Somit kann auch das Energiespeichermodul 40 bei Bedarf sozusagen auf einen anderen Staubsauger unmittelbar zugreifen.

Zurückkommend auf den Funktions-Kommunikationsablauf 400 verläuft die weitere Kommunikation dann beispielsweise wie folgt:
In einer Funktion 433 "Einschalten" sendet das Energiespeichermodul 40 in einem Sendevorgang 434 beispielsweise die Steuerungseinrichtung 46 beispielsweise einen Steuerbefehl 460, welcher eine Einschaltkennung 461 enthält. Zudem aktiviert die Steuerungseinrichtung 46 in einem Aktivierungsschritt 435 die Anzeigeeinrichtung 44 zur Anzeige der etablierten Steuerverbindung S1 oder S2. Beispielsweise leuchten die Leuchten 445 dann blau oder in einem anderen Muster als zur Anzeige eines Ladezustandes.

Nach Erhalt des Steuerbefehls 460 steuert die Extern-Kommunikationsvorrichtung 100 beispielsweise die Steuerungseinrichtung 86 an, so dass diese in einem Schritt 422 das Saugaggregat 75 einschaltet. Zudem steuert die Extern-Kommunikationsvorrichtung 100, insbesondere deren Steuerungseinrichtung 116, die Anzeigeeinrichtung 114 an (Schritt 423), so dass diese das Einschalten des Saugaggregats 75 signalisiert. Beispielsweise leuchtet dann die Anzeigeeinrichtung 114 dauerhaft.

Wenn der Bediener N das Schaltelement 24 loslässt, wird beispielsweise der Stromfluss über den Antriebsmotor 22 beendet. Dies kann die Steuerungseinrichtung 46 erfassen, beispielsweise anhand eines entsprechenden Stromsensors 62. Auch die Versorgungsspannung oder Busspannung UB1 ist in diesem Fall niedriger oder kleiner. Weiterhin ist es möglich, dass das Energiespeichermodul 40 über die Datenschnittstellen oder Busschnittstellen 34, 54 eine Nachricht 753 "Motor ausgeschaltet" aktiv sendet. Eines oder mehrere dieser Auslöseereignisse, die durch den Bedienschritt 403 des Bedieners N ausgelöst werden, führen zu einer Funktion 436 "Ausschalten" des Energiespeichermoduls 40. Diese sendet dann in einem Sendevorgang 437 einen Steuerbefehl 462 zum Ausschalten des Saugaggregats 75, vorzugsweise nach einer vorbestimmten Nachlaufzeit für das Saugaggregat 75, wobei die Nachricht oder der Steuerbefehl 462 eine Ausschaltkennung 463 enthält. In der Ausschaltkennung 463 kann beispielsweise eine Nachlaufzeit für den Staubsauger 70 bzw. das Saugaggregat 75 angegeben sein.

Die Anfragenachricht 750 und die Nachricht 753 bilden Empfangsinformationen EM, die das Energiespeichermodul 40 an der Datenschnittstelle 54 empfängt, um in Abhängigkeit davon Sendesignale SII, nämlich beispielsweise die Anmeldenachricht 440 an der Drahtlos-Kommunikationsstelle 60 auszugeben.

Die Antwortnachricht 445 ist zum Beispiel ein Empfangssignal ESI, anhand dessen das Energiespeichermodul 40 an der Datenschnittstelle 54 die Antwortnachricht 752 als eine Sendeinformation SM ausgibt.

In einer Funktion 427 "Ausschalten" steuert die Kommunikationsvorrichtung 100 direkt oder unter Ansteuerung der Steuerungseinrichtung 86 das Saugaggregat 75 zum Abschalten und die Anzeigeeinrichtung 114 zur Anzeige der beendeten Ansteuerung an. Beispielsweise gibt die Funktion 427 einen Ansteuerungsbefehl 425 an das Saugaggregat 75 direkt oder über die Steuerungseinrichtung 86, nämlich die Datenschnittstellen 83 und 108.

Wenn das Schaltelement 24 der Werkzeugmaschine 20 wieder betätigt wird, kann das Energiespeichermodul 40 weitere nachfolgende Steuerbefehle 460 und 462 senden, um das Saugaggregat 75 einzuschalten und auszuschalten. Vorteilhafterweise ist vorgesehen, dass nach einer vorbestimmten Zeit die jeweilige Steuerverbindung zwischen Energiespeichermodul und Extern-Kommunikationsvorrichtung 100 beendet ist, so dass beispielsweise die Extern-Kommunikationsvorrichtung in einen Zustand 428 (entsprechend dem Zustand 411) übergeht und zur Herstellung einer Steuerverbindung autorisierte Geräte sucht. Das Energiespeichermodul 40 hingegen geht in einen Zustand 439, nämlich einen Zustand "Schlafen", entsprechend dem Zustand 430. Wenn die Steuerverbindung vom Energiespeichermodul 40 zur Extern-Kommunikationsvorrichtung 100 oder dem Staubsauger 70 beendet ist, gibt die Funktion 436 zweckmäßigerweise an der Anzeigeeinrichtung 44 diesen neuen Betriebszustand aus, beispielsweise indem die Anzeigeeinrichtung 44 anhand einer Ansteuerung in einem Deaktivierungsschritt 438 zur Signalisierung der beendeten Steuerverbindung angesteuert wird. Die Leuchten 45 leuchten dann beispielsweise nicht mehr blau, sondern grün und signalisieren den Ladezustand des Energiespeichers 42.

Weiterhin ist es möglich, dass die Werkzeugmaschine 20 eine Konfigurationsnachricht 754 über den Bus BU an das Energiespeichermodul 40 sendet. In der Konfigurationsnachricht 754 sind beispielsweise Konfigurationsdaten 755 zur Einstellung des Staubsaugers 70 angegeben, zum Beispiel eine notwendige Saugleistung des Saugaggregats 75, eine typische Partikelmenge in dem von der Werkzeugmaschine 20 erzeugten Staub etc. Das Energiespeichermodul 40 leitet diese Daten vorzugsweise über die Drahtlos-Kommunikationsschnittstelle stelle 60 an die Extern-Kommunikationsvorrichtung 100 zur Konfiguration des Staubsaugers 70 weiter, zum Beispiel als Konfigurationsnachricht 465. Die Extern-Kommunikationsvorrichtung 100 leitet die Konfigurationsdaten 755 an die Steuerungseinrichtung 86 zur weiteren Verarbeitung, insbesondere geeigneten Ansteuerung des Saugaggregats 75 weiter, z.B. anhand eines Sendevorgangs 437'.

Bevorzugt ist es, wenn die Steuerungseinrichtung 86 und/oder die Extern-Kommunikationsvorrichtung 100 die Konfigurationsdaten 755 dauerhaft und der jeweiligen Werkzeugmaschine 20A und 20B zugeordnet speichern, beispielsweise im Speicher 88 und/oder 118.

Weiterhin vorteilhaft ist es, wenn ein Bediener die gespeicherte Konfiguration sozusagen übersteuern kann, beispielsweise durch eine Betätigung der Bedienelementanordnung 77. So kann beispielsweise an einem Schaltelement 78A eine Saugleistung des Saugaggregats 75 einstellbar sein.

Möglich ist es, dass von einem Bediener am Staubsauger direkt eingestellte Saugparameter, insbesondere am Schaltelement 78A oder sonstigen Bedienelementen der Bedienelementanordnung 77 eingestellte Sauparameter, von der Steuerungseinrichtung 86 und/oder der Extern-Kommunikationsvorrichtung 100 dauerhaft und der jeweiligen Werkzeugmaschine 20A und 20B zugeordnet gespeichert werden, beispielsweise im Speicher 88 und/oder 118, wenn der Staubsauger aktuell durch die jeweilige Werkzeugmaschine angesteuert wird, beispielsweise eine der Werkzeugmaschinen 20A oder 20B. Bei diesem Szenario ist es zwar möglich, jedoch nicht unbedingt notwendig, dass die Konfigurationsdaten 755 oder Saugparameter drahtlos von der Werkzeugmaschine 20A oder 20B gesendet werden.

Eine Herstellung einer Steuerverbindung kann aber auch sozusagen automatisch dann geschehen, wenn ein Energiespeichermodul 40 und eine Werkzeugmaschine 20 miteinander verbunden werden. Nachfolgend wird dies am Beispiel eines der Energiespeichermodule 40 erläutert. Es ist aber auch möglich, dass beispielsweise die Drahtlos-Kommunikationsschnittstelle 60C in dieser Art sozusagen automatisch eine jeweilige Steuerverbindung zum Staubsauger 70 oder der Extern-Kommunikationsvorrichtung 100 herstellt, wenn die Energieversorgung durch das Energiespeichermodul 40 sozusagen beginnt bzw. dieses an der Geräteschnittstelle 30 angeordnet wird.

So können beispielsweise das Energiespeichermodul 40 und/oder die Werkzeugmaschine 20 Kapazitätssensoren 66, 36 aufweisen, mit denen Kapazitäten C1 und C2 zwischen den Versorgungskontakten 32A, 32B bzw. 52A, 52B messbar sind.

Die kapazitiven Verhältnisse ändern sich nämlich zwischen den Leitungen L1 und L2, also an den energieversorgenden Kontakten oder den energieversorgenden Leitungen dann, wenn ein jeweiliges Energiespeichermodul 40 an einer Werkzeugmaschine 20 befestigt ist. Die Sensoren 36, 66 sind mit den Steuerungseinrichtungen 26, 46 verbunden oder kommunizieren mit diesen. So kann also beispielsweise die Steuerungseinrichtung 46 dann, wenn der Sensor 66 erkennt, dass die Werkzeugmaschine 20 angeschlossen ist, also ein Betriebszustand erzielt ist, automatisch die Anmeldenachricht 440 senden.

Zur Erkennung eines Trennungszustands/oder eines Betriebszustandes zwischen einem Energiespeichermodul 40 und einer Werkzeugmaschine 20 und/oder einem Staubsauger kann mindestens eine, insbesondere ausschließlich, zur Überprüfung des Betriebszustands oder Trennungszustands vorgesehene Überprüfungsnachricht an einer Datenschnittstelle, beispielsweise der die Busschnittstelle BU, vorgesehen sein. Beispielsweise kann eine Art Ping-Nachricht dafür vorgesehen sein. Der Prozessor 27 und/oder ein speziell für den vorgenannten Zweck vorgesehener Prozessor 27A der Werkzeugmaschine 20 oder des Ladegeräts 220 können insbesondere zyklisch eine Überprüfungsnachricht CK senden, anhand derer das Energiespeichermodul 40 beispielsweise erkennt, dass es an die Werkzeugmaschine 20 oder das Ladegerät 220 angeschlossen ist oder keine Verbindung zu einem derartigen Gerät besteht. Es ist möglich, dass zum Empfang der Überprüfungsnachricht CK der Prozessor 47 oder ein speziell für diese Nachricht vorgesehener Prozessor 47A beim Energiespeichermodul 40 vorhanden ist. Der Prozessor 47 und/oder 47A kann als Antwort auf die Überprüfungsnachricht CK beispielsweise eine Antwortnachricht RP versenden.

Auch auf anderem Wege kann sensorisch erfasst werden, ob ein Energiespeichermodul 40 und eine Werkzeugmaschine 20 in einem Trennungszustand oder einem miteinander verbundenen Betriebszustand sind, wenn nämlich die Geräteschnittstellen 30, 50 miteinander verbunden sind.

So kann beispielsweise ein Sensor 58 eine Betätigung des Betätigungselementes 57 der Fixiereinrichtung 55 abtasten. Wenn ein Bediener das Betätigungselement 57 drückt, mithin also die Fixierung der Fixiereinrichtung 55 lösen will, wird dies als ein Übergang vom Betriebszustand in den Trennungszustand gewertet. Das Energiespeichermodul 40, insbesondere die Drahtlos-Kommunikationsschnittstelle 60, kann in diesem Fall beispielsweise die Steuerverbindung S1 oder S2 automatisch beenden. Dazu sendet die Drahtlos-Kommunikationsschnittstelle 60 beispielsweise einen entsprechenden Trennungsbefehl oder eine Trennungsnachricht. Besonders bevorzugt ist es, wenn durch Betätigung des Betätigungselementes 57 auch der Staubsauger 70 abgeschaltet werden kann, weil ja die Komponenten 20 und 40 voneinander getrennt werden. Beispielsweise sendet die Steuerungseinrichtung 46 bei Betätigung des Betätigungselementes 57, was durch den Sensor 58 erfassbar ist, den Steuerbefehl 462.

Es ist aber auch möglich, dass beispielsweise einer oder mehrere Bewegungssensoren vorgesehen sind, nämlich beispielsweise ein Bewegungssensor 59 beim Energiespeichermodul 40 und ein Bewegungssensor 59B bei der Werkzeugmaschine 20. Wenn die Bewegungssensoren 59, 59B gleichförmige Bewegungen signalisieren, können die Steuerungseinrichtungen 46, 26 dies miteinander kommunizieren und dadurch erkennen, dass der Energiespeicher 40 und die Werkzeugmaschine 20 im Betriebszustand, d.h. im aneinander befestigten Zustand, sind.

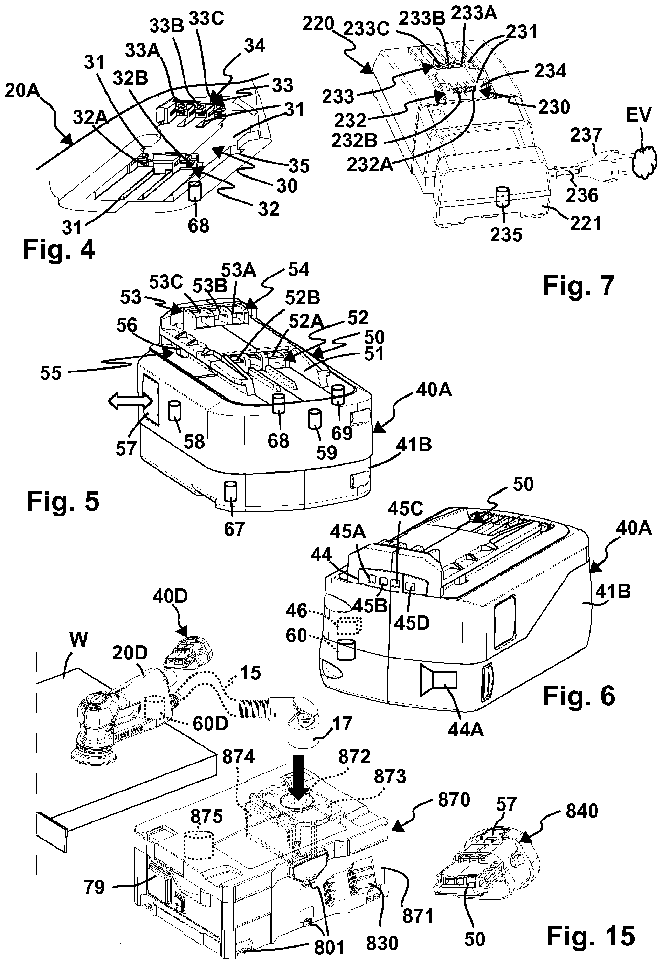

Weiterhin ist es möglich, dass beispielsweise ein optischer Sensor 68 oder ein sonstiger Näherungssensor erfasst, wenn die Geräteschnittstelle 30 an der Geräteschnittstelle 50 befestigt ist. Der optische Sensor oder Näherungssensor 68 ist beispielhaft beim Energiespeichermodul 40A gemäß Figur 5 eingezeichnet, könnte aber ohne weiteres auch an der Geräteschnittstelle 30 der Werkzeugmaschine 20 vorgesehen sein (siehe Figur 4).

Ähnlich wie die Näherungssensoren oder optischen Sensoren 68 (es können beispielsweise auch Ultraschall-Sensoren, magnetische Sensoren oder dergleichen, vorgesehen sein), wird auch ein elektrischer Schalter 68, insbesondere ein Druckschalter oder Tastschalter, dann betätigt, wenn die Steck-Formschlusskonturen 51 und 31 in Eingriff miteinander sind, d.h., wenn die Geräteschnittstellen 30, 50 mechanisch miteinander verbunden sind. Auch der elektrische Schalter 69 kann somit den Betriebszustand vom Trennungszustand der Geräteschnittstellen 30, 50 unterscheiden und dazu führen, dass die Drahtlos-Kommunikationsschnittstelle 60C oder das Energiespeichermodul 40, die Anmeldenachricht 440 senden.

Es ist auch möglich, dass das Energiespeichermodul 40 im Rahmen der Empfangsinformationen EM mindestens eine Statusinformation, insbesondere eine Fehlerinformation und/oder eine Schaltstellung eines Schalters, des elektrischen Geräts und/oder mindestens eine Identifizierungsinformation, zum Beispiel eine Seriennummer, des elektrischen Geräts, empfängt. So kann beispielsweise das Energiespeichermodul 40 eine Fehlerinformation als eine Statusinformation 29C und eine Identifizierungsinformation 29D, zum Beispiel einen eindeutigen Identifizierer oder eine Seriennummer der Werkzeugmaschine 20, von der Werkzeugmaschine 20 empfangen. Dabei ist es möglich, dass die Werkzeugmaschine 20 diese Empfangsinformationen EM spontan über die Datenschnittstelle 54 sendet, d. h. ohne vorherige Abfrage durch das Energiespeichermodul 40 bei der Werkzeugmaschine 20, oder dass das Energiespeichermodul 40 diese Empfangsinformationen EM bei der Werkzeugmaschine 20 abfragt. Die Fehlerinformation kann beispielsweise eine Überhitzung oder elektrische Überlastung der Werkzeugmaschine 20 repräsentieren. Die Identifizierungsinformation 29D kann auch eine Typkennung umfassen, sodass beispielsweise die Art der Werkzeugmaschine 20, insbesondere Schraubgerät, Sägemaschine oder dergleichen, anhand der Identifizierungsinformation 29D erkennbar ist.

Die vorgenannten Empfangsinformationen EM sind beispielsweise nicht sicherheitsrelevant oder geheim zu halten. Insbesondere dann ist es vorteilhaft, wenn das Energiespeichermodul 40 diese Empfangsinformationen EM im Rahmen einer Broadcast-Kommunikation oder Advertising-Kommunikation zyklisch oder periodische und/oder beim Übergang vom Trennungszustand in der Betriebszustand, d. h. beim Anschließen an die Werkzeugmaschine 20, insbesondere unverschlüsselt, versendet. Selbstverständlich kann auch eine verschlüsselte Kommunikation stattfinden, wenn beispielsweise Verschlüsselungsparameter zwischen dem Energiespeichermodul 40 und der Konfigurationsvorrichtung 500 oder einem sonstigen empfangenden Gerät bereits ausgetauscht sind. In allen vorgenannten Szenarien kann beispielsweise die Konfigurationsvorrichtung 500 die Identifizierungsinformation 29D und/oder die Statusinformation 29C von dem Energiespeichermodul 40 empfangen.

Der Staubsauger 70 kann wie erläutert eine oder mehrere Kommunikationsmodule 300 aufweisen. Die Anordnung mit mehreren Konfigurationsmodulen 300A, 300B und 300C ist optional, d.h. es könnte beispielsweise nur eines dieser Kommunikationsmodule vorgesehen sein oder gar keines. Dennoch würde der Staubsauger 70 funktionieren.

Die Kommunikationsmodule 300A können anhand ihrer Kommunikationsschnittstellen 311 dazu genutzt werden, eine Steuerverbindung aufrechtzuerhalten oder herzustellen. So kann beispielsweise eine Steuerverbindung S6 von der Hand-Werkzeugmaschine 20B oder dem Energiespeichermodul 40B zum Staubsauger 70 bzw. der Extern-Kommunikationsvorrichtung 100 hergestellt werden, die zumindest teilweise durch die Kommunikationsmodule 300B und 300C hergestellt und/oder aufrechterhalten wird.

So kann beispielsweise die Drahtlos-Kommunikationsschnittstelle 60C der Werkzeugmaschine 20A oder die Drahtlos-Kommunikationsschnittstelle 60 des Energiespeichermoduls 40B auf einem Abschnitt S61 zunächst mit dem Kommunikationsmodul 300 kommunizieren, beispielsweise um den Steuerbefehl 460 und/oder 462 zu senden, d.h. das Saugaggregat 75 einzuschalten und auszuschalten. Auf einem Kommunikationsabschnitt oder Verbindungsabschnitt S6.2 kommuniziert das Kommunikationsmodul 300 diese Information oder diesen Steuerbefehl zu dem Kommunikationsmodul 300B, welches seinerseits wiederum den empfangenen Steuerbefehl oder die empfangene Information auf einem Verbindungsabschnitt S63 an die Extern-Kommunikationsvorrichtung 100 oder den Staubsauger 70 weiterleitet. Da die Kommunikationsmodule 300B und 300C nur in kurzem Abstand zu den Systemkomponenten 20B / 40B einerseits und andererseits dem Staubsauger 70 bzw. der Kommunikationseinrichtung 100 angeordnet sind, sind die Verbindungsabschnitte S61 und S63 kurz. Dementsprechend kann die Sendeleistung der Extern-Kommunikationsvorrichtung 100 und der Drahtlos-Kommunikationsschnittstelle 60 / 60C besonders klein sein.

Insbesondere ist auf einem kurzen Übertragungsweg zwischen dem jeweiligen Kommunikationsmodul 300B und der Drahtlos-Kommunikationsschnittstelle 60, 60C oder dem Kommunikationsmodul 300C und der Extern-Kommunikationseinrichtung 100 nicht nur die Sendeleistung besonders gering, sondern auch der Sicherheitsaspekt besonders günstig. Beispielsweise können die Empfangsreichweiten der Kommunikationsmodle 300B und 300C derart kurz ausgestaltet sein, dass eine Störinformation eines Dritten oder ein störender Steuerbefehl gar nicht erst von den Kommunikationsmodulen 300B und 330C empfangen und weitergeleitet wird.

Selbstverständlich können die Kommunikationsmodule 300B und 300C auch vom Staubsauger 70 gesendete Informationen zu dem Energiespeichermodul 40B oder der Werkzeugmaschine 20B weiterleiten, d.h. sie können unidirektional entweder vom Staubsauger zur Werkzeugmaschine oder umgekehrt von der Werkzeugmaschine zum Staubsauger oder eben bidirektional arbeiten. Die Gateway-Funktion ist zweckmäßigerweise bidirektional. So kann der Staubsauger 70 beispielsweise über die Steuerverbindung S6, die in diesem Fall eine Meldeverbindung ist, beispielsweise einen Füllstand des Schmutzsammelraums 73 mitteilen, so dass gegebenenfalls die Werkezugmaschine 20B ihren Betrieb einstellt, wenn eine Staubabfuhr nicht mehr möglich ist.

Ohne weiteres können auch die Kommunikationsmodule 300A und 300B eine Gateway-Funktion in Zusammenhang mit der Werkzeugmaschine 22A und dem Staubsauger 70 in dieser Weise realisieren.

Es ist nicht unbedingt notwendig, dass für die Realisierung der Gateway-Funktion zwei Kommunikationsmodule vorgesehen sind, von denen eines näher beim Staubsauger und das andere näher bei der Werkzeugmaschine oder deren Energiespeichermodul angeordnet ist. Beispielsweise ist es möglich, dass ein Kommunikationsmodul 300, beispielsweise das Kommunikationsmodul 300A, als Gateway zwischen der Extern-Kommunikationsvorrichtung 100 und dem Energiespeichermodul 40A dient.

Auch bei der Herstellung von Kommunikationsbeziehungen und insbesondere Steuerverbindungen können die Kommunikationsmodule 300 unterstützen. Weiterhin kann auf die nachfolgende Weise ein Kommunikationsmodul 300 auch für die steuernde oder kommunizierende Drahtlosverbindung mit der Extern-Kommunikationsvorrichtung 100 autorisiert werden.

Beispielsweise hat die Extern-Kommunikationsvorrichtung 100 eine Kommunikationsschnittstelle 109 nach einem zweiten Standard, der sich von der Kommunikationsschnittstelle 110 unterscheidet. Beispielsweise handelt es sich bei dem ersten Standard der Kommunikationsschnittstelle 110 um einen Bluetooth-WLAN oder dergleichen anderen Standard, während der zweite Standard der Kommunikationsschnittstelle 109 für eine Nahfeld-Kommunikation ausgerichtet ist, beispielsweise eine RFID-Kommunikationsschnittstelle ist oder eine NFC-Kommunikationsschnittstelle ist.

Auch weitere Komponenten des Systems 10 haben zweckmäßigerweise weitere Kommunikationsschnittstellen diese zweiten Standards. So ist beispielsweise bei dem Kommunikationsmodul 300 eine derartige Kommunikationsschnittstelle 318 vorhanden. Auch das Energiespeichermodul 40 kann eine derartige Kommunikationsschnittstelle des zweiten Standards haben, nämlich eine Kommunikationsschnittstelle 67. Schließlich kann die Kommunikationsschnittstelle des zweiten Standards auch direkt am oder im Saugergehäuse 71 vorgesehen sein, insbesondere als eine Kommunikationsschnittstelle 84.

Die Kommunikationsschnittstellen des zweiten Standards, beispielsweise des Nahfeld-Kommunikationsstandards, dienen dazu, Kommunikationsparameter zu speichern und/oder zu übertragen, die für die Steuerverbindungen oder Meldeverbindung S1, S2 notwendig sind. Auch Steuerverbindungen S3 und S4 der Kommunikationsmodule 300A und 300B, mit denen diese den Staubsauger 70 ansteuern, beispielsweise das Saugaggregat 75 einschalten und ausschalten, können auf diesem Wege sozusagen autorisiert oder parametriert werden. Schließlich kann auf die Gateway-Funktion, d.h. die Steuerverbindung S6, anhand der Kommunikationsschnittstellen des zweiten Standards eingestellt werden.

Nachfolgend werden einige Varianten vorgestellt:
Beispielsweise sind bei der Kommunikationsschnittstelle 84 und/oder Kommunikationsschnittstelle 109 als Kommunikationsparameter 85 die Adresskennung 441 des Staubsaugers 70 und der Verschlüsselungsparameter 451 gespeichert, die zur Herstellung einer Steuerverbindung mit dem Staubsauger 70 oder der Extern-Kommunikationsvorrichtung 100 notwendig sind. Wenn eines der Kommunikationsmodule 300A, 300B oder 300C mit seiner Kommunikationsschnittstelle 318 in den Sendebereich der Kommunikationsschnittstelle 109 und/oder der Kommunikationsschnittstelle 84 gelangt, kann es die Kommunikationsparameter 85 auslesen. Auch die umgekehrte Vorgehensweise ist möglich, dass beispielsweise die Kommunikationsparameter des Kommunikationsmoduls 300 bei diesem gespeichert sind und durch eine oder beide der Kommunikationsschnittstellen 109, 84 auslesbar sind.

Auf diese Weise können aber auch die Drahtlos-Kommunikationsschnittstellen 60 oder 60C konfiguriert werden. So kann beispielsweise die Kommunikationsschnittstelle 37 der Werkzeugmaschine 20 die Kommunikationsparameter 85 auslesen, wenn sie in der Nähe der Kommunikationsschnittstelle 84 ist. Auch ein jeweiliges Energiespeichermodul 40 kann anhand seiner Kommunikationsschnittstelle 67 die Kommunikationsparameter 85 von der Kommunikationsschnittstelle 84 und/oder 109 auslesen bzw. von dieser empfangen.

Zur Herstellung einer Steuerverbindung des Kommunikationsmoduls 300 und/oder des Energiespeichermoduls 40B zur Extern-Kommunikationsvorrichtung 100 kann auch beispielsweise eine Kommunikationsschnittstelle 909 in Gestalt beispielsweise eines NFC-Senders oder RFID-Senders realisiert werden. Die Kommunikationsschnittstelle 909 ist beispielsweise am Längsendbereich 17 des Saugschlauchs 15 angeordnet. Beispielsweise umfasst die Kommunikationsschnittstelle 909 Kommunikationsparameter für den ersten Standard, die von einer entsprechenden lesenden Kommunikationsschnittstelle 910 des Staubsaugers 70 oder 870 auslesbar ist. Bei der Kommunikationsschnittstelle 909 kann es sich beispielsweise um einen RFID-Tag, NFC-Tag oder dergleichen handeln. Bei der Kommunikationsschnittstelle 909 können auch weitere Parameter 911 gespeichert sein, zum Beispiel eine Schlauchgeometrie des Saugschlauchs 15, insbesondere dessen Länge und/oder Durchmesser etc., wobei diese weiteren Parameter 911 durch die Kommunikationsschnittstelle 910 auslesbar sind.

Es ist weiterhin möglich, dass eine oder mehrere der Kommunikationsschnittstellen des zweiten Standards sozusagen als Transfer-Kommunikationsparameter dienen. Beispielsweise kann das Kommunikationsmodul 300B die Kommunikationsparameter 85 direkt am Saugergehäuse 71 auslesen, nämlich an der Kommunikationsschnittstelle 84 und/oder 109, und diese dann zu der Werkzeugmaschine 20B und/oder dem Energiespeichermodul 40B übertragen. Das Kommunikationsmodul 300B ist in diesem Fall sozusagen ein Zwischenspeicher für die Kommunikationsparameter 85.

Eine weitere Möglichkeit, die Extern-Kommunikationsvorrichtung 100 bzw. den Staubsauger 70 in den Bereitschaftsmodus zur Herstellung einer Steuerverbindung zu schalten, wird beispielsweise durch einen Beschleunigungssensor oder Bewegungssensor 312 realisiert. Der Beschleunigungssensor 312 sendet Beschleunigungssignale an die Steuerungseinrichtung 336, welche anhand der Bewegungssignale oder Meldesignale des Beschleunigungssensors 312 eine typische Ansteckbewegung oder Montagebewegung des Saugschlauchs 15 an der Handwerkzeugmaschine 20A, 20B erkennt. Beispielsweise erkennt die Steuerungseinrichtung 336 anhand des Beschleunigungssensors 312 eine typische Steckbewegung, die eine Linearbewegung und/oder Rotationsbewegung darstellt, die eine vorbestimmte Länge hat, nämlich den Steckweg beim Anstecken des Saugschlauchs 15 an einen der Saugauslässe 39.

Weiterhin ist es möglich, dass anhand eines weiteren Bewegungssensors, der an Bord des Energiespeichermoduls oder der Werkzeugmaschine ist, ein Bewegungsmuster erkannt wird. So kann beispielsweise der Bewegungssensor 59 des Energiespeichermoduls 40 ein Bewegungsmuster erfassen und dieses über die Drahtlos-Kommunikationsschnittstelle 60 an das Kommunikationsmodul 300 übertragen. Das Kommunikationsmodul 300 vergleicht das Bewegungsmuster des Bewegungssensors 59 mit einem Bewegungsmusters des Bewegungssensors oder Beschleunigungssensors 312. Sind beide Bewegungsmuster identisch, ist dies in Indiz dafür, dass der Saugschlauch 15 an der Werkzeugmaschine 20 befestigt ist oder befestigt wird, beispielsweise wenn die Bewegungsmuster gleich gerichtet, jedoch gegenläufig sind. Anhand dieser Information kann das Kommunikationsmodul 300 beispielsweise die Steuerverbindung S1 oder S2 aufbauen. Die Erkennung des Bewegungsmusters des Beschleunigungssensors 312 und/oder 59 kann also beispielsweise die Herstellung einer jeweiligen Steuerverbindung S1 oder S2 und/oder die Pairing-Funktion auslösen, insbesondere das Senden der Anmeldenachricht 360.

Zur Konfiguration und/oder Steuerung kann auch ein außerhalb des Systems Werkzeugmaschine, Energiespeichermodul, Saugschlauch und Staubsauger stehendes Gerät zum Einsatz kommen, nämlich beispielsweise eine Konfigurationsvorrichtung 500. Die Konfigurationsvorrichtung 500 ist beispielsweise ein Computer, insbesondere ein Smartphone, eine Smartwatch, ein Tablet-Computer oder dergleichen. Die Konfigurationsvorrichtung 500 weist ein Gehäuse 501 auf, welche mobil und unabhängig vom Saugschlauch 15 und Staubsauger 70 ist. Das Gehäuse 501 ist weiterhin nicht Bestandteil einer der Werkzeugmaschinen 20 oder der Energiespeichermodule 40. Denkbar wäre aber, dass beispielsweise an dem Staubsauger 70 eine Modulaufnahme 96 vorhanden ist, in die die auch als Fernbedienung geeignete Konfigurationsvorrichtung 500 einsteckbar ist. Die Konfigurationsvorrichtung 500 weist eine Anzeigeeinrichtung 502 sowie Eingabemittel 503 zur Ausgabe von Informationen für den Bediener N sowie zur Eingabe von Befehlen. Die Eingabemittel 503 können Bestandteil der Anzeigeeinrichtung 502 sein, beispielsweise in der Art eines Touchpads.

Die Konfigurationseinrichtung 500 weist eine Steuerungseinrichtung 506 mit einem Prozessor 507 sowie einem Speicher 508 auf. Im Speicher 508 sind eines oder mehrere Programmodule 509 gespeichert, deren Programmcode vom Prozessor 507 ausführbar ist. Weiterhin ist in dem Speicher 508 ein Konfigurationsmodul 510 gespeichert, welches zur Konfiguration der Steuerverbindungen S1 - S4 geeignet sein kann. Das Konfigurationsmodul 510 weist Programmcode auf, der vom Prozessor 507 ausführbar ist. Die Konfigurationsvorrichtung 500 kann in der Art der Kommunikationsmodule 300 den Staubsauger 70 direkt ansteuern. Dazu ist beispielsweise eine Kommunikationsschnittstelle 511 vorgesehen, insbesondere eine Bluetooth-Schnittstelle, WLAN-Schnittstelle oder dergleichen, die direkt mit der Extern-Kommunikationsvorrichtung 100 kommunizieren kann. Beispielsweise ist eine Eingabe an den Eingabemitteln 503 in der Art einer Betätigung eines der Anmelde-Bedienelemente 316 oder 106, möglich. Die Konfigurationsvorrichtung 500 führt dann beispielsweise Programmcode des Konfigurationsmodules 510 aus, um die Extern-Kommunikationsvorrichtung 100 in den Bereitschaftsmodus zu schalten, in welchem die Energiespeichermodule 40 oder die Werkezugmaschine 20 zur Herstellung der Steuerverbindung autorisierbar sind.

Weiterhin weist die Konfigurationsvorrichtung 500 zweckmäßigerweise eine Konfigurationsschnittstelle 512 mit dem zweiten Standard auf, beispielsweise eine RFID-Schnittstelle. Somit kann die Konfigurationsvorrichtung 500 beispielsweise die Konfigurationsparameter 85 auslesen und/oder senden.

An dieser Stelle sei noch nachgetragen, dass selbstverständlich die Werkzeugmaschinen 20 mit ihren Kommunikationsschnittstellen 37 des weiten Standards und/oder die Energiespeichermodule 40 mit ihren Kommunikationsschnittstellen 67 unmittelbar in die Nähe des Saugergehäuses 71 und/oder der Extern-Kommunikationsvorrichtung 100 gebracht werden können, um die Kommunikationsparameter 85 auszulesen und/oder ihre Kommunikationsparameter dorthin zu senden.

An dieser Stelle sei noch nachgetragen, dass selbstverständlich die Werkzeugmaschinen 20 mit ihren Kommunikationsschnittstellen 37 des weiten Standards und/oder die Energiespeichermodule 40 mit ihren Kommunikationsschnittstellen 67 unmittelbar in die Nähe des Saugergehäuses 71 und/oder der Extern-Kommunikationsvorrichtung 100 gebracht werden können, um die Kommunikationsparameter 85 auszulesen und/oder ihre Kommunikationsparameter dorthin zu senden. Somit bilden auch die Werkzeugmaschinen 20 und die Energiespeichermodule 40 ebenso wie der Staubsauger 70 Konfigurationsmodule mit einer jeweils einer Kommunikationsschnittstelle des ersten und des zweiten Kommunikationsstandards.

Weiterhin eignet sich die Konfigurationsvorrichtung 500 beispielsweise dazu, eine Software oder mindestens eine Programmmodul, Konfigurationsdaten oder dergleichen in eines der Energiespeichermodule 40 und/oder eine der Werkzeugmaschinen 20 zu laden. Die Drahtlos-Kommunikationsschnittstellen 60, 60C kommunizieren dabei vorzugsweise direkt mit der Kommunikationsschnittstelle 511 der Konfigurationsvorrichtung 500. Auf diesem Wege kann beispielsweise ein Programmodul 49 zu einem Energiespeichermodul 40 oder ein Programmodul 29 zu einer Werkzeugmaschine 20 übertragen werden. Weiterhin können so beispielsweise Konfigurationsdaten 29A, zum Beispiel Betriebsparameter und/oder Maschineneinstellungen (Maximaldrehzahlen, maximale Leistungen, Nutzungsdauer-Begrenzungen oder dergleichen), für die Werkzeugmaschine 20 übertragen werden. Ein Programmodul 29 kann direkt beispielsweise über die Kommunikationsschnittstelle 60 zu der Werkzeugmaschine 20 oder indirekt über ein Energiespeichermodul 40, also dessen Drahtlos-Kommunikationsschnittstelle 60, und über die miteinander kommunizierenden Datenschnittstellen 34, 54 vom Energiespeichermodul 40 weiter zur Werkzeugmaschine 20, insbesondere deren Steuerungseinrichtung 26 übertragen werden.

Selbstverständlich ist auch eine Gateway-Funktion einer Werkzeugmaschine zum Energiespeichermodul hin möglich, d.h. dass beispielsweise die Drahtlos-Kommunikationsschnittstelle 60C ein Programmodul 49 für ein Energiespeichermodul 40 empfängt und über die Datenschnittstellen 34, 54 an das Energiespeichermodul 40 überträgt.

In umgekehrter Richtung können beispielsweise von dem Energiespeichermodul 40 Daten der Werkzeugmaschine 20 empfangen und an die Konfigurationsvorrichtung 500 übertragen werden, so zum Beispiel Protokolldaten 29B, insbesondere Daten eines Fehlerspeichers, einer Log-Datei oder dergleichen. In dem Fehlerspeicher können beispielsweise beim Betrieb der Werkzeugmaschine 20 aufgetretene Fehler, insbesondere Temperaturüberschreitungen oder dergleichen, enthalten sein. Die Log-Datei enthält beispielsweise Daten über die Nutzung der Werkzeugmaschine 20. Unter Nutzung des Energiespeichermoduls 40, das sozusagen als Gateway arbeitet, können beispielsweise Nutzungsdauer, Fehlersituationen oder dergleichen aus der Werkzeugmaschine 20 anhand der Konfigurationsvorrichtung 500 ausgelesen werden. Die Werkzeugmaschine 20 braucht keine eigene Funkschnittstelle oder sonstige Drahtlos-Schnittstelle.

Auf den Steuerverbindungen S1 - S6 können steuernde Informationen versendet werden, beispielsweise Schaltbefehle für das Saugaggregat 75, Staubklasse, Drehzahlstellung, Leistungsaufnahme, Anpressdruck und Partikelaufkommen oder Staubaufkommen einer jeweiligen Werkzeugmaschine 20. Ferner ist eine Konfiguration des Staubsaugers 70 möglich, d.h. dass über eine oder mehrere der Steuerverbindungen S1 - S6 Konfigurationsdaten oder Meldedaten von der Werkzeugmaschine 20 und/oder der Energiespeichermodule 40 zum Staubsauger 20 übertragen werden, beispielswiese Nachlaufzeit nach Ausschalten des Saugaggregats, benötigte Leistung des Saugaggregats oder dergleichen.

Die Konfigurationsvorrichtung 500 könnte sich gemäß dem Funktions- und Kommunikationsablauf 400 temporär bei der Extern-Kommunikationsvorrichtung 100 anmelden. Bevorzugt ist jedoch eine dauerhafte Anmeldung in der Art der Kommunikationsmodule 300. Zur Autorisierung bzw. Anmeldung der Konfigurationsvorrichtung 500 beim Staubsauger 70 oder der Extern-Kommunikationsvorrichtung 100 ist beispielsweise das Anmelde-Bedienelement 106 lange zu drücken. Auf diesem Wege wird sichergestellt, dass nur ein autorisiertes und berechtigtes Gerät angemeldet ist.

Nachfolgend wird noch ein Priorisierungs- und Sicherungskonzept vorgestellt:
Zu einer vorrangigen Ansteuerung des Staubsaugers 70 sind die dauerhaft bei dem Staubsauger 70 zur Steuerung angemeldeten Komponenten des Systems 10 vorgesehen, z.B. die netzgebundene Werkzeugmaschine 20C und die die Kommunikationsmodule 300 sowie die Konfigurationsvorrichtung 500. Wenn von einer dieser Komponenten ein Einschaltsignal oder Ausschaltsignal für das Saugaggregat 75 kommt, wird dies von dem Staubsauger 70, insbesondere dessen Steuerungseinrichtung 86, vorrangig vor einem entsprechenden Steuerbefehl der mit Energiespeichermodul 40 ausgestatten Werkzeugmaschinen 20A und 20C behandelt.

Weiterhin ist eine Bedienung an einem der Bedienelemente der Bedienelementanordnung 77 vorrangig. Wenn also beispielsweise das Schaltelement 78 betätigt wird, ist jede andere Steuerverbindung nachrangig.

Bei den Fernbedienungen, also beispielsweise den Kommunikationsmodulen 300 oder der Konfigurationsvorrichtung 500, ist eine Eins-zu-eins-Beziehung zu dem Staubsauger 70 vorgesehen. Somit kann eine Fernbedienung nicht irrtümlich einen anderen Staubsauger ansteuern. Ebenfalls ist immer vorteilhaft, wenn immer nur eine Werkzeugmaschine mit Energiespeichermodul beim Staubsauger 70 autorisiert und kann diesen ansteuern. Sobald eine weitere oder andere Werkzeugmaschine autorisiert wird, wird die Autorisierung der vorher autorisierten Maschine gelöscht. Somit ist also immer nur eine der Steuerverbindungen S1 oder S2 beim konkreten Ausführungsbeispiel möglich.

Anstelle der Stromerfassung der Steckdose 79 oder in Ergänzung dazu könnte auch eine Druckluft-Erfassung vorgesehen sein. Somit kann beispielsweise ein mit Druckluft betriebenes Gerät, beispielsweise eine Schleifmaschine oder Poliermaschine, an den Staubsauger 70 angeschlossen werden. Wird diese eingeschaltet oder ausgeschaltet, läuft das Saugaggregat 75 oder wird wieder ausgeschaltet. Ein entsprechender Druckluftsensor ist in diesem Fall an der Anschlusseinrichtung vorhanden. Die Anschlusseinrichtung kann eine Durchfluss-Einrichtung sein, d.h. dass Druckluft einerseits in den Staubsauger 70 eingespeist und andererseits von der in der Zeichnung nicht dargestellten Druckluftmaschine sozusagen abgegriffen wird. Wird eine Druckluftmaschine oder Netzmaschine (Werkzeugmaschine 20C) eingeschaltet und ist mit dem Staubsauger 70 verbunden, hat dies höchste Priorität. Eine mittlere Priorität haben die Kommunikationsmodule 300 und die Konfigurationsvorrichtung 500 ebenso wie das Schaltelement 78.

Die niedrigste Priorität haben die Akkumaschinen bzw. mit Energiespeichermodulen versehenen Werkezeugmaschinen 20A, 20C.

Zur Aufhebung einer Autorisierung bzw. zum Beenden einer Steuerverbindung S1 - S6 kann vorteilhaft vorgesehen sein, dass dies durch eine Beendigung der jeweiligen Energieversorgung ausgelöst wird. Wenn also beispielsweise ein Energiespeichermodul 40A, 40B von der der Werkzeugmaschine 20A, 20B getrennt wird, werden die Steuerverbindungen S1 oder S2 automatisch beendet. Auch beim Entfernen der Energieversorgung 310 des Konfigurationsmoduls 300 wird automatisch die Autorisierung bei dem Staubsauger 70 aufgehoben. Vorteilhaft ist es dabei, wenn das Energiespeichermodul 40 oder die Werkzeugmaschine 20 bei einer derartigen Trennung noch einen Schaltbefehl zum Ausschalten des Saugaggregats 75 sendet.

Eine Fernbedienung, beispielsweise das Kommunikationsmodul 300 oder die Konfigurationsvorrichtung 500, meldet sich zweckmäßigerweise mit einer neuen Identität bei der Extern-Kommunikationsvorrichtung 100 oder der Drahtlos-Schnittstelle 60 an, wenn die Energieversorgung beendet ist, beispielsweise die Energieversorgung 310 entfernt wurde. Somit kann beispielsweise eine neue Verschlüsselung eingerichtet werden. Wenn eine neue Identität vorhanden ist, d.h. beispielsweise eine neue Adresskennung vorhanden ist, sind beide Kommunikationspartner bereit, neue Verschlüsselungsparameter auszuhandeln. Wenn miteinander konkurrierende Drahtlos-Kommunikationsschnittstellen 60, 60C eine Steuerverbindung mit dem Staubsauger 70 oder der Extern-Kommunikationsvorrichtung 100 herstellen wollen, wird beispielsweise die jeweils erste sich anmeldende Drahtlos-Kommunikationsschnittstelle 60 akzeptiert. Wenn also beispielsweise das Schaltelement 24 der Werkzeugmaschine 20A vor dem Schaltelement 24 der Werkezugmaschine 20C während des Bereitschaftsmodus der Extern-Kommunikationsvorrichtung 100 gedrückt wird, wird die Steuerverbindung S1 vorranging hergestellt.

Weiterhin ist es vorteilhaft, dass bei konkurrierenden Maschinen diejenige die Steuerverbindung herstellen kann, welche näher bei der empfangenden Extern-Kommunikationsvorrichtung 100 ist. Im Ausführungsbeispiel gemäß Figur 1 könnte beispielsweise dies das Energiespeichermodul 40A sein, welches die Steuerverbindung S1 herstellen will. Beispielsweise kann die Drahtlos-Kommunikationsschnittstelle 60 in die Anmeldenachricht 440 eine Signalstärkeninformation 448 mit der Signalstärke schreiben, mit der sie die Anmeldenachricht 440 sendet.

Anhand eines die Signalstärke messenden Sensors 111 kann die Extern-Kommunikationsvorrichtung 100 die Stärke des Signals, mit der die Anmeldenachricht 440 empfangen wird, messen und mit der Signalstärkeninformation 448 vergleichen. Daraus lässt kann die Steuerungseinrichtung 86 dann ein Wert für einen Abstand zwischen den Komponenten 40A und 100 ermitteln.

Die Drahtlos-Kommunikationsschnittstelle 60C oder das Energiespeichermodul 40B sind jedoch weiter von der Extern-Kommunikationsvorrichtung 100 entfernt, werden also nachrangig behandelt.

Es ist auch möglich, dass keine Signalstärkeinformation 448 in der Anmeldenachricht 440 enthalten ist. In dieser Situation kann der Sensor 111 die Signalstärke der Anmeldenachricht 440 beispielsweise mit einem Schwellwert vergleichen.

Weiterhin ist es möglich, dass der Sensor 111 beispielsweise die Signalstärken der Anmeldenachrichten 440 der Energiespeichermodule 40A und 40B direkt miteinander vergleicht und ausschließlich oder früher, d. h. mit einer kürzeren Antwortzeit, auf diejenige Anmeldenachricht 440 reagiert, die eine größere Signalstärke aufweist.

Eine Priorisierung von näher bei der Extern-Kommunikationsvorrichtung 100 angeordneten Kommunikationspartnern kann beispielsweise vorsehen, dass die Extern-Kommunikationsvorrichtung 100 unterschiedliche Antwortzeiten einstellt. Das ist in Figur 16 angedeutet. Beispielsweise ist eine Antwortzeit AS(t) in Abhängigkeit von einer Signalstärke S, die der Sensor 111 misst, größer oder kleiner. So kann beispielsweise die Extern-Kommunikationsvorrichtung 100 auf die Anmeldenachricht 440 des Energiespeichermoduls 40A, welche eine größere Signalstärke aufweist, schneller reagieren und eine Antwortnachricht senden, beispielsweise die Anmeldebestätigungsnachricht 445, als auf eine entsprechende Anmeldenachricht 440 des Energiespeichermoduls 40B.

Bevorzugt ist es, wenn die im Speicher 118 der Extern-Kommunikationsvorrichtung 100 gespeicherten Kommunikationsparameter, beispielsweise die Adresskennungen 446 und 446C und die zugeordneten Verschlüsselungsparameter 451, 451C, nach einem vorbestimmten Zeit und/oder nach vollständiger Trennung des von einer Energieversorgung gelöscht werden. Auch bei dem mobilen Gerät, nämlich beispielsweise dem Energiespeichermodul 40A, 40B, ist es vorteilhaft, wenn die Kommunikationsparameter aus dem Speicher 48 nach einem vorbestimmten Zeit und/oder nach dem Trennen einer Energieversorgung gelöscht werden.

Weiterhin ist es möglich, dass eine Autorisierung eines mobilen Geräts, nämlich einer Werkzeugmaschine 20 oder eines Energiespeichermoduls 40, bei der die Extern-Kommunikationsvorrichtung gelöscht wird, d.h. dass die Steuerverbindungen S1, S2 als gelöscht gelten, wenn zwar die jeweilige Werkzeugmaschine 20, deren Energiespeichermodul 40 den Staubsauger 70 eingeschaltet hat, jedoch eine andere Funktion, beispielsweise das Schaltelement 78 oder die Netz-Werkzeugmaschine 20C den Stausauger wieder ausgeschaltet hat.

Weiterhin ist es zweckmäßig, wenn die Kommunikationsparameter bei einem mobilen Gerät, welches eine Steuerverbindung aufbauen kann, in Zusammenhang mit einem Ladevorgang zurückgesetzt werden, wenn also beispielsweise das Energiespeichermodul 40 an das Ladegerät 220 angeschlossen wird, werden die Parameter 441, 451, gelöscht.

Durch eine entsprechende Betätigung des Anmelde-Bedienelements 316 des Kommunikationsmoduls 300, beispielsweise ein entsprechend langes Drücken, kann auch eine Drahtlos-Kommunikationsverbindung zwischen dem Kommunikationsmodul 300 und der Konfigurationsvorrichtung 500 hergestellt werden, z.B. für einen Software-Update oder dergleichen.

Ein in der Figur 15 dargestelltes System umfasst eine Werkzeugmaschine 20D, welche eine netzgebundene Werkzeugmaschine oder mit einem Energiespeichermodul 40D betreibbare Werkzeugmaschine ist. Das Energiespeichermodul 40D sowie ein weiteres Energiespeichermodul 840, welches zum Betrieb eines Staubsaugers 870 geeignet ist, entsprechen funktional beispielsweise dem Energiespeichermodul 40B. Auch die Bauform ist erkennbar aus der Zeichnung dieselbe.

Bei der Werkzeugmaschine 20D handelt es sich beispielsweise um ein Schleifgerät zum Schleifen eines Werkstücks W. Anhand des Saugschlauchs 15 und des Anschlussstücks 17 ist die Werkzeugmaschine 20D an den Staubsauger 870 anschließbar, nämlich an einen Saugeinlass 872.

Der Staubsauger 870 ist ein stapelbarer und einer Stapelbox angeordneter Staubsauger. Beispielsweise hat er ein kastenförmiges Saugergehäuse 871, welches auf, unter oder in einen Stapel auf-, unter- oder einstapelbar ist, der beispielsweise auch Behälter zur Aufbewahrung von Handwerkzeugen, Werkzeugmaschinen, z.B. der Werkzeugmaschine 20D und dergleichen umfasst. Auf die Verbindungskomponenten zur Bildung derartiger Stapel soll nicht näher eingegangen werden. Man erkennt beispielsweise an der Frontseite des Saugergehäuses 871 eine Mehrzahl von Koppelelementen 801, beispielsweise Laschen, Riegel oder dergleichen, zur Koppelung mit einem aufgestapelten und/oder untergestapelten Behälter.

In Innenraum des Saugergehäuses 871, welches durch einen Deckel verschließbar ist, ist ein Saugaggregat 875 in der Art des Saugaggregats 75 angeordnet. Ferner befinden sich dort auch ein Filter 874 sowie ein Schmutzsammelraum 873, insbesondere in einem aus dem Saugergehäuse 871 herausnehmbaren Behälter. An der Außenseite oder im Innenraum des Saugergehäuses 871 ist eine Geräteschnittstelle 830 vorgesehen, die mit der Geräteschnittstelle 50 des Energiespeichermoduls 840 kompatibel ist, so dass der Staubsauger 870 mit dem Energiespeichermodul 840 betreibbar ist.

Das Energiespeichermodul 840 kann nun direkt mit dem Energiespeichermodul 40D kommunizieren. So kann die Werkzeugmaschine 20D über ihr Energiespeichermodul 40D das Energiespeichermodul 840D ansteuern, welches seinerseits wiederum den Staubsauger 870 zum Einschalten und/oder Ausschalten des Saugaggregats 875 ansteuert. Dabei erfolgt die Kommunikation über die bereits erläuterten Datenschnittstellen 34, 54 zwischen den jeweiligen ersten und zweiten Systemkomponenten, nämlich der Werkzeugmaschine 20D und dem Energiespeichermodul 40D sowie dem Staubsauger 870 und dem Energiespeichermodul 840. An dieser Stelle sei erwähnt, dass die Anmeldung anhand beispielsweise der Anmeldenachricht 440 auch bei dem System gemäß Figur 15 möglich ist. Es ist aber auch möglich, dass die Energiespeichermodule 40D und 840 bereits ein Kommunikationspaar darstellen, welches zur wechselseitigen Kommunikation autorisiert ist. Somit sind keinerlei Bedienereingriffe notwendig, um die Steuerverbindung zwischen dem Staubsauger und der Werkzeugmaschine herzustellen.

Es ist möglich, dass die Werkzeugmaschine 20 und/oder das Ladegerät 220 die Versorgungsspannung UB1 oder Versorgungsspannung UB2 periodisch oder zyklisch einschalten, sodass das Energiespeichermodul 40 erkennt, dass es mit der Werkzeugmaschine 20 bzw. dem Ladegerät 220 verbunden ist, insbesondere um im Falle der Verbindung mit der Werkzeugmaschine 20 auch dann, wenn diese abgeschaltet ist, eine entsprechende Steuerverbindung mit beispielsweise dem Staubsauger 60 aufrecht zu erhalten oder im Falle der Verbindung mit dem Ladegerät 220 eine derartige Steuerverbindung nicht herzustellen.

Eine bevorzugtes Konzept sieht vor, dass ein Energiespeichermodul 40 und/oder die Konfigurationsvorrichtung 500 und/oder mindestens ein Kommunikationsmodul 300 dann, wenn bereits eine Autorisierung bei einem Staubsauger 60 oder der Extern-Kommunikationsvorrichtung 100 besteht, zunächst eine Verbindung mit diesem sozusagen gespeicherten Staubsauger erneut aufgenommen wird. Eine Autorisierung ist in diesem Fall bereits vorhanden. In diesem Fall entfällt sozusagen die Anmeldenachricht 440 mit der Broadcast-Senderkennung 44x, d.h. eine Anmeldenachricht, die an mehrere grundsätzlich empfangsbereite Staubsauger, nicht nur den Staubsauger 70, gerichtet ist. Vorteilhaft enthält eine Anmeldenachricht 440 in diesem Fall zweckmäßigerweise eine Adresskennung des Staubsaugers 70.

## Patentansprüche

1. Elektrisches Gerät in Gestalt einer Werkzeugmaschine (20) oder eines Energiespeichermoduls (40) zur elektrischen Stromversorgung einer Werkzeugmaschine (20), wobei das Energiespeichermodul (40) ein Modulgehäuse (41) mit einer Geräteschnittstelle zur lösbaren Verbindung mit der Werkzeugmaschine (20) aufweist, wobei die Werkzeugmaschine (20) einen Antriebsmotor (22) zum Antreiben einer Werkzeugaufnahme (23) aufweist, an der ein zur Bearbeitung eines Werkstücks (W) vorgesehenes Werkzeug (38) anordenbar ist wobei der Antriebsmotor (22) anhand eines Schaltelements (24) der Werkzeugmaschine (20) und/oder des Energiespeichermoduls (40) schaltbar ist, wobei das elektrische Gerät eine Drahtlos-Kommunikationsschnittstelle (60, 60C) zur drahtlosen Kommunikation mit einer Extern-Kommunikationsvorrichtung (100) aufweist, die einen Bestandteil eines zur Absaugung von durch die Werkzeugmaschine (20) erzeugten Staubs vorgesehenen Staubsaugers (70, 870) bildet, und wobei die Drahtlos-Kommunikationsschnittstelle (60, 60C) zum Senden mindestens eines Steuerbefehls zum Steuern, insbesondere zum Einschalten und/oder zum Ausschalten, des Staubsaugers (70, 870) in Abhängigkeit von einem Schaltzustand des Schaltelements (24) an die Extern-Kommunikationsvorrichtung (100) über eine drahtlose Steuerverbindung (S1, S2) ausgestaltet ist, **dadurch gekennzeichnet, dass** die Drahtlos-Kommunikationsschnittstelle (60, 60C) zum Senden mindestens einer Anmeldenachricht (440) an die Extern-Kommunikationsvorrichtung (100) zur Herstellung der Steuerverbindung (S1, S2) mit dem Staubsauger (70, 870) in Abhängigkeit von einem Schaltzustand des Schaltelements (24) ausgestaltet ist.

2. Elektrisches Gerät nach Anspruch 1, **dadurch gekennzeichnet, dass** die Drahtlos-Kommunikationsschnittstelle (60, 60C) zu einem Senden der mindestens einen Anmeldenachricht (440) an die Extern-Kommunikationsvorrichtung (100) vor einem erstmaligen Senden des mindestens einen Steuerbefehls an die Extern-Kommunikationsvorrichtung (100) ausgestaltet ist und/oder dass es abgesehen von dem Schaltelement (24) kein zum Auslösen der Anmeldenachricht (440) vorgesehenes oder geeignetes Bedienelement aufweist.

3. Elektrisches Gerät nach Anspruch 1 oder 2, **dadurch gekennzeichnet, dass** die Drahtlos-Kommunikationsschnittstelle (60, 60C) zu einer verschlüsselten und/oder authentifizierten Kommunikation mit der Extern-Kommunikationsvorrichtung (100), insbesondere zu dem Senden des mindestens einen Steuerbefehls an die Extern-Kommunikationsvorrichtung (100), ausgestaltet ist, wobei eine Übertragung von Verschlüsselungsinformationen zum Aufbau der verschlüsselten Kommunikation in Abhängigkeit zweckmäßigerweise einem Schaltzustand des Schaltelements (24) abhängig ist oder durch eine Betätigung des Schaltelements (24) auslösbar ist, und/oder dass die Drahtlos-Kommunikationsschnittstelle (60, 60C) zu einem Senden einer Statusabfrage zum Abfragen eines Betriebsstatus, insbesondere eines Schaltzustandes, des Staubsaugers (70, 870) an die Extern-Kommunikationsvorrichtung (100) und/oder zum Empfangen einer einen Betriebsstatus, insbesondere einen Schaltzustand, des Staubsaugers (70, 870) enthaltenden Statusnachricht ausgestaltet ist.

4. Elektrisches Gerät nach einem der vorhergehenden Ansprüche, **dadurch gekennzeichnet, dass** es eine, insbesondere optische und/oder akustische, Anzeigeeinrichtung (44) zur Ausgabe mindestens einer die Steuerverbindung (S1, S2) betreffenden Kommunikationsinformation und/oder zur Anzeige eines Betriebsstatus, insbesondere einer Herstellung der Steuerverbindung (S1, S2), aufweist, wobei vorteilhaft vorgesehen ist, dass die Anzeigeeinrichtung (44) einen Bestandteil einer Ladezustandsanzeige des Energiespeichermoduls (40) bildet, wobei Ladezustandsanzeige zum Anzeigen einer in dem Energiespeichermodul (40) vorhandenen Energiekapazität vorgesehen und/oder ausgestaltet ist.

5. Elektrisches Gerät nach einem der vorhergehenden Ansprüche, **dadurch gekennzeichnet, dass** die Drahtlos-Kommunikationsschnittstelle (60, 60C) zum Eintragen mindestens einer Temporär-Kennung, dass die drahtlose Steuerverbindung (S1, S2) eine temporäre Steuerverbindung (S1, S2) ist, in die mindestens eine Anmeldenachricht (440) ausgestaltet ist und/oder dass die Drahtlos-Kommunikationsschnittstelle (60, 60C) zu einem iterativen Senden eines zum Einschalten des Staubsaugers (70, 870) vorgesehenen Steuerbefehls und/oder zum Aufrechterhalten der Steuerverbindung (S1, S2) ausgestaltet ist, so lange das Schaltelement (24) in einer den Antriebsmotor (22) einschaltenden Schaltstellung ist.

6. Elektrisches Gerät nach einem der vorhergehenden Ansprüche, **dadurch gekennzeichnet, dass** die Drahtlos-Kommunikationsschnittstelle (60, 60C) zum Empfangen einer die Steuerverbindung (S1, S2) bestätigenden Anmeldebestätigungsnachricht (445) der Extern-Kommunikationsvorrichtung (100) und/oder zum Speichern einer Adresskennung der Extern-Kommunikationsvorrichtung (100) ausgestaltet ist und/oder dass die Drahtlos-Kommunikationsschnittstelle (60, 60C) zum Senden mindestens einer Konfigurationsnachricht (465) zur Konfiguration, insbesondere zur Konfiguration einer Arbeitseinstellung und/oder einer Saugleistung, der Extern-Kommunikationsvorrichtung (100), insbesondere des Staubsaugers (70, 870), in Abhängigkeit von einer das elektrische Gerät kennzeichnenden Größe ausgestaltet ist und/oder dass die Drahtlos-Kommunikationsschnittstelle (60, 60C) zur Trennung der Steuerverbindung (S1, S2) bei einer Betriebsunterbrechung, insbesondere bei einem Trennen des Energiespeichermoduls (40) und der Werkzeugmaschine (20) voneinander und/oder bei einem Aufladen des Energiespeichermoduls (40) an einem Ladegerät (220) und/oder nach einer vorbestimmten Zeitspanne, ausgestaltet ist.

7. Elektrisches Gerät nach einem der vorhergehenden Ansprüche, **dadurch gekennzeichnet, dass** es als Energiespeichermodul (40) zur Versorgung der Werkzeugmaschine (20), die das Schaltelement (24) aufweist, ausgestaltet ist, wobei die Geräteschnittstelle elektrische Geräte-Versorgungskontakte (3 52) zur elektrischen Energieversorgung der Werkzeugmaschine (20) aufweist, wobei Energiespeichermodul (40) über eine von den Geräte-Versorgungskontakten (52) separate Datenschnittstelle (34, 54), insbesondere eine Busschnittstelle, und/oder anhand einer Erfassung eines Stromflusses über die Geräte-Versorgungskontakte (52) eine Information über den Schaltzustand des Schaltelements (24) ermittelt.

8. System umfassend einen Staubsauger (80, 870) und ein elektrisches Gerät in Gestalt einer Werkzeugmaschine (20) oder eines Energiespeichermoduls (40) zur elektrischen Stromversorgung einer Werkzeugmaschine (20) nach einem der vorhergehenden Ansprüche sowie die Extern-Kommunikationsvorrichtung (100), wobei der Staubsauger (70, 870) durch das elektrisches Gerät ansteuerbar und zur Absaugung durch die Werkzeugmaschine (20) erzeugten Staub vorgesehen ist, wobei das Energiespeichermodul (40) ein Modulgehäuse (41) mit einer Geräteschnittstelle zur lösbaren Verbindung mit der Werkzeugmaschine (20) aufweist, wobei die Werkzeugmaschine (20) einen Antriebsmotor (22) zum Antreiben einer Werkzeugaufnahme (23) aufweist, an der ein zur Bearbeitung eines Werkstücks (W) vorgesehenes Werkzeug (38) anordenbar ist, wobei der Antriebsmotor (22) anhand eines Schaltelements (24) der Werkzeugmaschine (20) und/oder des Energiespeichermoduls (40) schaltbar ist, wobei die Extern-Kommunikationsvorrichtung (100) zur drahtlosen Kommunikation mit einer Drahtlos-Kommunikationsschnittstelle (60, 60C) des elektrischen Geräts ausgestaltet und zum Empfangen mindestens eines Steuerbefehls zum Steuern, insbesondere zum Einschalten und/oder zum Ausschalten, des Staubsaugers (70, 870) in Abhängigkeit von einem Schaltzustand des Schaltelements (24) von der Drahtlos-Kommunikationsschnittstelle (60, 60C) über eine drahtlose Steuerverbindung (S1, S2) ausgestaltet ist, **dadurch gekennzeichnet, dass** die Extern-Kommunikationsvorrichtung (100) zum Empfangen mindestens einer Anmeldenachricht (440) von der Drahtlos-Kommunikationsschnittstelle (60, 60C) zur Herstellung der Steuerverbindung (S1, S2) ausgestaltet ist.

9. System nach Anspruch 8, **dadurch gekennzeichnet, dass** die Extern-Kommunikationsvorrichtung (100) in einem Bereitschaftsmodus zum Empfangen der mindestens einen Anmeldenachricht (440) bereit ist und in einem Arbeitsmodus nicht zum Empfangen der mindestens einen Anmeldenachricht (440) bereit ist und/oder dass die Extern-Kommunikationsvorrichtung (100) anhand eines Anmelde-Bedienelementes in den Bereitschaftsmodus schaltbar ist und/oder dass die Extern-Kommunikationsvorrichtung (100) nach einem Verbinden des Staubsaugers (70, 870) mit einer elektrischen Energieversorgung für den Staubsauger (70, 870) in den Bereitschaftsmodus schaltet und/oder dass die Extern-Kommunikationsvorrichtung (100) optische und/oder akustische Anzeigemittel zum Anzeigen des Bereitschaftsmodus aufweist und/oder die Extern-Kommunikationsvorrichtung (100) den Bereitschaftsmodus nach einer vorbestimmten oder bestimmbaren Zeit beendet.

10. System nach einem der Ansprüche 8 oder 9, **dadurch gekennzeichnet, dass** die Extern-Kommunikationsvorrichtung (100) in dem Bereitschaftsmodus mindestens eine Aufforderungsnachricht zum Auffordern des elektrischen Geräts zu einem Senden der mindestens einen Anmeldenachricht (440) an die Extern-Kommunikationsvorrichtung (100) ausgestaltet ist und/oder dass die Extern-Kommunikationsvorrichtung (100) zur Herstellung der Steuerverbindung (S1, S2) mit dem elektrischen Gerät als eine Steuerverbindung (S1, S2) einer temporären Kategorie und vorzugsweise zur Herstellung mindestens einer drahtlosen Steuerverbindung (S1, S2) mit einem Bediengerät in einer dauerhaften Kategorie ausgestaltet ist und/oder dass nur eine einzige drahtlose Steuerverbindung (S1, S2) der temporären Kategorie mit der Extern-Kommunikationsvorrichtung (100) herstellbar ist und/oder dass die Steuerverbindung (S1, S2) der temporären Kategorie nur einer Vorrichtung zur Ansteuerung des Staubsaugers (70, 870) aus der Kategorie Werkzeugmaschinen (20), insbesondere Hand-Werkzeugmaschinen (20), und Energiespeichermodulen (40) für Werkzeugmaschinen (20) vorbehalten ist.

11. System nach einem der Ansprüche 8 bis 10, **dadurch gekennzeichnet, dass** zur Herstellung der drahtlosen Steuerverbindung (S1, S2) der temporären Kategorie eine erste Bedienhandlung bei der Extern-Kommunikationsvorrichtung (100) erforderlich ist und die drahtlose Steuerverbindung (S1, S2) der dauerhaften Kategorie durch eine gegenüber der ersten Bedienhandlung verschiedene, insbesondere erschwerte, zweite Bedienhandlung herstellbar ist und/oder durch eine dauerhafte Einstellung, insbesondere eine Einstellung anhand eines elektrischen Anmelde-Bedienelements oder anhand eine einer Software einstellbare Einstellung, hergestellt oder herstellbar ist und/oder dass die Extern-Kommunikationsvorrichtung (100) die Steuerverbindung (S1, S2) mit dem elektrischen Gerät nach einer vorbestimmten oder einstellbaren Zeitspanne und/oder bei einer Betriebsunterbrechung des Staubsaugers (70, 870), insbesondere bei einem Ausschalten des Staubsaugers (70, 870) und/oder bei einem Trennen des Staubsaugers (70, 870) von einer elektrischen Energieversorgung, beendet.

12. System nach einem der Ansprüche 8 bis 11, **dadurch gekennzeichnet, dass** die Extern-Kommunikationsvorrichtung (100) zur Herstellung der Steuerverbindung (S1, S2) in Abhängigkeit von einer Signalstärke eines von der Drahtlos-Kommunikationsschnittstelle (60, 60C) gesendeten, insbesondere die mindestens eine Anmeldenachricht (440) enthaltenden, Signals ausgestaltet ist, wobei die Extern-Kommunikationsvorrichtung (100) die Drahtlos-Kommunikationsschnittstelle (60, 60C) bei einer Signalstärke, die eine erste Signalschwelle überschreitet, insbesondere einen Abstand zwischen der Drahtlos-Kommunikationsschnittstelle (60, 60C) und der Extern-Kommunikationsvorrichtung (100) von weniger als 1 m signalisiert, die Anmeldenachricht (440) zu einer sofortigen oder bevorzugten Herstellung der Steuerverbindung (S1, S2) priorisiert, und/oder wobei die Extern-Kommunikationsvorrichtung (100) bei miteinander um die Herstellung der Steuerverbindung (S1, S2) konkurrierenden elektrischen Geräten dasjenige elektrische Gerät mit der höheren Signalstärke zur Herstellung der Steuerverbindung (S1, S2) bevorzugt und/oder wobei die Extern-Kommunikationsvorrichtung (100) eine Antwortzeit zum Senden einer Antwort, insbesondere einer Anmeldebestätigungsnachricht (445), auf die Anmeldenachricht (440) in Abhängigkeit von der Signalstärke des Signals der Drahtlos-Kommunikationsschnittstelle (60, 60C) einstellt.

13. System nach einem der Ansprüche 8 bis 12, **dadurch gekennzeichnet, dass** die Extern-Kommunikationsvorrichtung (100) einen Saugbetrieb beendet, wenn die Steuerverbindung (S1, S2) unterbrochen ist und/oder die Extern-Kommunikationsvorrichtung (100) von dem elektrischen Gerät keinen Steuerbefehl innerhalb einer vorbestimmten oder bestimmbaren Zeitspanne erhält, und/oder dass die Extern-Kommunikationsvorrichtung (100) zum Empfangen mindestens einer Konfigurationsnachricht (465) zur Konfiguration, insbesondere zur Konfiguration einer Arbeitseinstellung und/oder einer Saugleistung, der Extern-Kommunikationsvorrichtung (100), insbesondere des Staubsaugers (70, 870), in Abhängigkeit von einer das elektrische Gerät kennzeichnenden Größe ausgestaltet ist und/oder dass die Extern-Kommunikationsvorrichtung (100) einen Speicher zum Speichern von Autorisierungsparametern oder Anmeldeparametern und/oder Verschlüsselungsparametern, insbesondere den Autorisierungsparametern oder Anmeldeparametern zugeordneten Verschlüsselungsparametern, zur Herstellung von Steuerverbindungen (S1, S2) zu mindestens zwei elektrischen Geräten und deren Drahtlos-Kommunikationsschnittstellen (60, 60C) aufweist und/oder dass die Extern-Kommunikationsvorrichtung (100) zusätzlich zu der mindestens einen Steuerverbindung (S1, S2) durch mindestens eine Fernbedienungseinrichtung ansteuerbar ist und/oder dass die Extern-Kommunikationsvorrichtung (100) zur Priorisierung mindestens eines von einem von dem elektrischen Gerät verschiedenen Steuerbedienelement erzeugten Steuerbefehls zum Steuern, insbesondere Einschalten und/oder Ausschalten, des Staubsaugers (70, 870) gegenüber der Steuerverbindung (S1, S2) ausgestaltet ist, wobei der Steuerbefehl einen Vorrang-Steuerbefehl bildet.

14. System nach einem der Ansprüche 8 bis 13, **dadurch gekennzeichnet, dass** das Steuerbedienelement ein Schaltelement (24) an dem Staubsauger (70, 870) und/oder eine dem Staubsauger (70, 870) zugeordnete oder einen Bestandteil des Staubsaugers (70, 870) bildende Fernbedienungseinrichtung umfasst.

15. Verfahren für ein elektrisches Gerät in Gestalt einer Werkzeugmaschine (20) oder eines Energiespeichermoduls (40) zur elektrischen Stromversorgung einer Werkzeugmaschine (20), wobei das Energiespeichermodul (40) ein Modulgehäuse (41) mit einer Geräteschnittstelle zur lösbaren Verbindung mit der Werkzeugmaschine (20) aufweist, wobei die Werkzeugmaschine (20) einen Antriebsmotor (22) zum Antreiben einer Werkzeugaufnahme (23) aufweist, an der ein zur Bearbeitung eines Werkstücks (W) vorgesehenes Werkzeug (38) angeordnet oder anordenbar ist, wobei der Antriebsmotor (22) anhand eines Schaltelements (24) der Werkzeugmaschine (20) und/oder des Energiespeichermoduls (40) schaltbar ist, wobei das elektrische Gerät eine Drahtlos-Kommunikationsschnittstelle (60, 60C) zur drahtlosen Kommunikation mit einer Extern-Kommunikationsvorrichtung (100) aufweist, die einen Bestandteil eines zur Absaugung von durch die Werkzeugmaschine (20) erzeugten Staubs vorgesehenen Staubsaugers (70, 870) bildet, und wobei die Drahtlos-Kommunikationsschnittstelle (60, 60C) zum Senden mindestens eines Steuerbefehls zum Steuern, insbesondere zum Einschalten und/oder zum Ausschalten, des Staubsaugers (70, 870) in Abhängigkeit von einem Schaltzustand des Schaltelements (24) an die Extern-Kommunikationsvorrichtung (100) über eine drahtlose Steuerverbindung (S1, S2) ausgestaltet ist, **gekennzeichnet durch** Senden mindestens einer Anmeldenachricht (440) an die Extern-Kommunikationsvorrichtung (100) zur Herstellung der Steuerverbindung (S1, S2) mit dem Staubsauger (70, 870) in Abhängigkeit von einem Schaltzustand des Schaltelements (24) über die Drahtlos-Kommunikationsschnittstelle (60, 60C).

## Claims

1. Electric device in the shape of a machine tool (20) or an energy storage module (40) for the electric power supply of a machine tool (20), wherein the energy storage module (40) has a module housing (41) with a device interface for the detachable connection to the machine tool (20), wherein the machine tool (20) has a drive motor (22) to drive a tool holder (23) on which a tool (38) provided to process a workpiece (W) is arrangeable, wherein the drive motor (22) is switchable using a switching element (24) of the machine tool (20) and/or the energy storage module (40), wherein the electric device has a wireless communication interface (60, 60C) for wireless communication with an external communication apparatus (100), which forms part of a vacuum cleaner (70, 870) provided to suction dust generated by the machine tool (20) and wherein the wireless communication interface (60, 60C) is designed to send at least one control command to control, in particular to switch on and/or switch off the vacuum cleaner (70, 870) as a function of a switching status of the switching element (24) to the external communication apparatus (100) via a wireless control connection (S1, S2), **characterised in that** the wireless communication interface (60, 60C) is designed to send at least one registration message (440) to the external communication apparatus (100) to establish the control connection (S1, S2) with the vacuum cleaner (70, 870) as a function of a switching status of the switching element (24).

2. Electric device according to claim 1, **characterised in that** the wireless communication interface (60, 60C) is designed to send the at least one registration message (440) to the external communication apparatus (100) before the first sending of the at least one control command to the external communication apparatus (100) and/or **in that**, aside from the switching element (24), it has no operating element provided or suitable for triggering the registration message (440).

3. Electric device according to claim 1 or 2, **characterised in that** the wireless communication interface (60, 60C) is designed for encrypted and/or authenticated communication with the external communication apparatus (100), in particular to send the at least one control command to the external communication apparatus (100), wherein a transmission of encryption information to establish the encrypted communication is expediently dependent on a switching status of the switching element (24) or can be triggered by an actuation of the switching element (24), and/or **in that** the wireless communication interface (60, 60C) is designed to send a status request to request an operating status, in particular a switching status, of the vacuum cleaner (70, 870) to the external communication apparatus (100) and/or to receive a status message containing an operating status, in particular a switching status, of the vacuum cleaner (70, 870).

4. Electric device according to any one of the preceding claims, **characterised in that** it has an, in particular optical and/or acoustic display device (44) to output at least one communication item relating to the control connection (S1, S2) and/or to display an operating status, in particular an establishment of the control connection (S1, S2), wherein it is advantageously provided that the display device (44) forms part of a charging status display of the energy storage module (40), wherein the charging status display is provided and/or designed to display an energy capacity present in the energy storage module (40).

5. Electric device according to any one of the preceding claims, **characterised in that** the wireless communication interface (60, 60C) is designed to enter at least one temporary identifier that the wireless control connection (S1, S2) is a temporary control connection (S1, S2) into the at least one registration message (440) and/or **in that** the wireless communication interface (60, 60C) is designed to iteratively send a control command provided to switch on the vacuum cleaner (70, 870) and/or to maintain the control connection (S1, S2), provided the switching element (24) is in a switching position switching on the drive motor (22).

6. Electric device according to any one of the preceding claims, **characterised in that** the wireless communication interface (60, 60C) is designed to receive a registration confirmation message (445) of the external communication apparatus (100) confirming the control connection (S1, S2) and/or to store an address identifier of the external communication apparatus (100) and/or **in that** the wireless communication interface (60, 60C) is designed to send at least one configuration message (465) for the configuration, in particular the configuration of a working position and/or suction power, of the external communication apparatus (100), in particular the vacuum cleaner (70, 870) as a function of a variable characterising the electric device and/or **in that** the wireless communication interface (60, 60C) is designed to separate the control connection (S1, S2) in the case of an operational interruption, in particular separation of the energy storage module (40) and the machine tool (20) from one another and/or in the case of charging the energy storage module (40) on a charging device (220) and/or after a predetermined time.

7. Electric device according to any one of the preceding claims, **characterised in that** it is designed as an energy storage module (40) for the supply of the machine tool (20), which has the switching element (24), wherein the device interface has electric device supply contacts (3, 52) for the electric energy supply of the machine tool (20), wherein energy storage module (40) determines information about the switching status of the switching element (24) via a data interface (34, 54) separate from the device supply contacts (52), in particular a bus interface, and/or using a detection of a current flow via the device supply contacts (52).

8. System comprising a vacuum cleaner (80, 870) and an electric device in the shape of a machine tool (20) or an energy storage module (40) for the electric power supply of a machine tool (20) according to one of the preceding claims and the external communication device (100), wherein the vacuum cleaner (70, 870) is actuatable by the electrical device and is provided to suction dust generated by the machine tool (20), wherein the energy storage module (40) has a module housing (41) with a device interface for the detachable connection to the machine tool (20), wherein the machine tool (20) has a drive motor (22) to drive a tool holder (23) on which a tool (38) provided to process a workpiece (W) is arrangeable, wherein the drive motor (22) being switchable using a switching element (24) of the machine tool (20) and/or the energy storage module (40), wherein the external communication apparatus (100) is designed for wireless communication with a wireless communication interface (60, 60C) of the electric device and is designed to receive at least one control command to control, in particular to switch on and/or switch off the vacuum cleaner (70, 870) as a function of a switching status of the switching element (24) from the wireless communication interface (60, 60C) via a wireless control connection (S1, S2), **characterised in that** the external communication apparatus (100) is designed to receive at least one registration message (440) from the wireless communication interface (60, 60C) to establish the control connection (S1, S2).

9. System according to claim 8, **characterised in that** the external communication device (100) is ready in a standby mode to receive the at least one registration message (440) and the external communication device (100) is not ready in an operating mode to receive the at least one registration message (440) and/or **in that** the external communication device (100) can be switched using a registration operating element into the standby mode and/or that the external communication device (100) switches into the standby mode after connecting the vacuum cleaner (70, 870) to an electric energy supply for the vacuum cleaner (70, 870) and/or **in that** the external communication device (100) has optical and/or acoustic display means to display the standby mode and/or the external communication device (100) ends the standby mode after a predetermined or determinable time.

10. System according to any one of claims 8 or 9, **characterised in that** the external communication device (100) is designed in the standby mode at least one request message to request the electric device to send the at least one registration message (440) to the external communication apparatus (100) and/or **in that** the external communication device (100) is designed to establish the control connection (S1, S2) to the electric device as a control connection (S1, S2) of a temporary category and preferably to establish at least one wireless control connection (S1, S2) to an operating device in a permanent category and/or **in that** only a single wireless control connection (S1, S2) of the temporary category can be established with the external communication apparatus (100) and/or **in that** the control connection (S1, S2) of the temporary category is reserved only to a device to actuate the vacuum cleaner (70, 870) from the category of machine tools (20), in particular hand-held machine tools (20) and energy storage modules (40) for machine tools (20).

11. System according to any one of claims 8 to 10, **characterised in that** a first operating action at the external communication apparatus (100) is required to establish the wireless control connection (S1, S2) of the temporary category and the wireless control connection (S1, S2) of the permanent category can be established by a second operating action different compared to the first operating action, in particular more difficult and/or is established or can be established by a permanent setting, in particular a setting using an electric registration operating element or using a setting settable by software and/or **in that** the external communication device (100) ends the control connection (S1, S2) with the electric device after a predetermined or settable time and/or in the case of an operational interruption of the vacuum cleaner (70, 870), in particular in the case of switching off the vacuum cleaner (70, 870) and/or in the case of separating the vacuum cleaner (70, 870) from an electric energy supply.

12. System according to any one of claims 8 to 11, **characterised in that** the external communication device (100) is designed to establish the control connection (S1, S2) as a function of a signal strength of a signal sent by the wireless communication interface (60, 60C), in particular containing the at least one registration message (440), wherein the external communication apparatus (100) signals the wireless communication interface (60, 60C) in the case of a signal strength which exceeds a first signal threshold, in particular a distance between the wireless communication interface (60, 60C) and the external communication apparatus (100) of less than 1 m, to prioritise the registration message (440) for an immediate or preferred establishment of the control connection (S1, S2) and/or wherein the external communication apparatus (100) prefers, in the case of electric devices concurring with one another to establish the control connection (S1, S2), the electric device with the highest signal strength to establish the control connection (S1, S2) and/or wherein the external communication apparatus (100) sets a response time to send a response, in particular a registration confirmation message (445) to the registration message (440) as a function of the signal strength of the signal of the wireless communication interface (60, 60C).

13. System according to any one of claims 8 to 12, **characterised in that** the external communication device (100) ends a suction operation when the control connection (S1, S2) is interrupted and/or the external communication device (100) does not obtain any control command within a predetermined or determinable time from the electric device and/or **in that** the external communication device (100) is designed to receive at least one configuration message (465) for the configuration, in particular the configuration of a working position and/or suction power, of the external communication apparatus (100), in particular the vacuum cleaner (70, 870), as a function of a variable characterising the electric device and/or **in that** the external communication device (100) has a memory to store authorisation parameters or registration parameters and/or encryption parameters, in particular encryption parameters assigned to the authorisation parameters or registration parameters, to establish control connections (S1, S2) to at least two electric devices and their wireless communication interfaces (60, 60C) and/or **in that** the external communication device (100) is actuatable by at least one remote control device in addition to the at least one control connection (S1, S2) and/or **in that** the external communication device (100) is designed to prioritise at least one control command generated by a control operating element different from the electric device to control, in particular switch on and/or switch off the vacuum cleaner (70, 870) with respect to the control connection (S1, S2), wherein the control command forms a priority control command.

14. System according to any one of claims 8 to 13, **characterised in that** the control operating element comprises a switching element (24) on the vacuum cleaner (70, 870) and/or a remote control device assigned to the vacuum cleaner (70, 870) or forming part of the vacuum cleaner (70, 870).

15. Electric device in the shape of a machine tool (20) or an energy storage module (40) for the electric power supply of a machine tool (20), wherein the energy storage module (40) has a module housing (41) with a device interface for the detachable connection to the machine tool (20), wherein the machine tool (20) has a drive motor (22) to drive a tool holder (23) on which a tool (38) provided to process a workpiece (W) is arranged or is arrangeable, wherein the drive motor (22) is switchable using a switching element (24) of the machine tool (20) and/or the energy storage module (40), wherein the electric device has a wireless communication interface (60, 60C) for wireless communication with an external communication apparatus (100), which forms part of a vacuum cleaner (70, 870) provided to suction dust generated by the machine tool (20) and wherein the wireless communication interface (60, 60C) is designed to send at least one control command to control, in particular to switch on and/or switch off the vacuum cleaner (70, 870) as a function of a switching status of the switching element (24) to the external communication apparatus (100) via a wireless control connection (S1, S2), **characterized by** sending at least one registration message (440) to the external communication apparatus (100) to establish the control connection (S1, S2) with the vacuum cleaner (70, 870) as a function of a switching status of the switching element (24) via the wireless communication interface (60, 60C).

## Revendications

1. Appareil électrique sous la forme d'une machine-outil (20) ou d'un module accumulateur d'énergie (40) destiné à alimenter en courant électrique une machine-outil (20), dans lequel le module accumulateur d'énergie (40) présente un boîtier de module (41) avec une interface d'appareil destinée à être reliée de manière amovible à la machine-outil (20), dans lequel la machine-outil (20) présente un moteur d'entraînement (22) destiné à entraîner un logement d'outil (23), sur lequel un outil (38) prévu pour usiner une pièce (W) peut être disposé, dans lequel le moteur d'entraînement (22) peut être commuté à l'aide d'un élément de commutation (24) de la machine-outil (20) et/ou du module accumulateur d'énergie (40), dans lequel l'appareil électrique présente une interface de communication sans fil (60, 60C) destinée à communiquer sans fil avec un dispositif de communication externe (100), qui forme un élément constitutif d'un aspirateur (70, 870) prévu pour aspirer de la poussière générée par la machine-outil (20), et dans lequel l'interface de communication sans fil (60, 60C) est configurée pour envoyer au moins une instruction de commande pour commander, en particulier pour activer et/ou pour désactiver, l'aspirateur (70, 870) en fonction d'un état de commutation de l'élément de commutation (24) au dispositif de communication externe (100) par l'intermédiaire d'une liaison de commande (S1, S2) sans fil, **caractérisé en ce que** l'interface de communication sans fil (60, 60C) est configurée pour envoyer au moins un message de connexion (440) au dispositif de communication externe (100) pour établir la liaison de commande (S1, S2) avec l'aspirateur (70, 870) en fonction d'un état de commutation de l'élément de commutation (24).

2. Appareil électrique selon la revendication 1, **caractérisé en ce que** l'interface de communication sans fil (60, 60C) est configurée pour un envoi de l'au moins un message de connexion (440) au dispositif de communication externe (100) avant un tout premier envoi de l'au moins une instruction de commande au dispositif de communication externe (100), et/ou qu'abstraction faite de l'élément de commutation (24) il ne présente aucun élément d'utilisation prévu ou adapté pour déclencher le message de connexion (440).

3. Appareil électrique selon la revendication 1 ou 2, **caractérisé en ce que** l'interface de communication sans fil (60, 60C) est configurée pour une communication cryptée et/ou authentifiée avec le dispositif de communication externe (100), en particulier pour l'envoi de l'au moins une instruction de commande au dispositif de communication externe (100), dans lequel une transmission d'informations de cryptage destinées à établir la communication cryptée dépend de manière opportune d'un état de commutation de l'élément de commutation (24) ou peut être déclenchée par un actionnement de l'élément de commutation (24), et/ou que l'interface de communication sans fil (60, 60C) est configurée pour un envoi d'une demande de statut destinée à consulter un statut de fonctionnement, en particulier d'un état de commutation, de l'aspirateur (70, 870) au dispositif de communication externe (100) et/ou pour recevoir un message de statut contenant un statut de fonctionnement, en particulier un état de commutation, de l'aspirateur (70, 870).

4. Appareil électrique selon l'une quelconque des revendications précédentes, **caractérisé en ce qu'**il présente un système d'affichage (44), en particulier optique et/ou acoustique, pour délivrer au moins une information de communication concernant la liaison de commande (S1, S2) et/ou pour afficher un statut de fonctionnement, en particulier un établissement de la liaison de commande (S1, S2), dans lequel il est prévu de manière avantageuse que le système d'affichage (44) forme un élément constitutif d'un affichage d'état de charge du module accumulateur d'énergie (40), dans lequel un affichage d'état de charge est prévu et/ou configuré pour afficher une capacité d'énergie présente dans le module accumulateur d'énergie (40).

5. Appareil électrique selon l'une quelconque des revendications précédentes, **caractérisé en ce que** l'interface de communication sans fil (60, 60C) est configurée pour entrer au moins un code temporaire, la liaison de commande sans fil (S1, S2) étant une liaison de commande (S1, S2) temporaire, dans l'au moins un message de connexion (440), et/ou que l'interface de communication sans fil (60, 60C) est configurée pour envoyer de manière itérative une instruction de commande prévue pour activer l'aspirateur (70, 870) et/ou pour maintenir la liaison de commande (S1, S2) jusqu'à ce que l'élément de commutation (24) soit dans une position de commutation activant le moteur d'entraînement (22).

6. Appareil électrique selon l'une quelconque des revendications précédentes, **caractérisé en ce que** l'interface de communication sans fil (60, 60C) est configurée pour recevoir un message de confirmation de connexion (445), confirmant la liaison de commande (S1, S2), du dispositif de communication externe (100) et/ou pour mémoriser un code d'adresse du dispositif de communication externe (100), et/ou que l'interface de communication sans fil (60, 60C) est configurée pour envoyer au moins un message de configuration (465) pour configurer, en particulier pour configurer un réglage de travail et/ou une puissance d'aspiration, du dispositif de communication externe (100), en particulier de l'aspirateur (70, 870), en fonction d'une grandeur caractérisant l'appareil électrique, et/ou que l'interface de communication sans fil (60, 60C) est configurée pour couper la liaison de commande (S1, S2) lors d'une interruption de fonctionnement, en particulier lors d'une séparation du module accumulateur d'énergie (40) et de la machine-outil (20) l'un de l'autre et/ou lors d'un chargement du module accumulateur d'énergie (40) sur un appareil de charge (220) et/ou après un laps de temps prédéfini.

7. Appareil électrique selon l'une quelconque des revendications précédentes, **caractérisé en ce qu'**il est configuré en tant que module accumulateur d'énergie (40) destiné à alimenter la machine-outil (20), qui présente l'élément de commutation (24), dans lequel l'interface d'appareil présente des contacts d'alimentation d'appareil (352) électriques destinés à alimenter en énergie électrique la machine-outil (20), dans lequel le module accumulateur d'énergie (40) détermine une information sur l'état de commutation de l'élément de commutation (24) par l'intermédiaire d'une interface de données (35, 54) séparée des contacts d'alimentation d'appareils (52), en particulier d'une interface bus, et/ou à l'aide d'une détection d'un flux de courant par l'intermédiaire des contacts d'alimentation d'appareils (52).

8. Système comprenant un aspirateur (80, 870) et un appareil électrique sous la forme d'une machine-outil (20) ou d'un module accumulateur d'énergie (40) destiné à alimenter en courant électrique une machine-outil (20) selon l'une quelconque des revendications précédentes, ainsi que le dispositif de communication externe (100), dans lequel l'aspirateur (70, 870) peut être piloté par l'appareil électrique et est prévu pour aspirer de la poussière générée par la machine-outil (20), dans lequel le module d'accumulateur d'énergie (40) présente un boîtier de module (41) avec une interface d'appareil destinée à être reliée de manière amovible à la machine-outil (20), dans lequel la machine-outil (20) présente un moteur d'entraînement (22) pour entraîner un logement d'outil (23), sur lequel un outil (38) prévu pour usiner une pièce (W) peut être disposé, dans lequel le moteur d'entraînement (22) peut être commuté à l'aide d'un élément de commutation (24) de la machine-outil (20) et/ou du module accumulateur d'énergie (40), dans lequel le dispositif de communication externe (100) est configuré pour communiquer sans fil avec une interface de communication sans fil (60, 60C) de l'appareil électrique et est configuré pour recevoir au moins une instruction de commande pour commander, en particulier pour activer et/ou pour désactiver, l'aspirateur (70, 870) en fonction d'un état de commutation de l'élément de commutation (24) de l'interface de communication sans fil (60, 60C) par l'intermédiaire d'une liaison de commande sans fil (S1, S2), **caractérisé en ce que** le dispositif de communication externe (100) est configuré pour recevoir au moins un message de connexion (440) de l'interface de communication sans fil (60, 60C) pour établir la liaison de commande (S1, S2).

9. Système selon la revendication 8, **caractérisé en ce que** le dispositif de communication externe (100) est prêt dans un mode de veille pour recevoir l'au moins un message de connexion (440) et est prêt dans un mode de travail pour ne pas recevoir l'au moins un message de connexion (440), et/ou que le dispositif de communication externe (100) peut être commuté dans le mode de veille à l'aide de l'élément d'utilisation de connexion et/ou que le dispositif de communication externe (100) passe par commutation dans le mode de veille après une liaison de l'aspirateur (70, 870) à une alimentation en énergie électrique pour l'aspirateur (70, 870), et/ou que le dispositif de communication externe (100) présente des moyens d'affichage optiques et/ou acoustiques destinés à afficher le mode de veille et/ou le dispositif de communication externe (100) met fin au mode de veille après un temps prédéfini ou pouvant être défini.

10. Système selon l'une quelconque des revendications 8 ou 9, **caractérisé en ce que** le dispositif de communication externe (100) est configuré dans le mode de veille au moins un message de demande destiné à demander à l'appareil électrique d'envoyer l'au moins un message de connexion (440) au dispositif de communication externe (100), et/ou que le dispositif de communication externe (100) est configuré pour établir la liaison de commande (S1, S2) avec l'appareil électrique en tant qu'une liaison de commande (S1, S2) d'une catégorie temporaire et de préférence pour établir au moins une liaison de commande (S1, S2) sans fil avec un appareil d'utilisation dans une catégorie durable, et/ou qu'une unique liaison de commande (S1, S2) sans fil de la catégorie temporaire peut être établie avec le dispositif de communication externe (100), et/ou que la liaison de commande (S1, S2) de la catégorie temporaire est réservée seulement à un dispositif destiné à piloter l'aspirateur (70, 870) issu de la catégorie des machines-outils (20), en particulier des machines-outils manuelles (20), et des modules accumulateurs d'énergie (40) pour des machines-outils (20).

11. Système selon l'une quelconque des revendications 8 à 10, **caractérisé en ce que** pour établir la liaison de commande (S1, S2) sans fil de la catégorie temporaire, une première action d'utilisation est requise pour le dispositif de communication externe (100) et la liaison de commande sans fil (S1, S2) de la catégorie durable peut être établie par une deuxième action d'utilisation différente par rapport à la première action d'utilisation, en particulier compliquée et/ou est établie ou peut être établie par un réglage durable, en particulier un réglage à l'aide d'un élément d'utilisation de connexion électrique ou à l'aide d'un réglage pouvant être réglé par un logiciel, et/ou que le dispositif de communication externe (100) met fin à la liaison de commande (S1, S2) avec l'appareil électrique après un laps de temps prédéfini ou pouvant être réglé et/ou lors d'une interruption de fonctionnement de l'aspirateur (70, 870), en particulier lors d'une désactivation de l'aspirateur (70, 870) et/ou lors d'une séparation de l'aspirateur (70, 870) d'une alimentation en énergie électrique.

12. Système selon l'une quelconque des revendications 8 à 11, **caractérisé en ce que** le dispositif de communication externe (100) est configuré pour établir la liaison de commande (S1, S2) en fonction d'une intensité de signal d'un signal envoyé par l'interface de communication sans fil (60, 60C), en particulier contenant l'au moins un message de connexion (440), dans lequel le dispositif de communication externe (100) signale à l'interface de communication sans fil (60, 60C) en présence d'une intensité de signal, qui dépasse un premier seuil de signal, en particulier une distance entre l'interface de communication sans fil (60, 60C) et le dispositif de communication externe (100) inférieure à 1 m, priorise le message de connexion (440) pour établir immédiatement ou de manière préférée la liaison de commande (S1, S2), et/ou que le dispositif de communication externe (100) préfère, en présence d'appareils électriques luttant pour l'établissement de la liaison de commande (S1, S2), l'appareil électrique précisément avec l'intensité de signal plus élevée pour établir la liaison de commande (S1, S2) et/ou que le dispositif de communication externe (100) règle un temps de réponse pour envoyer une réponse, en particulier un message de confirmation de connexion (445), sur le message de connexion (440) en fonction de l'intensité de signal du signal de l'interface de communication sans fil (60, 60C).

13. Système selon l'une quelconque des revendications 8 à 12, **caractérisé en ce que** le dispositif de communication externe (100) met fin à un fonctionnement d'aspiration, lorsque la liaison de commande (S1, S2) est interrompue et/ou le dispositif de communication externe (100) ne reçoit de l'appareil électrique aucune instruction de commande dans un laps de temps prédéfini ou pouvant être défini, et/ou que le dispositif de communication externe (100) est configuré pour recevoir au moins un message de configuration (465) pour la configuration, en particulier pour la configuration d'un réglage de travail et/ou d'une puissance d'aspiration, du dispositif de communication externe (100), en particulier de l'aspirateur (70, 870) en fonction d'une grandeur caractérisant l'appareil électrique, et/ou que le dispositif de communication externe (100) présente une mémoire pour stocker des paramètres d'autorisation ou des paramètres de connexion et/ou des paramètres de cryptage, en particulier des paramètres de cryptage associés aux paramètres d'autorisation ou aux paramètres de connexion, pour établir des liaisons de commande (S1, S2) avec au moins deux appareils électriques et leurs interfaces de communication sans fil (60, 60C) et/ou que le dispositif de communication externe (100) peut être piloté par au moins un système d'utilisation à distance en plus de l'au moins une liaison de commande (S1, S2), et/ou que le dispositif de communication externe (100) est configuré pour prioriser au moins une instruction de commande générée par un élément d'utilisation de commande différent de l'appareil électrique pour commander, en particulier pour activer et/ou désactiver, l'aspirateur (70, 870) par rapport à la liaison de commande (S1, S2), dans lequel l'instruction de commande forme une instruction de commande prioritaire.

14. Système selon l'une quelconque des revendications 8 à 13, **caractérisé en ce que** l'élément d'utilisation de commande comprend un élément de commutation (24) sur l'aspirateur (70, 870) et/ou un système d'utilisation à distance associé à l'aspirateur (70, 870) ou formant un élément constitutif de l'aspirateur (70, 870).

15. Procédé pour un appareil électrique sous la forme d'une machine-outil (20) ou d'un module accumulateur d'énergie (40) pour alimenter en énergie électrique une machine-outil (20), dans lequel le module accumulateur d'énergie (40) présente un boîtier de module (41) avec une interface d'appareil destinée à être reliée de manière amovible à la machine-outil (20), dans lequel la machine-outil (20) présente un moteur d'entraînement (22) destiné à entraîner un logement d'outil (23), sur lequel un outil (38) prévu pour usiner une pièce (W) est disposé ou peut être disposé, dans lequel le moteur d'entraînement (22) peut être commuté à l'aide d'un élément de commutation (24) de la machine-outil (20) et/ou du module accumulateur d'énergie (40), dans lequel l'appareil électrique présente une interface de communication sans fil (60, 60C) destinée à communiquer sans fil avec un dispositif de communication externe (100), qui forme un élément constitutif d'un aspirateur (70, 870) prévu pour aspirer de la poussière générée par la machine-outil (20), et dans lequel l'interface de communication sans fil (60, 60C) est configurée pour envoyer au moins une instruction de commande destinée à commander, en particulier à activer et/ou désactiver, l'aspirateur (70, 870) en fonction d'un état de commutation de l'élément de commutation (24) au dispositif de communication externe (100) par l'intermédiaire d'une liaison de commande sans fil (S1, S2), **caractérisé par** l'envoi d'au moins un message de connexion (440) au dispositif de communication externe (100) pour établir la liaison de commande (S1, S2) avec l'aspirateur (70, 870) en fonction d'un état de commutation de l'élément de commutation (24) par l'intermédiaire de l'interface de communication sans fil (60, 60C).
